# EUROPEAN PATENT SPECIFICATION

(11) **EP 4 182 672 B1**
(45) Date of publication and mention of the grant of the patent: **12.02.2025**
(21) Application number: 21763155.5
(22) Date of filing: 14.07.2021
(51) Int. Cl.: G01N 15/1433, G01N 15/1429, G01N 15/14, G01N 15/10, G01N 15/01, G01N 15/00

(54) **FINE-PARTICLE SORTING APPARATUS, FINE-PARTICLE SORTING METHOD, PROGRAM, AND FINE PARTICLE-SORTING SYSTEM**
VORRICHTUNG ZUR FEINPARTIKELSORTIERUNG, VERFAHREN ZUR FEINPARTIKELSORTIERUNG, PROGRAMM UND SYSTEM ZUR FEINPARTIKELSORTIERUNG
APPAREIL DE TRI DE PARTICULES FINES, PROCÉDÉ DE TRI DE PARTICULES FINES, PROGRAMME ET SYSTÈME DE TRI DE PARTICULES FINES

(30) Priority: 14.07.2020 JP 2020120407
(43) Date of publication of application: 24.05.2023
(60) Divisional application: 25150147.4
(73) Proprietor: Sony Group Corporation, Tokyo 108-0075 (JP)
(72) Inventor: YANASHITA Yudai, Tokyo 108-0075 (JP); KATO Yasunobu, Tokyo 108-0075 (JP); TAKAHASHI Kazuya, Tokyo 108-0075 (JP); MATSUMOTO Masahiro, Tokyo 108-0075 (JP); YOSHIDA Hirotaka, Tokyo 108-0075 (JP)
(74) Representative: D Young & Co LLP
(86) International application number: PCT/JP2021/026483
(87) International publication number: WO 2022/014643

(56) References cited:
- WO-A1-2019/187466
- JP-A- 2020 076 736
- US-A1- 2008 255 705
- US-A1- 2014 322 748
- US-A1- 2017 136 463
- US-A1- 2017 138 849
- US-B1- 6 281 018

## Description

### CROSS REFERENCE TO RELATED APPLICATIONS

This application claims the benefit of Japanese Priority Patent Application JP 2020-120407 filed July 14, 2020.

### Technical Field

The present disclosure relates to a fine-particle sorting apparatus, a computerimplemented fine-particle sorting method, a program, and a fine particle-sorting system.

### Background Art

Various fine-particle sorting apparatuses have been developed to sort fine particles. For example, in a particle sorting system used in a flow cytometer, laminar flow that includes a sample liquid containing cells and a sheath liquid is discharged from an orifice formed in a flow cell or a microchip. A predetermined vibration is imparted to the laminar flow when being discharged, forming liquid droplets. The direction of movement of the formed liquid droplets is electrically controlled by whether or not the liquid droplets contain target particles, thereby sorting the target particles.

A technology for sorting target particles within a microchip without forming liquid droplets unlike the above-mentioned technology has also been developed. For example, Patent Literature 1 described below discloses "a microchip comprising: a sample-liquid-introducing flow path through which a sample liquid containing fine particles flows; at least one pair of sheath-liquid-introducing flow paths that join the sample-liquid-introducing flow path from both sides and introduce a sheath liquid around the sample liquid; a merging flow path that communicates with the sample-liquid-introducing flow path and the sheath-liquid-introducing flow path, the liquids flowing through the sample-liquid-introducing flow path and the sheath-liquid-introducing flow path merging and flowing through the merging flow path; a negative-pressure suction unit that communicates with the merging flow path and sucks and draws fine particles to be collected; and at least one pair of waste flow paths that are provided on both sides of the negative-pressure suction unit and communicate with the merging flow path " (claim 1). In the microchip, the target particles are collected to the negative-pressure suction unit by suction.

### Citation List

### Patent Literature

PTL 1: Japanese Patent Application Laid-open No. 2012-127922
PTL 2: JP 2020 076736 A (SONY CORP) 21 May 2020 discloses a fine particle fractioning apparatus, a cell therapeutic agent manufacturing method, a fine particle fractionating method and a program.
PTL 3: US 6 281 018 81 (KIROUAC WILLIAM E [US] ET AL) 28 August 2001 discloses selective purification and enrichment sorting of flow cytometer droplets based upon analysis of droplet precursor regions.
PTL 4: WO 2019/187466 Al (SONY CORP [JP]) 3 October 2019 discloses a microparticle separation method, program and system.
PTL 5: US 2014/322748 Al (HARRISON BRENT C [US] ET AL) 30 October 2014 discloses a system and method to improve yield of sorted particles.
PTL 6: US 2008/255705 Al (DEGEAL JEFFREY W [US] ET AL) 16 October 2008 discloses a flow cytometer sorter.

### Summary

### Technical Problem

A fine-particle sorting apparatus often involves sorting of target cells from a blood-derived sample. The amount of the blood-derived sample is often limited, and it is desirable to obtain as many target cells as possible in a single fine-particle sorting process. Further, since there is a possibility that cells other than the target cells affect an operation (e.g., culturing or gene manipulation) after sorting, it is desired to discard cells other than the target cells, which may affect the operation after sorting, without sorting the cells other than the target cells as much as possible.

In this regard, in the fine-particle sorting apparatus as described above, a sorting process can be performed in such setting as to collect only the target cells. In such setting, for example, if there is a possibility that, when collecting the target cells, a non-target cell that is present in the vicinity of the target cell will be collected together, the target cells will not be collected and can be discarded. The discarding also increases the proportion of the target cells in the collected cell population, but the collection rate tends to be lower.

Note that, for example, red blood cells in blood have little effect on the above-mentioned operation after the sorting process, e.g., culturing or gene manipulation. Thus, in accordance with the purpose of sorting, red blood cells may be allowed to be collected together with the target cells. However, in the setting described above, since the red blood cells are determined to be non-target cells, in the case where the red blood cell is present in the vicinity of the target cell, the target cell is discarded without being collected. Further, since the proportion of the number of red blood cells is high and the frequency of the presence of red blood cells in the vicinity of the target cells is high, the collection rate of the target cells is low. Note that although a step of removing the red blood cells, which is called hemolysis, is also performed, this step has a limitation, and the red blood cells cannot be completely eliminated in some cases.

In view of the above, it is desired to provide a technology for increasing the collection rate of target particles while reducing the effect on purity of the target particles to be sorted in sorting of fine particles.

### Solution to Problem

The present inventors have found that the above-mentioned object can be achieved by a fine-particle sorting apparatus that executes a particular sorting process. That is, the present disclosure provides a fine-particle sorting apparatus according to claim 1 including: a determination unit that performs sorting determination of a particle,
the determination unit performing the determination using rule data defining, in accordance with a particle population to which a particle that is a sorting-determination target belongs and a particle population to which a different particle within a predetermined range around the particle belongs, a relationship between the particles, particle populations to which the particle that is a sorting-determination target and the different particle within the predetermined range may belong including the following particle populations of
   (a) a particle population of particles to be sorted,
   (b) a particle population of particles that are not to be sorted but are ignorable in the determination, and
   (c) a particle population of particles that are neither the particles to be sorted nor the ignorable particles,
the ignorable particles including red blood cells.

The determination unit may be capable of changing rule data used in the determination, and
at least one piece of the rule data available to the determination unit may define that, where the particle that is a sorting-determination target belongs to the (a) particle population of the particles to be sorted and the different particle within the predetermined range around the particle belongs to the (b) particle population of the ignorable particles, a path of the different particle is a path of the particles to be sorted. The fine-particle sorting apparatus may further include a rule-data generating unit that generates the rule data, and
the rule-data generating unit may generate the rule data on the basis of the particle populations to which the particle that is a sorting-determination target and the different particle within the predetermined range may belong.

The fine-particle sorting apparatus may further include an input unit that receives a gating operation for setting the particle populations to which the particle that is a sorting-determination target and the different particle within the predetermined range may belong.

The determination unit may determine, on the basis of light generated by irradiating a particle flowing in a flow path with light, which particle population the particle belongs to.

The fine-particle sorting apparatus may be used to sort blood cells.

The fine-particle sorting apparatus may be used to selectively sort predetermined T cells from among blood cells.

The determination unit may perform the determination where the particle that is a sorting-determination target and one or more different particles are present within the predetermined range.

The determination unit may determine relationships between respective particles in a particle group consisting of the particle that is a sorting-determination target and the different particle within the predetermined range and all different particles in the particle group.

The determination unit may determine the relationships using rule data defining whether or not the respective particles are ignorable in relation to all the different particles.

The determination unit may assign no path to a particle determined to be ignorable in relation to all the other particles as a result of the determination of the relationships and may assign a path to particles other than the particle determined to be ignorable. The determination unit may use rule data defining, in accordance with the assigned path, a path of the particle that is a sorting-determination target to determine the path of the particle that is a sorting-determination target.

Further, the present disclosure also provides a computer-implemented fine-particle sorting method according to claim 14 including:
a determination step of performing sorting determination of a particle using rule data defining, in accordance with a particle population to which a particle that is a sorting-determination target belongs and a particle population to which a different particle within a predetermined range around the particle belongs , a relationship between the particles,
particle populations to which the particle that is a sorting-determination target and
the different particle within the predetermined range may belong including the following particle populations of
   (a) a particle population of particles to be sorted,
   (b)a particle population of particles that are not to be sorted but are ignorable in the determination, and
   (c)a particle population of particles that are neither the particles to be sorted nor the ignorable particles,
the ignorable particles including red blood cells.

Further, the present disclosure also provides a program according to claim 15 that causes a fine-particle sorting apparatus to execute a fine-particle sorting method including:
a determination step of performing sorting determination of a particle using rule data defining, in accordance with a particle population to which a particle that is a sorting-determination target belongs and a particle population to which a different particle within a predetermined range around the particle belongs , a relationship between the particles,
particle populations to which the particle that is a sorting-determination target and the different particle within the predetermined range may belong including the following particle populations of
   (a) a particle population of particles to be sorted,
   (b)a particle population of particles that are not to be sorted but are ignorable in the determination, and
   (c)a particle population of particles that are neither the particles to be sorted nor the ignorable particles,
the ignorable particles including red blood cells.

Further, the present disclosure also provides a fine particle-sorting system according to claim 13 including:
a fine particle sorting apparatus according to claim 1, and
a rule-data generating unit that generates rule data used in the sorting determination.

### <Advantageous Effects of Invention>

### Brief Description of Drawings

[Fig.1] Fig. 1 is a diagram showing a configuration example of a fine-particle sorting microchip used in the present disclosure.
[Fig.2]Fig. 2 is a diagram showing an example of flow of a fine-particle sorting process using the fine-particle sorting microchip used in the present disclosure.
[Fig.3]Fig. 3 is an enlarged view of an example of a particle-sorting unit of the fine-particle sorting microchip used in the present disclosure.
[Fig.4]Fig. 4 is a block diagram of a control unit.
[Fig.5A]Fig. 5A is an enlarged view of a connection-flow-path portion.
[Fig.5B]Fig. 5B is an enlarged view of a connection-flow-path portion.
[Fig.6A]Fig. 6A is an enlarged view of a connection-flow-path portion.
[Fig.6B]Fig. 6B is an enlarged view of a connection-flow-path portion.
[Fig.7]Fig. 7 is a diagram showing an example of gating.
[Fig.8]Fig. 8 is a diagram showing an example of a sorting determination pattern.
[Fig.9]Fig. 9 is a flowchart showing an example of a sorting determination process.
[Fig. 10]Fig. 10 is a diagram showing an example of a path assignment table and rule data used in the sorting determination process.
[Fig.11] Fig. 11 is a diagram showing an example of rule data used in the sorting determination process and a sorting determination result in the case where a sorting determination process has been performed using the rule data.
[Fig. 12]Fig. 12 is a diagram showing an example of rule data used in the sorting determination process and a sorting determination result in the case where a sorting determination process has been performed using the rule data.
[Fig. 13]Fig. 13 is a diagram showing an example of rule data used in the sorting determination process and a sorting determination result in the case where a sorting determination process has been performed using the rule data.
[Fig.14] Fig. 14 is a diagram showing an example of rule data used in the sorting determination process and a sorting determination result in the case where a sorting determination process has been performed using the rule data.
[Fig. 15]Fig. 15 is a schematic diagram showing an example of a fine-particle sorting apparatus according to an embodiment of the present disclosure.
[Fig.16] Fig. 16 is a diagram showing an example of gating.
[Fig. 17]Fig. 17 is a diagram showing an example of a sorting determination pattern.
[Fig. 18]Figs. 18 are diagrams showing an example of a path assignment table and rule data used in the sorting determination process.
[Fig. 19]Fig. 19 is a flowchart showing an example of a sorting determination process.
[Fig.20]Figs. 20 are diagrams showing an example of a path assignment table and rule data used in the sorting determination process.
[Fig.21]Fig. 21 is a diagram showing a sorting determination result in the case where a sorting determination process has been performed using the rule data shown in Figs. 20.
[Fig.22]Figs. 22 are diagrams showing an example of a path assignment table and rule data used in the sorting determination process.
[Fig.23]Fig. 23 is a diagram showing a sorting determination result in the case where a sorting determination process has been performed using the rule data shown in Figs. 22.
[Fig.24]Figs. 24 are diagrams showing an example of a path assignment table and rule data used in the sorting determination process.
[Fig.25]Fig. 25 is a diagram showing a sorting determination result in the case where a sorting determination process has been performed using the rule data shown in Figs. 24.
[Fig.26]Figs. 26 are diagrams showing an example of a path assignment table and rule data used in the sorting determination process.
[Fig.27]Fig. 27 is a diagram showing a sorting determination result in the case where a sorting determination process has been performed using the rule data shown in Figs. 26.
[Fig.28]Figs. 28 are diagrams showing an example of a path assignment table and rule data used in the sorting determination process.
[Fig.29]Fig. 29 is a diagram showing a sorting determination result in the case where a sorting determination process has been performed using the rule data shown in Figs. 28.

### Description of Embodiments

Hereinafter, suitable embodiments for carrying out the present disclosure will be described. It should be noted that the embodiments described below show typical embodiments of the present disclosure, and the scope of the present disclosure is not limited to these embodiments. Note that description of the present disclosure will be made in the following order.
1. First embodiment (fine-particle sorting apparatus)
   (1) Description of first embodiment
   (2) Example of closed fine-particle sorting apparatus
   (3) Details of determination process
      (3-1) Basic concept of determination process
      (3-2) Example of determination process flow (determination pattern that emphasizes purity and increases collection rate)
      (3-3) Realization of various sorting determination patterns by changing rule data
         (3-3-1) Example of sorting determination process prioritizing purity of target cells
         (3-3-2) Another example of sorting determination process prioritizing purity of target cells
         (3-3-3) Example of sorting determination process prioritizing yield of target cells
         (3-3-4) Example of sorting determination process that emphasizes purity of target cells and increases collection rate
         (3-3-5) Example
   (4) Example of fine-particle sorting apparatus configured as flow cytometer
   (5) Details of determination process
      (5-1) Basic concept of determination process
      (5-2) Example of determination process flow
      (5-3) Realization of various sorting determination patterns by changing rule data
         (5-3-1) Example of sorting determination process that emphasizes purity of target cells and increases collection rate
         (5-3-2) Example of sorting determination process emphasizing purity of target cells
         (5-3-3) Example of sorting determination process with narrowed range considered in sorting determination
         (5-3-4) Example of sorting determination process emphasizing collection rate of target cells
         (5-3-5) Example of sorting determination process determining that sorting is performed only in case where one particle is contained within range considered in sorting determination
2. Second embodiment (computer-implemented fine-particle sorting method)
3. Third embodiment (program)
4. Fourth embodiment (fine particle-sorting system)

### 1. First embodiment (fine-particle sorting apparatus)

### (1) Description of first embodiment

A fine-particle sorting apparatus according to a first embodiment of the present disclosure includes a determination unit that performs sorting determination of a particle. The determination unit may perform the determination using rule data defining, in accordance with a particle population to which a particle that is a sorting-determination target belongs and a particle population to which a different particle within a predetermined range around the particle belongs, a relationship between the particles. Particle populations to which the particle that is a sorting-determination target and the different particle within the predetermined range may belong may include the following particle populations of
(a) a particle population of particles to be sorted,
(b) a particle population of particles that are not to be sorted but are ignorable in the determination, and
(c) a particle population of particles that are neither the particles to be sorted nor the ignorable particles.

Since the fine-particle sorting apparatus according to the first embodiment of the present disclosure includes the determination unit that performs sorting determination of a particle using the rule data, it is possible to execute sorting determination for increasing the collection rate of particles to be sorted while reducing the effect on the purity of the particles to be sorted.

In a favorable embodiment of the present disclosure, the ignorable particles include red blood cells. That is, the fine-particle sorting apparatus is capable of generating the rule data to include the red blood cells as the ignorable particles and performing the sorting determination of particles in accordance with the rule data.

As described above, the red blood cell may be collected together with target cells in accordance with the object of the sorting. By setting the particle population such that the ignorable particles include the red blood cells, the determination unit of the fine-particle sorting apparatus is capable of performing sorting determination to ignore the red blood cells. As a result, the collection rate of the target cells can be increased while suppressing the effect on the operation after a sorting process such as culturing and gene manipulation.

In this embodiment, the sample subjected to a sorting process by the fine-particle sorting apparatus is, for example, a biological-particle-containing sample, particularly a cell-containing sample, and more particularly a blood-cell-containing sample. In this embodiment, the particles to be sorted may be, for example, cells, particularly blood cells, more particularly may include leukocytes, and still more particularly may include at least one selected from the group consisting of T cells, B cells, granulocytes, and monocytes. That is, the fine-particle sorting apparatus according to the first embodiment of the present disclosure may be used to sort blood cells, and more particularly to selectively sort predetermined leukocytes (e.g., T cells) from blood cells.

In a favorable embodiment of the present disclosure, the determination unit may be configured to be capable of changing rule data used in the determination. As a result, the fine-particle sorting apparatus is capable of executing a particle-sorting process according to the object. For example, not only a sorting process that allows the target cells and the red blood cells to be sorted together, but also a sorting process that does not allow the target cells and the red blood cells to be sorted together can be executed. In this embodiment, at least one piece of the rule data available to the deciding unit may define that,
where the particle that is a sorting-determination target belongs to the (a) particle population of the particles to be sorted and the different particle within the predetermined range around the particle belongs to the (b) particle population of the ignorable particles, a path of the different particle is a path of the particles to be sorted, for example.

The rule data thus defined allow ignorable particles to be collected together with the particles to be sorted. As a result, it is possible to increase the collection rate of the target cells while suppressing the effect on the operation after a sorting process.

Hereinafter, the configuration and sorting process of the fine-particle sorting apparatus according to first embodiment of the present disclosure will be described with reference to the drawings.

### (2) Example of closed fine-particle sorting apparatus

### (2-1) Configuration of apparatus and sorting operation

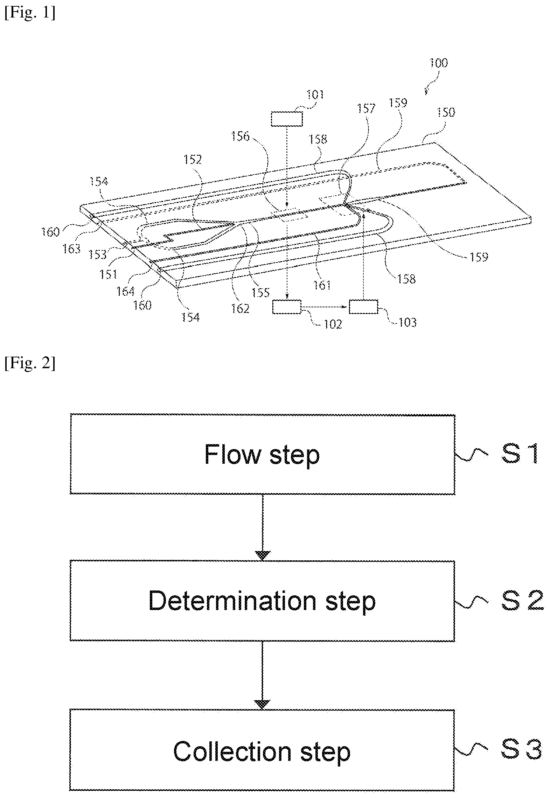

The fine-particle sorting apparatus according to the first embodiment of the present disclosure may be configured as an apparatus that sorts fine particles in closed space. For example, the fine-particle sorting apparatus may be configured as an apparatus that sorts fine particles by controlling a flow path through which fine particles travels. Fig. 1 shows a configuration example of the fine-particle sorting apparatus according to the first embodiment of the present disclosure. Fig. 1 also shows an example of the flow path structure of a chip included in the apparatus. Fig. 2 shows an example of a flowchart of a sorting operation performed by the fine-particle sorting apparatus.

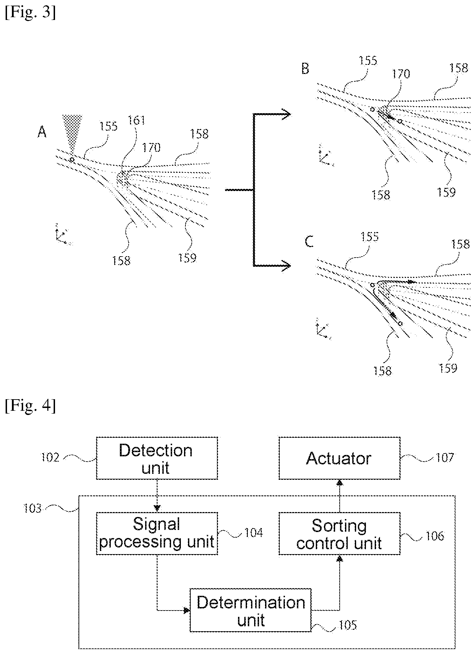

The fine-particle sorting apparatus 100 shown in Fig. 1 includes a light irradiation unit 101, the detection unit 102, a control unit 103, and a fine-particle sorting microchip 150. The control unit 103 may include a signal processing unit 104, a determination unit 105, and a sorting control unit 106, as shown in Fig. 4.

Hereinafter, the fine-particle sorting microchip 150 will be described first, and then another component of the fine-particle sorting apparatus 100 will be described while describing the sorting operation performed by the fine-particle sorting apparatus 100.

The fine-particle sorting microchip 150 shown in Fig. 1 includes a sample-liquid flow path 152 and a sheath-liquid flow path 154 that merges with the sample-liquid flow path 152 at a merging portion 162. The fine-particle sorting microchip 150 is further provided with a sample-liquid inlet 151 and a sheath-liquid inlet 153.

Note that in Fig. 1, a part of the sheath-liquid flow path 154 is indicated by a dotted line. The portion indicated by the dotted line is located at a position (position displaced in the optical axis direction indicated by arrows) lower than the sample-liquid flow path 152 indicated by a solid line, and the sheath-liquid flow path 154 and the sample-liquid flow path 152 do not communicate with each other at a position where the flow path indicated by the flow path indicated by the dotted line and the flow path indicated by the solid line intersect. Further, in Fig. 1, the sample-liquid flow path 152 is shown to bend twice between the sample-liquid inlet 151 and the merging portion 162 in order to facilitate the distinction between the sample-liquid flow path 152 and the sheath-liquid flow path 154. The sample-liquid flow path 152 may be configured linearly without bending in such a way between the sample-liquid inlet 151 and the merging portion 162.

In the fine-particle sorting operation, a sample liquid containing fine particles is introduced from the sample-liquid inlet 151 into the sample-liquid flow path 152, and a sheath liquid containing no fine particles is introduced from the sheath-liquid inlet 153 into the sheath-liquid flow path 154.

The fine-particle sorting microchip 150 includes a merging flow path 155 including the merging portion 162 at one end thereof. The merging flow path 155 includes a sorting determination unit 156 used for performing sorting determination of fine particles.

The sample liquid and the sheath liquid merge at the merging portion 162 and flow in the merging flow path 155 toward a particle-sorting unit 157. In particular, the sample liquid and the sheath liquid merge at the merging portion 162 to form laminar flow in which, for example, the periphery of the sample liquid is surrounded by the sheath liquid. Favorably, fine particles are substantially aligned in the laminar flow. By the flow path structure that includes the sample-liquid flow path 152 and the two sheath-liquid flow paths 154, which merge at the merging portion 162, and the merging flow path 155 having the merge portion 162 as one end, laminar flow containing fine particles that are substantially aligned and flow is formed. This makes it easier to distinguish the light generated by light irradiation into one fine particle from the light generated by light irradiation into the other fine particle in the light irradiation in a sorting determination unit (referred to also as detection area) 156 described below.

The fine-particle sorting microchip 150 further includes the particle-sorting unit 157 at the other end of the merging flow path 155. Fig. 3 shows an enlarged view of the particle-sorting unit 157. As shown in Fig. 3A, the merging flow path 155 is connected to a fine-particle collecting flow path 159 at the other end via a connection flow path 170. As shown in Fig. 3A, the merging flow path 155, the connection flow path 170, and the fine-particle collecting flow path 159 may be coaxial.

In the case where the particles to be collected flow into the particle-sorting unit 157, a flow from the merging flow path 155 through the connection flow path 170 into the fine-particle collecting flow path 159 is formed as shown in Fig. 3B, and the particles to be collected (referred to also as "particles to be sorted" in this specification) are collected into the fine-particle collecting flow path 159. In this manner, the particles to be collected flow through the connection flow path 170 to the fine-particle collecting flow path 159.

In the case where fine particles that are not the particles to be collected flow into the particle-sorting unit 157, the fine particles that are not the particles to be collected flow into a branch flow path 158 as shown in Fig. 3C. In this case, the flow entering the fine-particle collecting flow path 159 is not formed.

As shown in Fig. 1, the fine-particle collecting flow path 159 is formed to extend linearly from the particle-sorting unit 157, makes a U-turn, and reach the same plane as the plane on which the sample-liquid inlet 151 and the sheath-liquid inlet 153 are formed. The liquid flowing through the fine-particle collecting flow path 159 is discharged out of the chip from a collecting-flow-path end 163.

As shown in Fig. 1, two branch flow paths 158 are also formed to extend linearly from the particle-sorting unit 157, make a U-turn, and reach the same plane as the plane on which the sample-liquid inlet 151 and the sheath-liquid inlet 153 are formed. The liquid flowing through the branch flow path 158 is discharged out of the chip from a branch flow path end 166.

In Fig. 1, the displaying method of the fine-particle collecting flow path 159 is changed to a solid line and a dotted line at the U-tum part. This change indicates that the position in the optical axis direction has changed on the way. By changing the position in the optical axis direction in this manner, the fine-particle collecting flow path 159 and the branch flow path 158 do not communicate with each other at the portion intersecting with the branch flow path 158.

Both the collecting-flow-path end 163 and the two branch flow path ends 166 are formed on the plane on which the sample-liquid inlet 151 and the sheath-liquid inlet 153 are formed. Further, an introduction-flow-path inlet 164 for introducing a liquid into an introduction flow path 161 described below is also formed on the plane. As described above, all of the inlet into which the liquid is introduced and the outlet from which the liquid is discharged are formed on one surface of the fine-particle sorting microchip 150. This facilitates attachment of the chip to the fine-particle sorting apparatus 100. For example, as compared with the case where an inlet and/or an outlet are formed on two or more planes, the connection between the flow path provided in the fine-particle sorting apparatus 100 and the flow path of the fine-particle sorting microchip 150 is easier.

The fine-particle sorting microchip 150 includes the introduction flow path 161 for introducing a liquid into the connection flow path 170 as shown in Fig. 1 and Fig. 3. By introducing the liquid from the introduction flow path 161 into the connection flow path 170, the inside of the connection flow path 170 is filled with the liquid. As a result, it is possible to prevent non-target fine particles from entering the fine-particle collecting flow path 159.

The fine-particle sorting microchip 150 includes the two branch flow paths 158 connected to the merging flow path 155 at the other end of the merging flow path 155. As described above, in the fine-particle sorting microchip used in the present disclosure, the merging flow path may be branched into the connection flow path and the at least one branch flow path.

Fine particles other than the particles to be collected flow into one of the two branch flow paths 158 without entering the fine-particle collecting flow path 159.

As shown in Fig. 2, a fine-particle sorting operation using the fine-particle sorting microchip 150 includes a flow step S1 of causing a liquid containing fine particles to flow into the merging flow path 155, a determination step S2 of determining whether or not fine particles flowing through the merging flow path 155 are the particles to be collected, and a collection step S3 of collecting the particles to be collected into the fine-particle collecting flow path 159.

Each of the steps will be described below.

### (2-2) Flow step

In the flow step S1, a sample liquid containing fine particles and a sheath liquid containing no fine particles are respectively introduced into the sample-liquid flow path 152 and the sheath liquid flow path 154 from the sample-liquid inlet 151 and the sheath-liquid inlet 153.

The sample liquid and the sheath liquid merge at the merging portion 162 to form a laminar flow in which, for example, the periphery of the sample liquid is surrounded by the sheath liquid. Favorably, fine particles are substantially aligned in the laminar flow. That is, in the flow step S1, a laminar flow containing fine particles that are substantially aligned and flow may be formed.

In this way, in the flow step S1, the liquid containing fine particles flows through the merging flow path 155 as particularly a laminar flow. The liquid flows in the merging flow path 155 from the merging portion 162 toward the particle-sorting unit 157.

### (2-3) Determination step

In the determination step S2, whether or not fine particles flowing through the merging flow path 155 are the particles to be collected is determined. The determination may be made by the determination unit 105. The determination unit 105 may make the determination on the basis of the light generated by light irradiation into fine particles by the light irradiation unit 101. An example of the determination step S2 will be described in more detail below.

In the determination step S2, the light irradiation unit 101 irradiates fine particles flowing through the merging flow path 155 (particularly, the sorting determination unit 156) in the fine-particle sorting microchip 150 with light (e.g. excitation light), and the detection unit 102 detects the light generated by the light irradiation. The determination unit 105 determines, on the basis of the characteristics of the light detected by the detection unit 102, whether or not the fine particles are the particles to be collected. For example, the determination unit 105 may make a determination based on scattered light, a determination based on fluorescent light, or a determination based on an image (e.g., dark field image and/or bright field image). In the collection step S3 described below, the control unit 103 controls the flow in the fine-particle sorting microchip 150, and thus, the particles to be collected are collected into the fine-particle collecting flow path 159.

The light irradiation unit 101 irradiates fine particles flowing in the flow path in the fine-particle sorting microchip 150 with light (e.g. excitation light). The light irradiation unit 101 may include a light source that emits light and an objective lens that focuses the excitation light on fine particles flowing through the sorting determination unit. The light source may be selected by those skilled in the art as appropriate for analytical purposes, and may be, for example, a laser diode, an SHG laser, a solid-state laser, a gas laser, a high intensity LED, or a halogen lamp or a combination of two or more of them. The light irradiation unit may include other optical elements as necessary in addition to the light source and the objective lens.

In one embodiment of the present disclosure, the detection unit 102 detects scattered light and/or fluorescent light generated from the fine particles by light irradiation by the light irradiation unit 101. The detection unit 102 may include a condenser lens that collects fluorescent light and/or scattered light generated from fine particles and a detector. Such a detector may include, but are not limited to, a PMT, a photodiode, a CCD, and a CMOS. The detection unit 102 may include other optical elements as necessary in addition to the condenser lens and the detector. The detection unit 102 may further include, for example, a spectroscopic unit. Examples of optical parts constituting the spectroscopic unit include gratings, prisms, and optical filters. By the spectroscopic unit, for example, light of a wavelength to be detected can be detected separately from light of other wavelengths. The detection unit 102 may convert the detected light into an analogue electrical signal by photoelectric conversion. The detection unit 102 may further convert the analogue electrical signal into a digital electrical signal by A/D conversion.

In other embodiments of the present disclosure, the detection unit 102 may obtain an image generated by light irradiation by the light irradiation unit 101. The image may be, for example, a dark field image, a bright field image, or both of them. In this embodiment, the light irradiation unit 101 may include, for example, a halogen lamp or a laser, and the detection unit 102 may include a CCD or a CMOS. The detection unit 102 may be, for example, an image sensor in which a substrate in which a CMOS sensor is incorporated and a substrate in which a digital signal processor (DSP) is incorporated are stacked. By operating the DSP of the image sensor as a machine-learning unit, the image sensor is capable of operating as a so-called AI sensor. The detection unit 102 including the image sensor may determine, on the basis of, for example, a learning model, whether or not fine particles are the particles to be collected. Further, the learning model may be updated in real time while the method according to the first embodiment of the present disclosure is being performed. For example, during resetting of a pixel array unit in the CMOS sensor, during exposure of the pixel array unit, or during reading of a pixel signal from the respective unit pixels of the pixel array unit, the DSP may perform a machine-learning process. Examples of the image sensor operating as an AI sensor may include the imaging device disclosed in WO 2018/051809.

The signal processing unit 104 included in the control unit 103 may process the waveform of the digital electrical signal obtained by the detection unit 102 to generate information (data) regarding the characteristics of light used for determination by the determination unit 105. As information regarding the characteristics of light, the signal processing unit 104 may obtain, for example, one, two, or three of the width of the waveform, the height of the waveform, and the area of the waveform from the waveform of the digital electrical signal. Further, the information regarding the characteristics of light may include, for example, the time at which the light has been detected. The above-mentioned process performed by the signal processing unit 104 may be performed in, particularly, embodiments in which the scattered light and/or fluorescent light are detected.

The determination unit 105 included in the control unit 103 determines, on the basis of light generated by irradiating fine particles flowing in the flow path with light, whether or not the fine particles are the particles to be collected.

In an embodiment in which the scattered light and/or the fluorescent light are detected, the waveform of the digital electrical signal obtained by the detection unit 102 is processed by the control unit 103, and the determination unit 105 determines, on the basis of information regarding the characteristics of the light generated by the process, whether or not the fine particles are the particles to be collected. For example, in the determination based on the scattered light, the characteristics of the outer shape and/or the inner structure of fine particles may be specified, and whether or not the fine particles are the particles to be collected may be determined on the basis of the characteristics. Further, by pretreating fine particles such as cells in advance, whether or not fine particles are the particles to be collected can be determined on the basis of the characteristics similar to those used in flow cytometry. Further, labeling of fine particles such as cells with an antibody or a dye (particularly, a fluorescent dye) can be performed to determine, on the basis of the characteristics of the surface-antigen of the fine particles, whether or not the fine particles are the particles to be collected.

In an embodiment in which the image is obtained, the determination unit 105 included in the control unit 103 determines, on the basis of the obtained image (e.g., a dark field image, a bright field image, or both of them), whether or not fine particles are the particles to be collected. For example, whether or not fine particles are the particles to be collected may be determined on the basis of a combination of one or more of the form, size, and color of the fine particles (particularly, cells).

The determination may be performed on the basis of, for example, whether or not the information regarding the characteristics of light satisfies a predetermined condition. The condition may be a condition indicating that fine particles are the particles to be collected. The condition may be suitably set by those skilled in the art and may be a condition regarding characteristics of light, such as a condition used in the technological field of flow cytometry.

One light beam may be applied to one position in the sorting determination unit 156, or light beams may be applied to a plurality of positions in the sorting determination unit 156. For example, the microchip 150 may be configured such that a light beam is applied to each of two different positions in the sorting determination unit 156 (i.e., there are two positions in the sorting determination unit 156 to which light is applied). In this case, for example, whether or not fine particles are the particles to be collected may be determined on the basis of the light (e.g., fluorescent light and/or scattered light) generated by irradiating fine particles with light at one position. Further, the velocity of the fine particles in the flow path can be calculated on the basis of the difference between the time at which the light generated by the light irradiation at the one position has been detected and the time at which the light generated by the light irradiation at the other position has been detected. For the calculation, the distance between the two irradiation positions may be determined in advance, and the velocity of the fine particles may be determined on the basis of the difference between the two detection times and the distance. Further, the arrival time to the particle-sorting unit 157 described below can be accurately predicted on the basis of the velocity. By accurately predicting the arrival time, the timing of forming the flow entering the fine-particle collecting flow path 159 can be optimized. Further, in the case where the difference between the arrival time of a certain fine particle to the particle-sorting unit 157 and the arrival time of a fine particles in front or behind the certain fine particle to the particle-sorting unit 157 is equal to or less than a predetermined threshold value, it may be determined that the certain fine particle is not to be collected. In the case where the distance between the certain fine particle and the fine particle in front of or behind the certain fine particle is small, the possibility of the fine particle in front of or behind the certain fine particle being collected together during the suction of the certain fine particle increases. By determining that the certain fine particle is not to be collected in the case where the fine particle in front of or behind the certain fine particle is likely to be collected together, it is possible to prevent the fine particle in front of or behind the certain fine particle from being collected. As a result, it is possible to increase the purity of the target fine particles among the collected fine particles. Specific examples of a microchip in which a light beam is applied to each of the two different positions in the sorting determination unit 156 and an apparatus including the microchip are disclosed in, for example, Japanese Patent Application Laid-open No. 2014-202573.

Note that the control unit 103 may control the light irradiation by the light irradiation unit 101 and/or the light detection by the detection unit 102. Further, the control unit 103 may control the driving of a pump for supplying a liquid into the fine-particle sorting microchip 150. The control unit 103 may include, for example, a hard disk storing a program for causing the fine-particle sorting apparatus 100 to execute the fine-particle sorting method according to the first embodiment of the present disclosure and an OS, a CPU, and a memory. For example, the function of the control unit 103 may be realized in a general-purpose computer. The program may be recorded on a recording medium such as a micro SD memory card, a SD memory card, and a flash memory. The program recorded on the recording medium may be read by a drive (not shown) provided in the fine-particle sorting apparatus 100, and the control unit 103 may cause the fine-particle sorting apparatus 100 to execute the fine-particle sorting method according to the first embodiment of the present disclosure in accordance with the read program.

### (2-4) Collection step

In the collection step S3, fine particles determined to be the particles to be collected in the determination step S2 are collected into the fine-particle collecting flow path 159. The collection step S3 is performed in the particle-sorting unit 157 in the microchip 150. In the particle-sorting unit 157, the laminar flow flowing through the merging flow path 155 flows separately into the two branch flow paths 158. Although the particle-sorting unit 157 shown in Fig. 1 includes the two branch flow paths 158, the number of branch flow paths is not limited to two. The particle-sorting unit 157 may be provided with one or more (e.g., 2, 3, or 4) branch flow paths, for example. The branch flow path may be configured to branch in a Y shape on one plane as in Fig. 1, or may be configured to branch three-dimensionally.

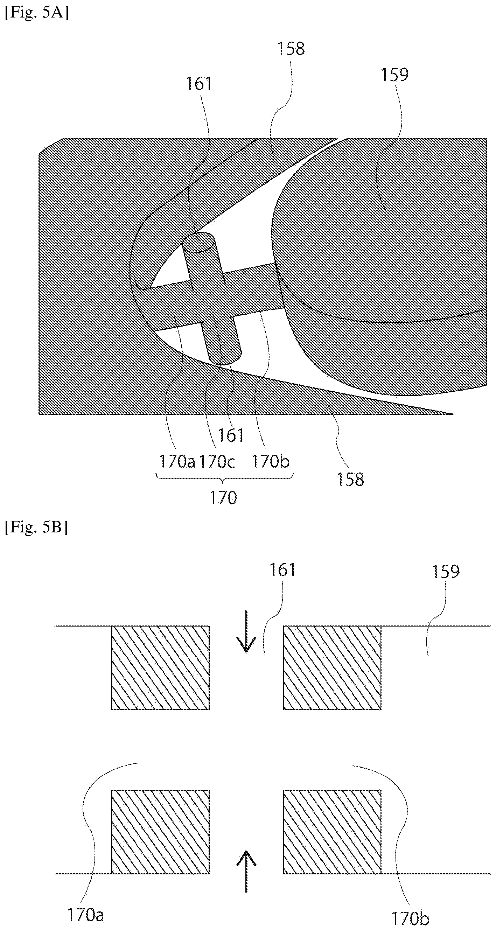

An enlarged view of the vicinity of the connection flow path 170 is shown in Fig. 5A and Fig. 5B. Fig. 5A is a schematic perspective view of the vicinity of the connection flow path 170. Fig. 5B is a schematic cross-sectional view in a plane passing through the center line of the introduction flow path 161 and the center line of the connection flow path 170. The connection flow path 170 includes a flow path 170a (hereinafter, referred to also as the upstream-side connection flow path 170a) on the sorting determination unit 156 side, a flow path 170b (hereinafter, referred to also as the downstream-side connection flow path 170b) on the fine-particle collecting flow path 159 side, and a junction 170c between the connection flow path 170 and the introduction flow path 161. The introduction flow path 161 is provided so as to be substantially perpendicular to the axis of the flow path of the connection flow path 170. The two introduction flow paths 161 are provided so as to face each other at a substantially central position of the connection flow path 170 in Fig. 5A and Fig. 5B, but only one introduction flow path may be provided.

The shape and dimension of the lateral cross-section of the upstream-side connection flow path 170a may be the same as the shape and dimension of the downstream-side connection flow path 170b. For example, as shown in Figs. 5A and 5B, both the lateral cross-section of the upstream-side connection flow path 170a and the lateral cross-section of the downstream-side connection flow path 170b may be substantially circular shapes with the same dimensions. Alternatively, both of these two lateral cross-sections may be rectangular shapes (e.g., squares or rectangles) with the same dimensions.

From the two introduction flow paths 161, liquids are supplied to the connection flow path 170 as indicated by arrows in Fig. 5B. The liquids flow from the junction 170c to both the upstream-side connection flow path 170a and the downstream-side connection flow path 170b.

In the case where the collection step is not performed, the liquids flow as follows. The liquid flowing into the upstream-side connection flow path 170a exits from the connection surface of the connection flow path 170 with the merging flow path 155, and then flows separately into the two branch flow paths 158. Since the liquid exits from the connection surface as described above, it is possible to prevent the liquid and fine particles that need not be collected into the fine-particle collecting flow path 159 from entering the fine-particle collecting flow path 159 through the connection flow path 170.

The liquid flowing into the downstream-side connection flow path 170b flows into the fine-particle collecting flow path 159. As a result, the inside of the fine-particle collecting flow path 159 is filled with the liquid.

Even in the case where the collection step is performed, the liquid may be supplied from the two introduction flow paths 161 to the connection flow path 170. However, due to pressure fluctuations in the fine-particle collecting flow path 159, particularly by generating a negative pressure in the fine-particle collecting flow path 159, a flow is formed from the merging flow path 155 to the fine-particle collecting flow path 159 through the connection flow path 170. That is, a flow that flows from the merging flow path 155 to the fine-particle collecting flow path 159 through the upstream-side connection flow path 170a, the junction 170c, and the downstream-side connection flow path 170b in this order is formed. In this way, the particles to be collected are collected into the fine-particle collecting flow path 159.

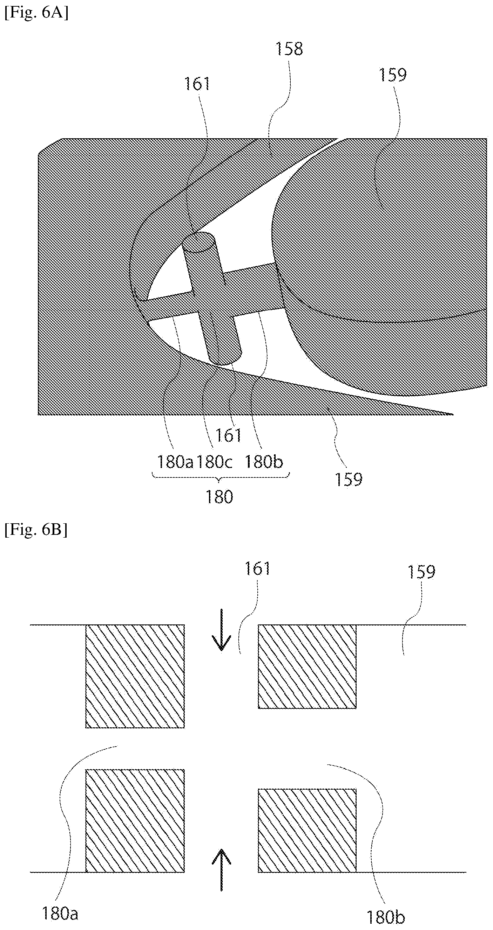

The shape and/or dimension of the cross-section of the upstream-side connection flow path 170a may differ from the shape and/or dimension of the downstream-side connection flow path 170b. An example in which the dimensions of these two flow paths differ is shown in Figs. 6A and 6B. As shown in Figs. 6A and 6B, the connection flow path 180 includes a flow path 180a (hereinafter, referred to also as the upstream-side connection flow path 180a) on the sorting determination unit 156 side, a flow path 180b on the fine-particle collecting flow path 159 side (hereinafter, referred to also as the downstream-side connection flow path 180b), and a junction 180c between the connection flow path 180 and the introduction flow path 161. Both the lateral cross-section of the upstream-side connection flow path 180a and the lateral cross-section of the downstream-side connection flow path 180b have a substantially circular shape, but the diameter of the latter lateral cross-section is larger than the diameter of the former lateral cross-section. By making the diameter of the latter lateral cross-section larger than that of the former, it is possible to more effectively prevent the particles to be collected which have been sorted into the fine-particle collecting flow path 159 from being discharged to the merging flow path 155 through the connection flow path 180 immediately after the fine-particle sorting operation by the negative pressure described above, as compared with the case where both the diameters are the same.

For example, in the case where the lateral cross section of the upstream-side connection flow path 180a and the lateral cross section of the downstream-side connection flow path 180b are both rectangular, the area of the latter lateral cross section can be made larger than the area of the former lateral cross section to more effectively prevent the fine particles that have been collected from being discharged to the merging flow path 155 through the connection flow path 180, as described above.

In the collection step S3, the particles to be collected are collected into the fine-particle collection flow path through the connection flow path due to pressure fluctuations in the fine-particle collecting flow path 159. The collection may be performed by, for example, generating a negative pressure in the fine-particle collecting flow path 159 as described above. The negative pressure may be generated by deformation of the walls defining the fine-particle collecting flow path 159 by, for example, an actuator 107 (particularly, piezoelectric actuator) attached to the outside of the microchip 150. The negative pressure may form the flow entering the fine-particle collecting flow path 159. In order to generate the negative pressure, for example, the actuator 107 may be attached to the outside of the microchip 150 so that the walls of the fine-particle collecting flow path 159 can be deformed. Due to the deformation of the walls, the inner space of the fine-particle collecting flow path 159 may be changed, and a negative pressure may be generated. The actuator 107 can be, for example, a piezoelectric actuator. When the particles to be collected are sucked into the fine-particle collecting flow path 159, the sample liquid constituting the laminar flow or the sample liquid and the sheath liquid constituting the laminar flow may also flow into the fine-particle collecting flow path 159. In this way, the particles to be collected are sorted in the particle-sorting unit 157 and collected into the fine-particle collecting flow path 159.

In order to prevent fine particles that are not the particles to be collected from entering the fine-particle collecting flow path 159 through the connection flow path 170, the connection flow path 170 is provided with the introduction flow path 161. A liquid is introduced into the connection flow path 170 from the introduction flow path 161. By introducing the liquid, the connection flow path 170 is filled with the liquid. Further, by forming a flow from the connection flow path 170 toward the merging flow path 155 by a part of the liquid, fine particles other than the particles to be collected are prevented from entering the fine-particle collecting flow path 159. The liquid forming the flow from the connection flow path 170 toward the merging flow path 155 flows through the branch flow path 158 due to the flow in which the liquid flowing through the merging flow path 155 flows into the branch flow path 158, similarly to the liquid without flowing through the merging flow path 155.

Note that the remainder of the liquid introduced into the connection flow path 170 flows to the fine-particle collecting flow path 159. As a result, the fine-particle collecting flow path 159 may be filled with the liquid.

The flow flowing into the branch flow path 158 may be discharged to the outside of the microchip at the branch flow path end 160. Further, the particles to be collected that have been collected into the fine-particle collecting flow path 159 may be discharged to the outside of the microchip at the collecting-flow-path end 163. A container may be connected to the collecting-flow-path end 163 via a flow path such as a tube. The particles to be collected may be collected in the container.

As shown in Fig. 1 and Fig. 3, in the fine-particle sorting microchip used in the first embodiment of the present disclosure, the merging flow path, the connection flow path, and the collection flow path may be linearly aligned. In the case where these three flow paths are linearly aligned (particularly, coaxially), the collection step can be performed more efficiently as compared with, for example, the case where the connection flow path and the collection flow path are arranged at an angle with respect to the merging flow path. For example, it is possible to reduce the amount of suction necessary for guiding the particles to be collected to the connection flow path. Further, in the fine-particle sorting microchip used in the first embodiment the present disclosure, fine particles are substantially aligned in the merging flow path and flow toward the connection flow path. Therefore, it is also possible to reduce the amount of suction in the collection step.

As described above, in the fine-particle sorting microchip used in the first embodiment of the present disclosure, the liquid is supplied from the introduction flow path to the connection flow path. As a result, a flow flowing from the connection position between the introduction flow path and the connection flow path toward the merging flow path is formed in the connection flow path, and it is possible to prevent the liquid flowing through the merging flow path from entering the connection flow path and to prevent fine particles other than the particles to be collected from flowing into the collection flow path through the connection flow path. When the collection step is performed, the particles to be collected are collected into the collection flow path through the connection flow path by, for example, a negative pressure generated in the collection flow path, as described above.

### (2-5) Fine-particle sorting microchip and fine particles

In the present disclosure, "micro" means that at least a part of the flow paths included in the fine-particle sorting microchip have dimensions of the order of µm, particularly, lateral cross-sectional dimensions of the order of µm.

That is, in the present disclosure, "microchip" refers to a chip including flow paths of the order of µm, particularly, a chip including flow paths having lateral cross-sectional dimensions of the order of µm. For example, a chip including a particle-sorting unit that includes flow paths having lateral cross-sectional dimensions of the order of µm may be referred to as a microchip according to the first embodiment of the present disclosure. For example, in the particle-sorting unit 157, the lateral cross section of the merging flow path 155 is, for example, rectangular, and the width of the merging flow path 155 in the particle-sorting unit 157 may be, for example, 100 µm to 500 µm, particularly, 100 µm to 300 µm, The width of the branch flow path branching from the merging flow path 155 may be smaller than the width of the merging flow path 155. The lateral cross-section of the connection flow path 170 may be, for example, circular, and the diameter of the connection flow path 170 at the junction between the connection flow path 170 and the merging flow path 155 may be, for example, 10 µm to 60µm, particularly, 20 µm to 50 µm, These dimensions with respect to the flow paths may be varied as appropriate depending on the size of fine particles, particularly, the size of the particles to be collected.

The fine-particle sorting microchip 150 may be produced by a method known in the technological field. For example, the biological-particle-sorting microchip 150 can be produced by bonding two or more substrates having predetermined flow paths formed therein. The flow path may be formed on, for example, all of the two or more substrates (particularly, two substrates) or may be formed only on some substrates of the two or more substrates (particularly one of the two substrates). In order to make it easier to adjust the position at the time of bonding the substrates to each other, it is favorable that the flow path is formed only on one substrate. For example, as shown by the dotted and solid lines in Fig. 1, a flow path structure in which two flow paths are provided so as to intersect each other at different positions in the optical axis direction (so as not to communicate with each other) and when viewed from the optical axis direction can be produced by stacking three or more substrates provided with flow paths.

A material known in the technological field may be used as the material for forming the fine-particle sorting microchip 150. Examples of the material include, but are not limited to, polycarbonate, cycloolefin polymer, polypropylene, PDMS (polydimethylsiloxane), polymethyl methacrylate (PMMA), polyethylene, polystyrene, glass, and silicon. In particular, polymeric materials such as polycarbonate, cycloolefin polymer, and polypropylene are particularly favorable because of their excellent processability and the ability to inexpensively produce a microchip using a molding device.

The fine-particle sorting microchip 150 is favorably transparent. For example, the fine-particle sorting microchip 150 may be transparent at least at a portion through which light (laser light and scattered light) passes. For example, the sorting determination unit may be transparent. The entire fine-particle sorting microchip 150 may be transparent.

Note that although an embodiment in which the above-mentioned flow path group is formed in the disposable fine-particle sorting microchip 150 has been described above, the above-mentioned flow path group does not necessarily need to be formed in the microchip 150 in the present disclosure. For example, the above-mentioned flow path group may be formed in a substrate such as plastic and glass. Further, the flow path group may have a two-dimensional or three-dimensional structure.

In the present disclosure, fine particles may be particles having dimensions capable of flowing in a flow path in the fine-particle sorting microchip. In the present disclosure, fine particles may be appropriately selected by those skilled in the art. In the present disclosure, fine particles may include biological fine particles such as cells, cell masses, microbes, and liposomes, as well as synthetic fine particles such as gel particles, beads, latex particles, polymeric particles, and industrial particles.

The biological fine particles (referred to also as biological particles) may include chromosomes, liposomes, mitochondria, organelles, and the like, which constitute various cells. The cells may include animal cells (hematopoietic cell, etc.) and plant cells. The cells may be, particularly, blood cells or tissue cells. The blood cells may be, for example, floating cells such as T cells and B cells. The tissue cells may be, for example, cultured adhesive cells or adhesive cells separated from tissues. The cell masses may include, for example, spheroids and organoids. The microbes may include bacteria such as Escherichia coli, viruses such as tobacco mosaic virus, and fungi such as yeast fungi. Further, the biological fine particles may also include biological macromolecules such as nucleic acids, proteins, complexes thereof, and the like. These biological macromolecules may be, for example, those extracted from cells or those contained in blood samples or other liquid samples.

The synthetic fine particles may be, for example, fine particles formed of an organic or inorganic polymeric material or a metal. The organic polymeric material may include polystyrene, styrene divinylbenzene, and polymethylmethacrylate. The inorganic polymeric material may include glass, silica, and a magnetic material. The metal may include colloidal gold, aluminum, and the like. The synthetic fine particles may be, for example, gel particles or beads, and more particularly, gel particles or beads having one or more combinations selected from oligonucleotides, peptides, proteins, and enzymes bound thereto. The shape of the fine particles may be spherical or substantially spherical, or may be non-spherical. The size and mass of the fine particles may be appropriately selected by those skilled in the art in accordance with the size of the flow path of the microchip. Meanwhile, the size of the flow path of the microchip can also be appropriately selected in accordance with the size and mass of the fine particles. In the present disclosure, a chemical or biological label, e.g., a fluorescent dye or a fluorescent protein, may be attached to the fine particles as appropriate. The label may make it easier to detect the fine particles. The label to be attached may be appropriately selected by those skilled in the art. A molecule (e.g., an antibody, aptamer, DNA, or RNA) that specifically reacts with the fine particles may be bound to the label.

In accordance with one embodiment of the present disclosure, the fine particles may be biological particles, particularly, cells.

### (3) Details of determination process

### (3-1) Basic concept of determination process

In the collection step S3, the fine-particle sorting apparatus 100 generates a negative pressure in, for example, the fine-particle collecting flow path 159 when collecting the particles to be collected as described above, and thus, a flow is formed from the merging flow path 155 through the connection flow path 170 to the fine-particle collecting flow path 159. Therefore, together with the particles to be collected, fluid (particularly, liquid) within a predetermined range around the particles to be collected is collected into the fine-particle collecting flow path 159. In the case where different particles are present within the predetermined range (more particularly, within a predetermined range in front and behind the traveling direction of the particles to be collected), when the particles to be collected are collected, the different particles are also collected into the fine-particle collecting flow path 159. Therefore, in the case where the different particles are particles that should not be collected, the determination unit 105 determines that the particles to be collected are not to be collected, thereby making it possible to increase the purity of the particles to be collected in the collected particles.

In the determination step S2, the determination unit 105 may determine, on the basis of the time at which the light generated by the light irradiation into the particle that is a sorting-determination target has been detected and the time at which the light generated by the light irradiation into the different particle flowing in front of or behind the particle has been detected, whether or not a different particle is present within the predetermined range. The velocity of these particles in the merging flow path 155 can be specified, for example, as described in the (2-3). Therefore, for example, the determination unit 105 is capable of determining whether or not a different particle is present within the predetermined range on the basis of the difference between the former time and the latter time. More specifically, the determination unit 105 may determine, on the basis of whether or not the difference is equal to or less than a predetermined value, whether or not a different particle is present within the predetermined range. In other words, the predetermined range may be a range specified on the basis of a predetermined value regarding a difference in time.

The predetermined value can be specified in advance. For example, in the case where a negative pressure is generated once, the predetermined value can be specified by specifying how far a different particle is apart from the particles that are sorting-determination targets for the different particle not to be collected into the fine-particle collecting flow path 159.

Note that in this specification, the predetermined value is also referred to as "guard time (Guard Time)". Further, since the predetermined range can be specified on the basis of the predetermined value as described above, the word "guard time" may also be used as meaning the predetermined range in the present specification.

As described above, the determination unit 105 may determine whether to collect the certain particle on the basis of whether or not a different particle is present within a predetermined range around the particle that is a sorting-determination target and/or on the basis of the type of the different particle. Then, in the case where the different particle is present within the predetermined range, the determination unit 105 determines that the particles that are sorting-determination targets are not to be sorted, and thus, it is possible to increase the purity of the target particles among the collected particles as described above. Meanwhile, in the case where the process after sorting is not affected by red blood cells, target particles are not collected, despite the fact that red blood cells are allowed to be collected together with the target particles, so that the collection rate of the target particles decreases. In this regard, in the case where a different particle that is allowed to be collected is present within a predetermined range around the target particles, when the target particles can be sorted, the collection rate of the target particles can be increased, which may be favorable in accordance with the type or purpose of the process after sorting.

Hereinafter, a method of increasing the purity as described above and a method of increasing the collection rate will be described using an example in which particular leukocytes are sorted from among blood.

First, in order to sort blood cells by the fine-particle sorting apparatus 100, samples are prepared and gated. The sample preparation may be performed using means known in the technological field such as flow cytometry, and the sample preparation method may be appropriately selected by those skilled in the art. For example, for the sample preparation, hemolysis treatment may be performed on the blood. The hemolysis treatment results in hemolysis of red blood cells in the blood. The hemolysis treatment may be performed using a hemolytic agent known to those skilled in the art.

Attempts to hemolyze all the red blood cells by the hemolysis treatment also affect white blood cells in some cases. For this reason, the hemolysis treatment may be terminated before all of the red blood cells are hemolyzed. That is, in the blood sample obtained by the hemolysis treatment, red blood cells that are not hemolyzed may be present.

Gating is performed using a part of the blood sample prepared by the above-mentioned hemolysis treatment. The gating may be appropriately set by those skilled in the art to make it possible to sort the target cells (e.g., T cells). For gating, scattered light and fluorescent light generated by light irradiation into cells in the sample may be used.

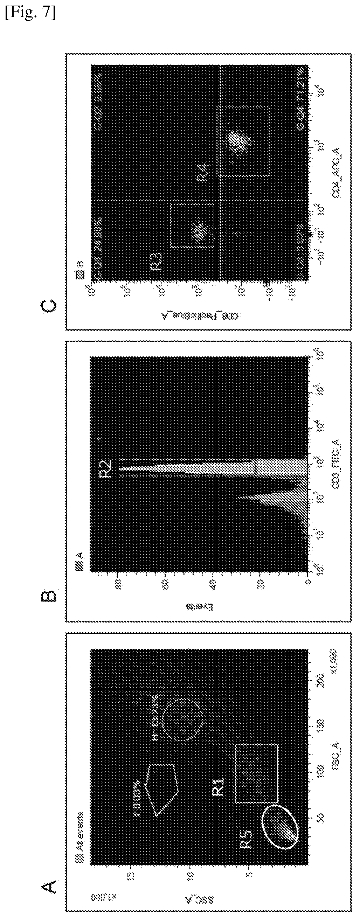

An example of gating will be described below with reference to Fig. 7. This example is an example of gating to selectively collect killer T cells and helper T cells from a blood sample.

The above-mentioned blood sample is caused to flow into the fine-particle sorting microchip 150 of the fine-particle sorting apparatus 100 as described in the (2) above, and light generated by light irradiation into each particle in the blood sample is detected by the light irradiation unit 101 and the detection unit 102.

Using the data relating to the detected light, a two-dimensional plot (dot plot) of forward scattered light (FSC) and side scattered light (SSC) is generated as shown in, for example, Fig. 7A. For the generated two-dimensional plot, gates R1 and R5 are set. The gate R1 is the gate for lymphocytes and the gate R5 is the gate for red blood cells. The gate R5 may include not only red blood cells but also, for example, cell debris or foam.

When the gate R1 is developed into a histogram based on CD3, a histogram as shown in, for example, Fig. 7B is obtained. For the histogram, a gate R2 is set. The gate R2 is the gate for CD3-positive cells, i.e., T cells.

Developing the gate R2 into a two-dimensional plot based on CD4 and CD8 results in a two-dimensional plot as shown in, for example, Fig. 7C. A gate R3 and a gate R4 are set for the two-dimensional plot. The gate R3 is the gate for CD8-positive and CD4-negative cells, i.e., killer T cells. The gate R4 is the gate for CD8-negative and CD4-positive cells, i.e., helper T cells.

By the gating as described above, the group of cells contained in the blood sample is divided into the following cell populations.
Cell population 0: cells other than the following cell populations 1-3
Cell population 1: cells (killer T cells) that belong to the gates R1, R2, and R3
Cell population 2: cells (helper T cells) that belong to the gates R1, R2, and R4
Cell population 3: cells (red blood cells) that belong to the gate R5

By sorting the cell population 1 and the cell population 2 by the gating as described above, a cell population containing killer T cells and helper T cells at a higher content is obtained. A case where cells that belong to one of the cell populations 1 and 2 from the blood sample are sorted will be described.

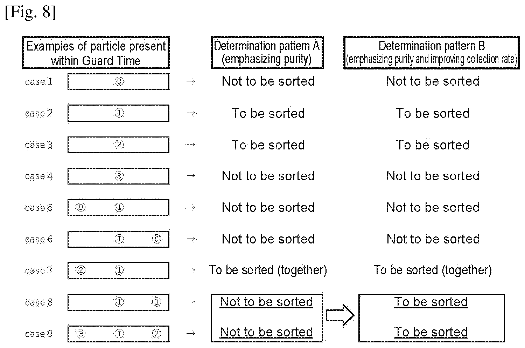

Fig. 8 is a diagram showing an example of a sorting determination pattern according to the presence or absence of a cell that is a sorting-determination target and a cell (particularly, cell flowing in front of or behind the cell) within a predetermined range around the cell (i.e., within the guard time).

Cases 1 to 9 are shown in "Examples of particle present within Guard Time" on the left of Fig. 8. For these cases, the circled numbers in the center within the guard time indicate the cells that are sorting-determination targets. The numbers respectively correspond to the numbers assigned to the cell populations described above. Further, the direction of the guard time from left to right in the drawing is the traveling direction of the particles that are sorting-determination targets in the merging flow path 155.

In Fig. 8, the determination pattern A is a determination pattern for determining that even if a particle to be sorted is a target cell, the particle that is a sorting-determination target is not to be sorted in the case where a different particle is present within the guard time around the cell. In other words, the determination pattern A is a determination pattern in which the purity of the target cells is emphasized. In Fig. 8, the determination pattern B is a determination pattern for improving the collection rate of the target cells while maintaining the purity of the target cells in the determination pattern A as much as possible. Regarding details of the determination patterns, the determination pattern A will be described first, and then the determination pattern B will be described below.

In the case 1 of the determination pattern A, since the particle that is a sorting-determination target belongs to the cell population 0 and no other cell is present within the guard time, the determination unit 105 determines that the particle is not to be sorted.

In the cases 2 and 3, since the particle to be sorted belongs to the cell population 1 or 2 (i.e., killer T cell or helper T cell) and no other particle is present within the guard time, the determination unit 105 determines that the particle is to be sorted.

In the case 4, since the particle that is a sorting-determination target belongs to the cell population 3 (i.e., red blood cell) and no other particle is present within the guard time, the determination unit 105 determines that the particle is not to be sorted.

In the case 5, the particle that is a sorting-determination target belongs to the cell population 1, but a particle that belongs to the cell population 0 is present within the guard time (behind the cell that is a sorting-determination target). The particle that is a sorting-determination target is the target cell, but when the particle is collected, the particle that belongs to the cell population 0 is also collected together. When the particle that belongs to the cell population 0 is collected, the purity of the target cells decreases. For this reason, in the case 5, the determination unit 105 determines that the particle that is a sorting-determination target is not to be sorted.

In the case 6, the particle that is a sorting-determination target belongs to the cell population 1, but a particle that belongs to the cell population 0 is present within the guard time (in front of the cell that is a sorting-determination target). The particle that is a sorting-determination target is the target cell, but when the particle is collected, the particle that belongs to the cell population 0 is also collected together. For this reason, in the case 6, the determination unit 105 determines that the particle that is a sorting-determination target is not to be sorted, similarly to the case 5.

In the case 7, the particle that is a sorting-determination target belongs to the cell population 1 and a particle that belongs to the cell population 2 is present within the guard time (behind the cell that is a sorting-determination target). The particle that is a sorting-determination target is the target cell, and when the particle is collected, the particle that belongs to the cell population 2 is also collected together. The particle that belongs to the cell population 2 is the target cell and is favorably collected. For this reason, in the case 7, the determination unit 105 determines that the particle that is a sorting-determination target is to be sorted.

In the case 8, the particle that is a sorting-determination target belongs to the cell population 1 and a particle (particularly, red blood cell) that belongs to the cell population 3 is present within the guard time (in front of the cell that is a sorting-determination target). The particle that is a sorting-determination target is the target cell, and when the cell is collected, the cell that belongs to the cell population 3 is also collected together. Since the particle that belongs to the cell population 3 is not the target cell, when the particle is collected, the purity of the target cells decreases. For this reason, in the case 8, the determination unit 105 determines that the particle that is a sorting-determination target is not to be sorted.

In the case 9, the particle that is a sorting-determination target belongs to the cell population 1 and the particle that belongs to the cell population 2 and the particle that belongs to the cell population 3 are present in front of and behind the particle that is a sorting-determination target within the guard time, respectively. The particle that is a sorting-determination target is the target cell, and when the particle is collected, the particle that belongs to the cell population 2 and the particle that belongs to the cell population 3 are also collected together. Since the particle that belongs to the cell population 2 is the target cell but the particle that belongs to the cell population 3 is not the target cell, the purity of the target cells decreases when the particle that belongs to the cell population 3 is collected. For this reason, in the case 9, the determination unit 105 determines that the particle that is a sorting-determination target is not to be sorted.

As described above, in the determination pattern A, in order to increase the purity of the target cells, the determination unit 105 determines that the particle that is a sorting-determination target is not to be sorted in the cases 8 and 9. However, as described above, in the case where the particle that belongs to the cell population 3 is allowed to be collected together with the target cell, e.g., in the case where the particle that belongs to the cell population 3 does not affect the process after the sorting operation, it is favorable to determine that the particle is determined to be sorted also in the cases 8 and 9 in order to increase the collection rate of the target cells. Such a determination pattern is the determination pattern B shown in Fig. 8. In the determination pattern B, specifically, the following determination may be made.

Regarding the cases 1 to 7, sorting determination is performed in the determination pattern B similarly to the determination pattern A.

Regarding the case 8, the particle that is a sorting-determination target is the target cell, and when the particle is collected, the particle that belongs to the cell population 3 is also collected together. The particle that belongs to the cell population 3 is not the target cell, but is allowed to be collected together with the target cell. For this reason, in the case 8, the determination unit 105 determines that the particle that is a sorting-determination target is to be sorted.

Regarding the case 9, the particle that is a sorting-determination target is the target cell, and when the particle is collected, the particle that belongs to the cell population 2 and the particle that belongs to the cell population 3 are also collected together. The particle that belongs to the cell population 2 is the target cell and is favorably collected together. The particle that belongs to the cell population 3 is not the target cell but is allowed to be collected. For this reason, in the case 9, the determination unit 105 determines that the particle that is a sorting-determination target is to be sorted.

The determination patterns A and B in Fig. 8 can be realized by performing sorting determination using rule data defining, in accordance with a particle population to which a particle that is a sorting-determination target belongs and a particle population to which a different particle within a predetermined range around the particle belongs , a relationship between the particles. More specifically, in accordance with the present disclosure, the determination unit may perform the determination using rule data defining, in accordance with a particle population to which a particle that is a sorting-determination target belongs and a particle population to which a different particle within a predetermined range around the particle belongs , a relationship between the particles, particle populations to which the particle that is a sorting-determination target and the different particle within the predetermined range may belong including the following particle populations of
(a) a particle population of particles to be sorted,
(b) a particle population of particles that are not to be sorted but are ignorable in the determination, and
(c) a particle population of particles that are neither the particles to be sorted nor the ignorable particles.

Here, the relationship may be, for example, a path in which the different particle should travel, which is specified on the basis of the particle population to which the particle that is a sorting-determination target belong and the particle population to which the different particle belongs.

For example, by setting the cell populations 1 and 2 described above as the particle population (a), setting the cell population 3 as the particle population (b), and setting the cell population 0 as the particle population (c), both of the determination patterns described above in Fig. 8 can be realized.

### (3-2) Example of determination process flow (determination pattern that emphasizes purity and increases collection rate)

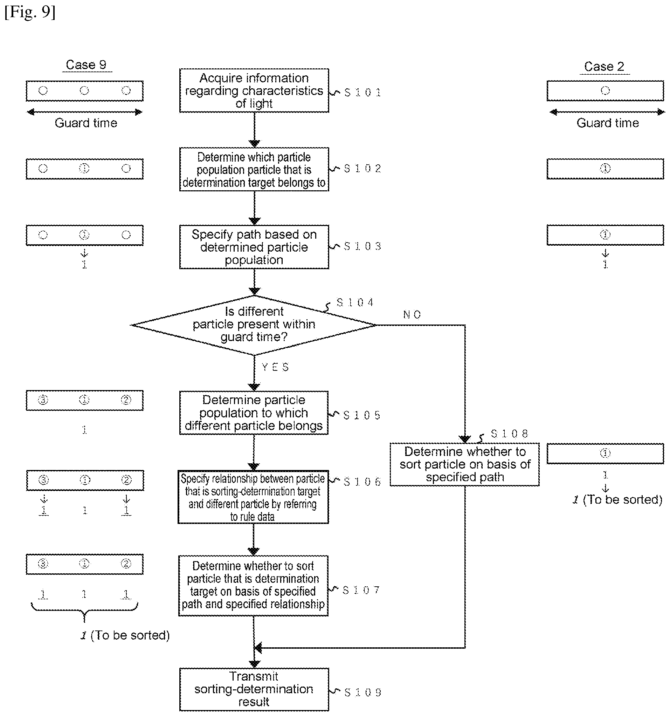

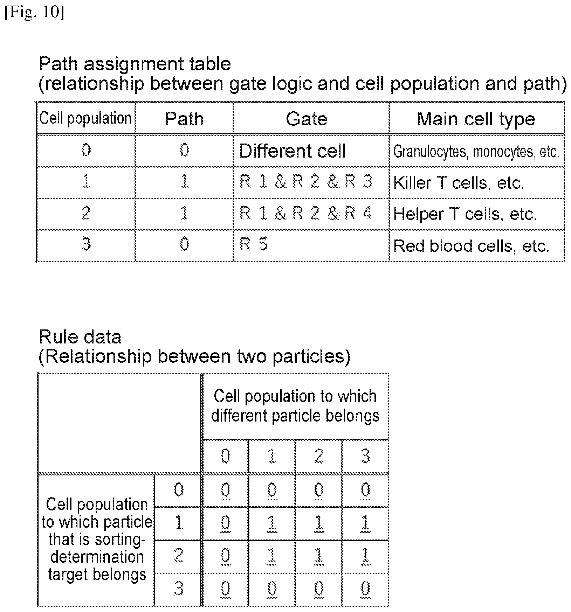

A specific example of a sorting determination process performed by the determination unit 105 for realizing the sorting determination pattern B described with reference to Fig. 8 will be described with reference to Figs. 9 and 10. Fig. 9 shows an example of a flowchart of the sorting determination processing. Fig. 9 also shows a schematic diagram for describing sorting determination according to the flow in the case 2 and the case 9 described above. Fig. 10 shows examples of a path assignment table and rule data used in the determination process.

In Step S101 of Fig. 9, the determination unit 105 obtains information regarding the characteristics of the light generated by the light irradiation into the particle that is a sorting-determination target. Information regarding the characteristics of the light may be, for example, those generated by the signal processing unit 104 as described above.

In Step S102, the determination unit 105 determines which particle population a particle belongs to on the basis of light generated by irradiating the particle flowing in a flow path with light. In particular, the determination unit 105 determines, on the basis of the information regarding the characteristics of the light acquired in Step S101, a particle population to which a particle that is a sorting-determination target belongs.

Specifically, the determination unit 105 determines, on the basis of the information, which of the cell populations 0, 1, 2, and 3 the particle belongs to.

For example, regarding the case 2, as shown in Fig. 9, the determination unit 105 determines that the particle that is a sorting-determination target belongs to the cell population 1.

Further, regarding also the case 9, as shown in Fig. 9, the determination unit 105 determines that the particle that is a sorting-determination target belongs to the cell population 1.

In Step S103, the determination unit 105 specifies the path of the particle that is a sorting-determination target on the basis of the particle population determined in Step S102. For the specification, the determination unit 105 may refer to, for example, path assignment data in which a particle population and a path through which a particle that belongs to the particle population should travel are associated with each other. For example, the path assignment data may be data defining, in accordance with the type of the particle population, whether the path through which the particle that belongs to the particle population should travel is the path through which the particle to be sorted travels or the path through which a particle that is not a sorting target travels. The path assignment data may be, for example, a path assignment table as shown in Fig. 10.

In Step S103, specifically, in the case where the particle belongs to the cell population 1 or 2, the path of the particle is identified as the fine-particle collecting flow path 159. Further, in the case where the particle belongs to the cell population 0 or 3, the path of the particle is specified as the branch flow path 158. The paths may be coded, for example, and a code assigned to each path may be given to the particle. For example, as shown in the "path assignment table" in Fig. 10, the particle that belongs to the cell population 1 or 2 is a particle to be sorted, and the fact that the path of the particle is the fine-particle collecting flow path 159 may be represented by "1". In addition, the particle that belongs to the cell population 0 or 3 is a particle that is not a sorting target, and the fact that the path of the particle is the branch flow path 158 may be represented by "0". In the case where the path is encoded as described above, the determination unit 105 assigns a code of "1" or "0" to the respective particles on the basis of the type of the cell population determined in Step S102.

For example, regarding the Case 2, since the particle that is a sorting-determination target belongs to the cell population 1, as shown in Fig. 9, the determination unit 105 assigns the path 1 to the particle by referring to the path assignment table in Fig. 10. Regarding also the case 9, since the particle that is a sorting-determination target belongs to the cell population 1, as shown in Fig. 9, the determination unit 105 assigns the path 1 to the particle that is a sorting-determination target by referring to the path assignment table in Fig. 10.

In Step S104, the determination unit 105 determines whether or not a different particles is present within a predetermined range around the particle that is a sorting-determination target (i.e., within the guard time).

Specifically, the determination unit 105 determines whether a different particle is present within a predetermined range in front of or behind the particle to be processed in Steps S101 to 103 in the traveling direction thereof. The determination may be made on the basis of the time at which the light generated by the light irradiation into the particle that is a sorting-determination target has been detected and the time at which the light generated by the light irradiation into the particle flowing in front of and/or behind the particle has been detected. For example, in the case where the absolute value of the difference between these times is less than or equal to a predetermined value, the determination unit 105 determines that a different particle is present. In the case where the absolute value is greater than the predetermined value, the determination unit 105 determines that no other particle is present.

In Step S104, in the case where the determination unit 105 determines that a different particle is present within a predetermined range around the particle that is a sorting-determination target, the process proceeds to Step S105. In the case where the determination unit 105 determines that no other particle is present within the predetermined range around the particle that is a sorting-determination target, the process proceeds to Step S109.

For example, regarding the case 2, since no other particle is present in the predetermined range around the particle that is a sorting-determination target, the determination unit 105 advances the process to Step S109.

Further, regarding the case 9, since a different particle is present within the predetermined range around the particle that is a sorting-determination target, the determination unit 105 advances the process to Step S105.

As described above, in a favorable embodiment of the present disclosure, the determination unit determines whether or not a different particle is present within the predetermined range around the particle that is a sorting-determination target. In the case where the determination unit determines that a different particle is present within the predetermined range, the determination using rule data may be made. As a result, it is possible to perform the determination using the rule data only when necessary, and reduce unnecessary processes.

In addition, in the flow in this example, the presence determination step (Step S104) of determining whether or not the different particle is present within the predetermined range is performed after the specification steps (Steps S101 to S103) of specifying the path of the particle that is a sorting-determination target. However, the presence determination step may be performed first, and then the specification steps may be performed in the determination process according to the first embodiment of the present disclosure.

In Step S105, the determination unit 105 determines a particle population to which a different particle that is present within the predetermined range belongs. The determination may be made in the same manner as Step S101 and S102 described above.

For example, in the case 9, the determination unit 105 determines that the particle that is present in front of the particle that is a sorting-determination target belongs to the cell population 2 and that the particle that is present behind the particle that is a sorting-determination target belongs to the cell population 3

In Step S106, the determination unit 105 specifies the relationship between the particle that is a sorting-determination target and the different particle by referring to the rule data according to the particle population to which the particle that is a sorting-determination target (i.e. the particle to be processed in Steps S101 to S103) belongs and the particle population to which the different particle (i.e. the particle to be processed in Step S105) within the predetermined range around the particle belongs, in which the relationship (more specifically, the path of the different particle based on the relationship of these particles) between these particles is defined.

An example of the rule data is shown in Fig. 10. In the rule data shown in Fig. 10, a value of 0 or 1 is specified in accordance with the type of the cell population to which the particle that is a sorting-determination target belongs and the type of the cell population to which the different particle belongs (shown as 0 or 1 underlined in Fig. 10). For example, in the case where the cell population to which the particle that is a sorting-determination target belongs is 1 or 2 (i.e. in the case of the particle to be sorted) and the cell population to which the different particle belongs is 1, 2, or 3, the determination unit 105 may specify the relationship between the particle that is a sorting-determination target and the different particle as "1", and may specify the relationship between the two particles as "0" in other cases. "1" means that the path of the different particle is a flow path through which the particle to be sorted travels (the fine-particle collecting flow path 159), and "0" means that the path of the different particle is a flow path through which the particle that is not a sorting target travels (the branch flow path 158).

That is, the rule data defines that, in the case where the particle that is a sorting-determination target belongs to the particle population (a) (cell population 1 or 2 in this example) of the particles to be sorted and the different particle within the predetermined range around the particle belongs to the particle population (b) (cell population 3 in this example) of the ignorable particles, the path of the different particle is the path of the particle to be sorted (relationship 1 in this example). By means of the rule data thus defined, it is possible to allow, in the case where, for example, an ignorable particle such as a red blood cell is present within the above-mentioned predetermined range, the particle to be collected together with the target particle. As a result, it is possible to perform sorting determination so that the purity of the target particles is emphasized and the collection rate is improved.

Further, the rule data defines that, in the case where the particle that is a sorting-determination target belongs to the particle population (1) (cell population 1 or 2 in this example) of the particles to be sorted and the different particle within the predetermined range around the particle belongs to the particle population (a) of the particles to be sorted, the path of the different particle is the path of the particle to be sorted (relationship 1 in this example). By means of the rule data thus defined, in the case where both the particle that is a sorting-determination target and the different particle within the predetermined range are the target particles, these particles can be collected together.

Further, the rule data defines that, in the case where the particle that is a sorting-determination target belongs to the particle population (a) (cell population 1 or 2 in this example) of the particles to be sorted and the different particle within the predetermined range around the particle belongs to the particle population (c) (cell population 0 in this example) of the particles that are neither the particles to be sorted nor the ignorable particles, the path of the different particle is the path of the particle that is not a sorting target (relationship 0 in this example). By means of the rule data thus defined, it is possible to prevent particles that are not to be collected from being collected together with the target particles.

The rule data defines that, in the case where the particle that is a sorting-determination target belongs to the particle population (b) of the ignorable particles (cell population 3 in this example), the path of the different particle the path of the particle that is not a sorting target (relationship 0 in this example) even if the different particle within the predetermined range around the particle belongs to one of the particle populations (a) to (c).

In addition, the rule data defines that also in the case where the particle that is a sorting-determination target belongs to the particle population (cell population 0 in this example) of the particles that are neither the particles to be sorted nor the ignorable particles, the path of the different particle is defined as the path of the particle that is not a sorting target (relationship 0 in this example) even if the different particle within the predetermined range around the particle belongs to one of the particle populations (a) to (c).

By the rule data thus defined, the purity of the target particles can be increased.

For example, regarding the case 9, the cell population to which the particle that is a sorting-determination target belongs is "1" and the cell population to which the particle that is present in front of the particle is "2". For this reason, the determination unit 105 refers to the rule data and assigns "1" (underlined in Fig. 10) as the path of the particle that is present in front of the particle as shown in Fig. 10.

In addition, the cell population to which the particle that is a sorting-determination target belongs is "1" and the cell population to which the particle that is present behind the particle belongs is "3". For this reason, the determination unit 105 refers to the rule data and assigns "1" (underlined in Fig. 10) as the path of the particle that is present behind the particle as shown in Fig. 10.

In Step S107, the determination unit 105 finally determines whether to sort the particle that is a sorting-determination target on the basis of the path of the particle that is a sorting-determination target specified in Step S103 and the relationship specified in Step S106 (i.e., the path of the different particle based on the relationship between the two particles).

More specifically, the determination unit 105 finally determines that, in the case where the path of the particle that is a sorting-determination target is a path through which the particle to be sorted travels (the fine-particle collecting flow path 159) and the path of the different particle is also the path through which the particle to be sorted travels, the particle that is a sorting-determination target is to be sorted. Further, the determination unit 105 finally determines that, in the case where the path of the particle that is a sorting-determination target is a flow path through which the particle to be sorted travels but the path of the different particle (if two or more different particles are present, at least one of the paths of at the different particles) is the flow path through which the particle that is not a sorting target travels (the branch flow path 158), the particle that is a sorting-determination target is not to be sorted. Further, the determination unit 105 determines that, in the case where the path of the particle that is a sorting-determination target is a flow path through which the particle that is not a sorting target travels, the particle that is the sorting-determination target is not to be sorted even if the path of the different particle is any flow path.

In this way, by finally determining the path of the particle that is a sorting-determination target by considering the path assignment result according to the rule data, it is possible to perform a sorting determination process according to the type of the particle that is a sorting-determination target and the type of the different particle, and allow ignorable particles such as red blood cells to be collected.

For example, the determination unit 105 determines that, in the case where the path of the particle that is a sorting-determination target specified in Step S103 is "1" and all of the relationships (particularly, paths of the different particles) specified in Step S106 are "1", the particle that is a sorting-determination target is to be sorted. In other cases (e.g., in the case where the path of the particle that is a sorting-determination target is "0" and in the case where one or more of the relationships is "0"), the determination unit 105 determines that the particle that is a sorting-determination target is not to be sorted. This determination makes it possible to prevent non-target cells from being collected with the target cells.

For example, regarding the case 9, the path of the particle that is a sorting-determination target specified in Step S103 is "1" and the relationships specified in Step S106 are all "1". For this reason, in Step S107, the determination unit 105 determines that the particle that is a sorting-determination target is to be sorted.

Step S108 is an example of a process performed by the determination unit 105 in the case where no other particle is present within the guard time. In Step S108, the determination unit 105 determines whether to sort the particle that is a sorting-determination target on the basis of the path identified in Step S103. For example, the determination unit 105 determines that, in the case where the path of the particle that is a sorting-determination target in Step S103 is specified as "1", the particle is not to be sorted, and determines that, in the case where the path of the particle is specified as "0", the particle is not to be sorted.

In Step S109, the determination unit 105 transmits the determination result obtained in Step S107 or S108 to the sorting control unit 106. For example, in the case where the sorting control unit 106 receives the determination result that the particle that is a sorting-determination target is to be sorted, the sorting control unit 106 drives the fine-particle sorting apparatus to execute the collection step S3 on the particle. In the case where the sorting control unit 106 receives the determination result that the particle that is a sorting-determination target is not to be sorted, the sorting control unit 106 controls the fine-particle sorting apparatus not to execute the collection step S3 on the particle.

The determination unit 105 performs the sorting determination process described above for each of the particles that are sorting-determination targets.

By means of the rule data used in the sorting determination process described above, when the particle that is a sorting-determination target is a particle that belongs to the particle population (a), it is possible to determine that the particle that is a sorting-determination target is to be sorted even if the different particle around the particle that is a sorting-determination target belongs to the particle population (b) of the ignorable particles. More specifically, the determination as described above is possible because the rule data defines, in the case where the particle that is a sorting-determination target belongs to the cell population 1 or 2 and the different particle belongs to the cell population 3, the relationship as "1". As a result, it is possible to increase the collection rate of the target particles while maintaining the purity of the target particles.

Further, the above-mentioned rule data may be multi-dimensional data as shown in Fig. 10, and may be, for example, two-dimensional matrix data or three-dimensional matrix data. The multi-dimensional data makes it possible to define the relationship between a particle population to which a particle that is a sorting-determination target belongs and a particle population to which a different particle belongs. For example, two-dimensional matrix data may be used if the number of types of the different particle is one, and one of two-dimensional matrix data and three-dimensional matrix data may be employed if the number of types of the different particle is two.

### (3-3) Realization of various sorting determination patterns by changing rule data

In the present disclosure, the determination unit may be configured to be capable of changing the rule data used in the determination. As a result, by changing the rule data used in the determination process flow, it is possible to realize various determination patterns such as a determination pattern for increasing the collection rate of the target cells and a determination pattern for increasing the purity of the target cells, for example. As a result, various needs of the device user can be met.

Further, the fine-particle sorting apparatus according to the first embodiment of the present disclosure may include, in accordance with a particle population to which a particle that is a sorting-determination target belongs and a particle population to which a different particle within a predetermined range around the particle belongs, a plurality of pieces of rule data , a relationship between the particles. The plurality of pieces of rule data may be stored in, for example, the control unit of the fine-particle sorting apparatus. The plurality of pieces of rule data may be stored in a recording medium. The recording medium may be in the fine-particle sorting apparatus or may be external to the device. The control unit may acquire the rule data stored in the recording medium, and the rule data may be used in the particle-sorting determination.

Further, the fine-particle sorting apparatus according to the first embodiment of the present disclosure may further include a rule-data generating unit that generates the rule data. The rule-data generating unit may be included in the control unit 103 described above, for example. For example, the rule data may be generated on the basis of the particle population specified by gating and the assignment of each particle population of to the (a) to (c) above. In order to enable such rule data generation, favorably, the fine-particle sorting apparatus may further include an input unit that receives a gating operation for setting the particle populations to which the particle that is a sorting-determination target and the different particle within the predetermined range may belong. The configuration of the input unit may be appropriately set by those skilled in the art, and may be as described above, for example. Such an input unit may include, for example, an input device (e.g., a mouse, a touch pad, or a key board) capable of setting a gate, and the input device may be used in conjunction with a display device that displays the gate to be set.

The fact that various sorting determination patterns can be realized by changing the rule data will be described regarding the cases 1 to 9 described in the (3-1) above. Note that the gating of the cell population employed in the following sorting determination pattern is the same as that described in the (3-1) above.

### (3-3-1) Example of sorting determination process prioritizing purity of target cells

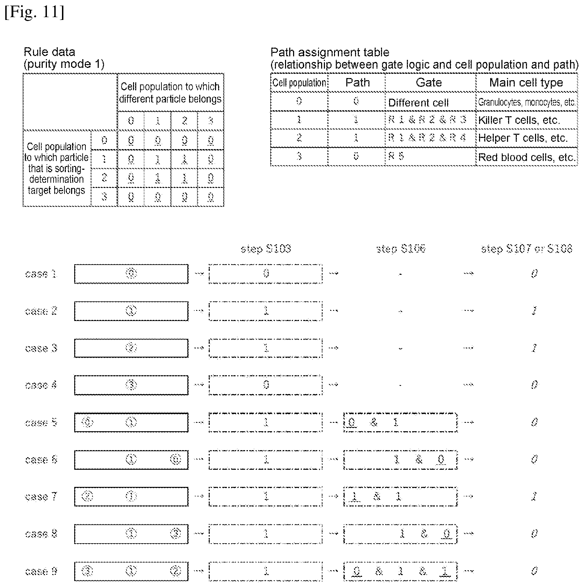

Fig. 11 shows an example of rule data used in sorting determination that emphasizes the purity of target cells, and an example of the sorting determination result in the case where sorting determination is performed using the rule data.

Note that the sorting determination result is the same as that described above with reference to Fig. 8.

Rule data is shown in the upper left of Fig. 11. The rule data defines that, in the case where the particle that is a sorting-determination target belongs to the cell population 1 or 2 and the different particle around the particle that is a sorting-determination target also belongs to the cell population 1 or 2, the path of the different particle is a flow path through which the particle to be sorted travels (indicated by the underlined number 1 in the rule data table). Further, the rule data defines that, in other cases, the path of the different particle is a flow path through which the particle that is not a sorting target travels (indicated by the underlined number 0 in the table). The path assignment table shown in the upper right of Fig. 11 is the same as that described in Fig. 10.

The lower part of Fig. 11 shows the sorting determination results in the cases 1 to 9. The sorting determination process in the cases 1 to 9 will be described below.

### (Regarding cases 1 to 4)

In the cases 1 to 4, since no other particle is present within a predetermined range (guard time) around the particle that is a sorting-determination target, in Step S104, the determination unit 105 advances the process to Step S109. Therefore, in Step S109 the determination unit 105 determines, on the basis of the path specified by the determination unit 105 in Steps S101 to S103, whether to sort the particle that is a sorting-determination target.

For example, in the cases 1 and 4, as shown in Fig. 11, in Step S103, the determination unit 105 assigns "0" as the path of the particle that is a sorting-determination target, i.e., the determination unit 105 specifies the path of the particle as the branch flow path 158. In Step S109, the determination unit 105 determines, on the basis of the fact that "0" is assigned to the path of the particle that is a sorting-determination target, the particles is not to be sorted. For example, the determination unit 105 assigns "0" (shown in italics in Fig. 11) indicating that the particle is not to be sorted to the particle that is a sorting-determination target, as a sorting determination result.

In the cases 2 and 3, as shown in Fig. 11, in Step S103, the determination unit 105 assigns "1" as the path of the particle that is a sorting-determination target, i.e., the determination unit 105 specifies the path of the particle as the fine-particle collecting flow path 159. In Step S109, the determination unit 105 determines, on the basis of the fact that "1" is assigned to the path of the particle that is a sorting-determination target, that the particle is to be sorted. For example, the determination unit 105 assigns "1" (described in italics in Fig. 11) indicating that the particle is to be sorted to the particle that is a sorting-determination target.

### (Regarding cases 5 to 9)

In the cases 5 to 9, since a different particle is present within a predetermined range (guard time) around the particle that is a sorting-determination target unlike the cases 1 to 4, in Step S104, the determination unit 105 advances the process to Step S105. Each case will be described below.

Regarding the case 5, in Step S103, the determination unit 105 assigns "1" as the path of the particle that is a sorting-determination target, i.e., the determination unit 105 specifies the path of the particle that is a sorting-determination target as the fine-particle collecting flow path 159.

Next, in Step S105, the determination unit 105 specifies that the different particle that is present behind the particle that is a sorting-determination target belongs to the cell population 0.

Next, in Step S106, the determination unit 105 refers to the rule data and specifies the relationship between the particle that is a sorting-determination target and the different particle. Since the particle that is a sorting-determination target belongs to the cell population 1 and the different particle belongs to the cell population 0, the determination unit 105 specifies "0" (underlined in Fig. 11) as the relationship between these particles, and specifies that the path of the different particle is a flow path through which the particle that is not a sorting target travels (the branch flow path 158).

Next, in Step S107, the determination unit 105 determines, on the basis of the path specified in Step S103 and the relationship specified in Step S106, whether to sort the particle that is a sorting-determination target. Although the path specified in Step S103 is "1", not all values are "1" because the relationship specified in Step S106 is "0". Since all the values are not "1", the determination unit 105 determines that the particle that is a sorting-determination target is not to be sorted. For example, the determination unit 105 assigns "0" (shown in italics in Fig. 11) indicating that the particle is not to be sorted to the particle that is a sorting-determination target, as a sorting determination result.

Next, in Step S109, the determination unit 105 transmits the sorting determination result obtained in Step S107 to the sorting control unit 106.

Regarding the case 6, in Step S103, the determination unit 105 assigns "1" as the path of the particle that is a sorting-determination target, i.e., the determination unit 105 specifies the path of the particle as the fine-particle collecting flow path 159.

Next, in Step S105, the determination unit 105 specifies that the different particle that is present in front of the particle that is a sorting-determination target belongs to the cell population 0

Next, in Step S106, the determination unit 105 refers to the rule data and specifies the relationship between the particle that is a sorting-determination target and the different particle. Similarly to the case 5, the determination unit 105 specifies "0" (underlined in Fig. 11) as the relationship between these particles, i.e., the determination unit 105 specifies the path of the different particle as the flow path through which the particle that is not a sorting target travels (the branch flow path 158).

Next, in Step S107, the determination unit 105 determines, on the basis of the path specified in Step S103 and the relationship specified in Step S106, whether to sort the particle that is a sorting-determination target. Specifically, the determination unit 105 determines that the particle that is a sorting-determination target is not to be sorted, similarly to the case 5.

Next, in Step S109, the determination unit 105 transmits the sorting determination result obtained in Step S107 to the sorting control unit 106.

Regarding the case 7, in Step S103, the determination unit 105 assigns "1" as the path of the particle that is a sorting-determination target, i.e., the determination unit 105 specifies the path of the particle as the fine-particle collecting flow path 159.

Next, in Step S105, the determination unit 105 specifies that different particle that is present behind the particle that is a sorting-determination target belongs to the cell population 2.

Next, in Step S106, the determination unit 105 refers to the rule data and specifies the relationship between the particle that is a sorting-determination target and the different particle. Since the particle that is a sorting-determination target belongs to the cell population 1 and the different particle belongs to the cell population 2, the determination unit 105 specifies "1" (underlined in Fig. 11) as the relationship between the particles, i.e., the determination unit 105 specifies that the path of the different particle is a flow path through which the particle to be sorted travels (the fine-particle collecting flow path 159).

Next, in Step S107, the determination unit 105 determines, on the basis of the path specified in Step S103 and the relationship specified in Step S106, whether to sort the particle that is a sorting-determination target. The path specified in Step S103 is "1", the relationship specified in Step S106 is "1", and thus, all values are 1. Since all the values are 1, the determination unit 105 determines that the particle that is a sorting-determination target is to be sorted. For example, the determination unit 105 assigns "1" (shown in italics in Fig. 11) indicating that the particle is to be sorted to the particle that is a sorting-determination target, as a sorting determination result.

Next, in Step S109, the determination unit 105 transmits the sorting determination result obtained in Step S107 to the sorting control unit 106.

Regarding the case 8, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present in front of the particle that is a sorting-determination target belongs to the cell population 3.

Next, in Step S106, the determination unit 105 refers to the rule data and specifies the relationship between the particle that is a sorting-determination target and the different particle. Since the particle that is a sorting-determination target belongs to the cell population 1 and the different particle belongs to the cell population 3, the determination unit 105 specifies "0" (underlined in Fig. 11) as the relationship between the particles, i.e. the determination unit 105 specifies that the path of the different particle is a flow path through which the particle that is not a sorting target travels (the branch flow path 158).

Next, in Step S107, the determination unit 105 determines, on the basis of the path specified in Step S103 and the relationship specified in Step S106, whether to sort the particle that is a sorting-determination target. Specifically, although the path specified in Step S103 is "1", not all values are "1" because the relationship specified in Step S106 is "0". Since all the values are not "1", the determination unit 105 determines that the particle that is a sorting-determination target is not to be sorted. For example, the determination unit 105 assigns "0" (shown in italics in Fig. 11) indicating that the particle is not to be sorted to the particle that is a sorting-determination target, as sorting determination result.

Next, in Step S109, the determination unit 105 transmits the sorting determination result obtained in Step S107 to the sorting control unit 106.

Regarding the case 9, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present behind the particle that is a sorting-determination target belongs to the cell population 3 and specifies that the different particle that is present in front of the particle that is a sorting-determination target belongs to the cell population 2.

Next, in Step S106, the determination unit 105 refers to the rule data and specifies the relationships between the particle that is a sorting-determination target and each of the two different particles. Since the particle that is a sorting-determination target belongs to the cell population 1 and the different particle that is present behind the particle belongs to the cell population 3, the determination unit 105 specifies "0" (underlined in Fig. 11) as the relationship between the particles, i.e., the determination unit 105 specifies that the path of the different particle that is present behind the particle is a flow path through which the particle that is not a sorting target travels (the branch flow path 158). Further, since the particle that is a sorting-determination target belongs to the cell population 1 and the different particle that is present in front of the particle belongs to the cell population 2, the determination unit 105 specifies "1" (underlined in Fig. 11) as the relationship between the particles, i.e., the determination unit 105 specifies that the path of the different particle that is present in front the particle is a path through which the particle to be sorted travels (the fine-particle collecting flow path 159).

Next, in Step S107, the determination unit 105 determines, on the basis of the path specified in Step S103 and the relationship specified in Step S106, whether to sort the particle that is a sorting-determination target. More specifically, although the path specified in Step S103 is "1" and the relationship between the particle that is a sorting-determination target specified in Step S106 and the different particle that is present in front of the particle is "1", the relationship between the particle that is a sorting-determination target and the different particle that is present in front of or behind the particle is "0". Therefore, since not all the values are 1, the determination unit 105 determines that the particle that is a sorting-determination target is not to be sorted. For example, the determination unit 105 assigns "0" (shown in italics in Fig. 11) indicating that the particle is not to be sorted to the particle that is a sorting-determination target, as sorting determination result.

Next, in StepS 109, the determination unit 105 transmits the sorting determination result obtained in Step S107 to the sorting control unit 106.

As described above, the rule data shown in Fig. 11 enables the sorting determination that emphasizes the purity of the target cells.

Note that the rule data shown in Fig. 11 can be said to define as follows.

The rule data defines that, in the case where the particle that is a sorting-determination target belongs to the particle population (a) (cell population 1 or 2 in this example) of the particles to be sorted and the different particle within a predetermined range around the particle belongs to the particle population (a) of the particles to be sorted, the path of the different particle is the path of the particle to be sorted (relationship 1 in this example). By means of the rule data thus defined, in the case where both the particle that is a sorting-determination target, and the different particle within the predetermined range are the target particles, these particles can be collected together.

The rule data defines that, in the case where the particle that is a sorting-determination target belongs to the particle population (a) (cell population 1 or 2 in this example) of the particles to be sorted and the different particle within a predetermined range around the particle belongs to the particle population (b) (cell population 3 in this example) of the ignorable particles, the path of the different particle is the path of the particle that is not a sorting target (relationship 0 in this example). By using the rule data thus defined, in the case where ignorable particles such as red blood cells are present within the predetermined range, it is possible to prevent the particles from being collected together with the target particles. As a result, it is possible to improve the purity of the target particles.

Further, the rule data defines that, in the case where the particle that is a sorting-determination target belongs to the particle population (a) (cell population 1 or 2 in this example) of the particles to be sorted and the different particle within a predetermined range around the particle belongs to the particle population (c) (cell population 0 in this example) of the particles that are neither the particles to be sorted nor the ignorable particles, the path of the different particle is the path of the particle that is not a sorting target (relationship 0 in this example). The rule data thus defined makes it possible to prevent particles that are not to be collected from being collected together with the target particles.

The rule data defines that, in the case where the particle that is a sorting-determination target belongs to the particle population (b) (cell population 3 in this example) of the ignorable particles, the path of the different particle is the path of the particle that is not a sorting target (relationship 0 in this example) even if the different particle within a predetermined range around the particle belongs to any of the particle populations (a) to (c).

Further, the rule data defines that, also in the case where the particle that is a sorting-determination target belongs to the particle population (c) (cell population 0 in this example) of the particles that are neither the particles to be sorted nor the ignorable particles, the path of the different particle is the path of the particle that is not a sorting target (relationship 0 in this example) even if the different particle within a predetermined range around the particle belongs to any of the particle populations (a) to (c). The rule data thus defined makes it possible to increase the purity of the target particles.

### (3-3-2)Another example of sorting determination process prioritizing purity of target cells

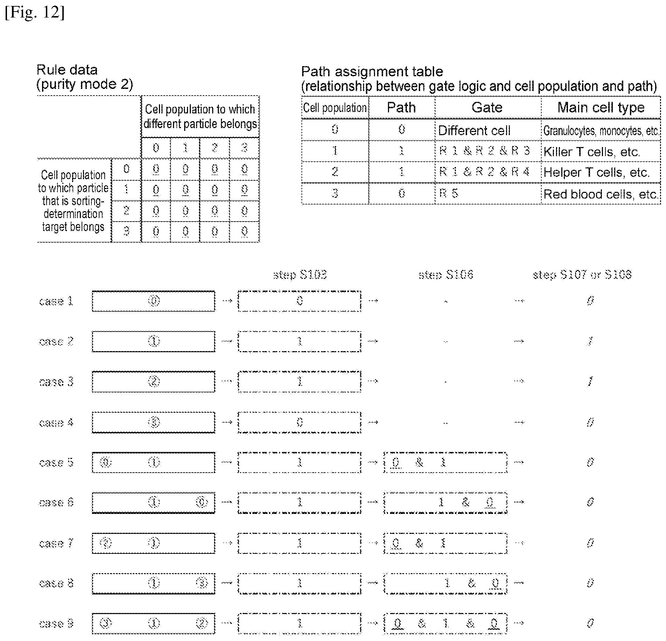

Fig. 12 shows another example of the rule data used in the sorting determination that emphasizes the purity of the target cells, and an example of the sorting determination result in the case where sorting determination is performed using the rule data. The rule data is rule data for determining that, in the case where a different particle is present within the guard time, the particle that is a sorting-determination target is not to be sorted.

Rule data is shown in the upper left of Fig. 12. The rule data defines that, regardless of which of the cell populations the particle that is a sorting-determination target belongs to, the path of the different particle is a flow path through which the particle that is not a sorting target travels (indicated by the underlined "0" in the table). That is, using this rule data, the determination unit 105 determines that, in the case where the different particle is present within the guard time, the particle that is a sorting-determination target is not to be sorted. The path assignment table shown in the upper right of Fig. 12 is the same as that described in Fig. 10.

The lower part of Fig. 12 shows the sorting determination results in the cases 1 to 9. The sorting determination process in the cases 1 to 9 will be described below.

### (Regarding cases 1 to 4)

In the cases 1 to 4, since the rule data is not referred to, the same sorting determination result as that described in the (3-3-1) above is obtained.

### (Regarding cases 5 to 9)

In the cases 5, 6, and 8, the rule data is referred to, but the relationship specified in Step S106 is the same as that described in the (3-3-1) above. For this reason, the same sorting determination result as described in the (3-3-1) above is obtained.

The cases 7 and 9 in which sorting determination results different from those described in the (3-3-1) above are obtained will be described below.

Regarding the case 8, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present behind the particle that is a sorting-determination target belongs to the cell population 2.

Next, in Step S106, the determination unit 105 refers to the rule data and specifies the relationship between the particle that is a sorting-determination target and the different particle. Since the particle that is a sorting-determination target belongs to the cell population 1 and the different particle belongs to the cell population 2, the determination unit 105 specifies "0" (underlined in Fig. 12) as the relationship between the particles, i.e. the determination unit 105 specifies that the path of the different particle is a flow path through which the particle that is not a sorting target travels (the branch flow path 158).

Next, in Step S107, the determination unit 105 determines, on the basis of the path specified in Step S103 and the relationship specified in Step S106, whether to sort the particle that is a sorting-determination target. Although the path specified in Step S103 is "1", not all values are "1" because the relationship specified in Step S106 is "0". Since all the values are not "1", the determination unit 105 determines that the particle that is a sorting-determination target is not to be sorted. For example, the determination unit 105 assigns "0" (shown in italics in Fig. 12) indicating that the particle is not to be sorted to the particle that is a sorting-determination target.

Next, in Step S109, the determination unit 105 transmits the sorting determination result obtained in Step S107 to the sorting control unit 106.

Regarding the case 9, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present behind the particle that is a sorting-determination target belongs to the cell population 3 and specifies that the different particle that is present in front of the particle that is a sorting-determination target belongs to the cell population 2.

Next, in Step S106, the determination unit 105 refers to the rule data and specifies the relationships between the particle that is a sorting-determination target and each of the two different particles. Since the particle that is a sorting-determination target belongs to the cell population 1 and the different particle that is present behind the particle belongs to the cell population 3, the determination unit 105 , specifies "0" (underlined in Fig. 12) as the relationship between the particles, i.e., the determination unit 105 specifies that the path of the different particle that is present behind the particle is a flow path through which the particle that is not a sorting target travels (the branch flow path 158). Further, since the particle that is a sorting-determination target belongs to the cell population 1 and the different particle that is present in front of the particle belongs to the cell population 2, the determination unit 105 specifies "0" (underlined in Fig. 12) as the relationship between the particles, i.e., the determination unit 105 specifies that the path of the different particle that is present in front of the particle is a flow path through which the particle that is not a sorting target travels (the branch flow path 158).

Next, in Step S107, the determination unit 105 determines, on the basis of the path specified in Step S103 and the relationship specified in Step S106, whether to sort the particle that is a sorting-determination target. More specifically, although the path specified in Step S103 is "1", the relationship between the particle that is a sorting-determination target specified in Step S106 and the different particle that is present in front of or behind the particle is "0". Therefore, since not all the values are 1, the determination unit 105 determines that the particle that is a sorting-determination target is not to be sorted. For example, the determination unit 105 assigns "0" (shown in italics in Fig. 12) indicating that the particle is not to be sorted to the particle that is a sorting-determination target.

Next, in Step S109, the determination unit 105 transmits the sorting determination result obtained in Step S107 to the sorting control unit 106.

As described above, the rule data shown in Fig. 12 also enables the sorting determination that emphasizes the purity of the target cells.

Note that the rule data shown in Fig. 12 can be said to define as follows.

The rule data defines that, regardless of which of the particle populations (a) to (c) the particle that is a sorting-determination target belongs, the path of the different particle is the path of the particle that is not a sorting target. By using the rule data thus defined, it is possible to prevent two or more types of particles from being collected in one sorting process. Such a determination process also makes it possible to increase the purity of the target particles.

### (3-3-3) Example of sorting determination process prioritizing yield of target cells

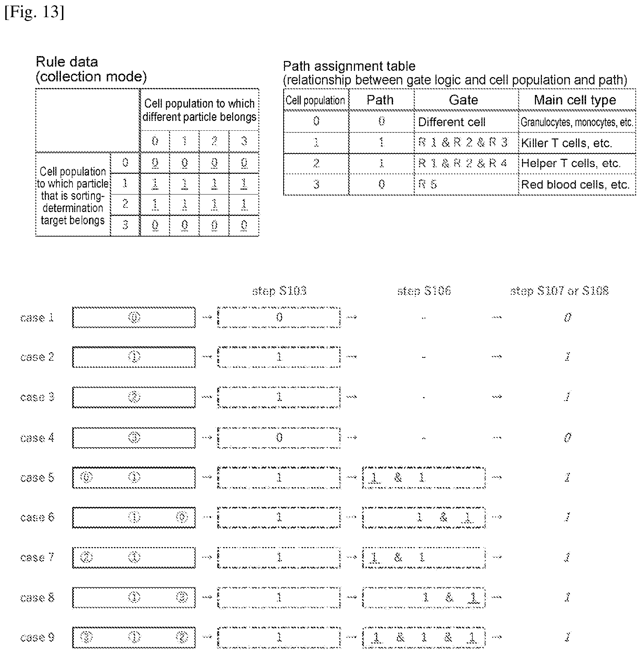

Fig. 13 shows an example of rule data used in the sorting determination that emphasizes the yield of the target cells, and an example of the sorting determination result in the case where sorting determination is performed using the rule data. The rule data is rule data for determining that, in the case where the particle that is a sorting-determination target is a particle to be sorted, the particle that is a sorting-determination target is to be sorted even if the different particle that is present in the guard time is any particle.

Rule data is shown in the upper left of Fig. 13. The rule data defines that, in the case where the particle that is a sorting-determination target belongs to the cell population 1 or 2, the path of the different particle is a flow path through which the particle that is a sorting target travels (indicated by the underlined "1" in the table) even if the different particle belongs to any cell population. Further, the rule data defines that, in the case where the particle that is a sorting-determination target belongs to the cell population 0 or 3, the path of the different particle is a flow path through which the particle that is not a sorting target travels (indicated by the underlined "0" in the table) even if the different particle belongs to any cell population. That is, when this rule data is used, in the case where the particle that is a sorting-determination target is the particle that is a sorting target, it is determined, regardless of the type of the different particle that is present within the guard time, that the particle that is a sorting-determination target is to be sorted. The path assignment table shown in the upper right of Fig. 13 is the same as that described in Fig. 10.

The lower part of Fig. 13 shows the sorting determination results in the cases 1 to 9. The sorting determination process in the cases 1 to 9 will described below.

### (Regarding cases 1 to 4)

In the cases 1 to 4, since the rule data is not referred to, the same sorting determination result as that described in the (3-3-1) above is obtained.

### (Regarding cases 5 to 9)

Regarding the case 5, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present behind the particle that is a sorting-determination target belongs to the cell population 0.

Next, in Step S106, the determination unit 105 refers to the rule data and specifies the relationship between the particle that is a sorting-determination target and the different particle. Since the particle that is a sorting-determination target belongs to the cell population 1 and the different particle belongs to the cell population 0, the determination unit 105 specifies "1" (underlined in Fig. 13) as the relationship between the particles, i.e., the determination unit 105 specifies that the path of the different particle is a flow path through which the particle that is a sorting target travels (the fine-particle collecting flow path 159).

Next, in Step S107, the determination unit 105 determines, on the basis of the path specified in Step S103 and the relationship specified in Step S106, whether to sort the particle that is a sorting-determination target. Since the path specified in Step S103 is "1" and the relationship specified in Step S106 is "1", all values are "1". Since all the values are "1", the determination unit 105 determines that the particle that is a sorting-determination target is to be sorted. For example, the determination unit 105 assigns "1" (shown in italics in Fig. 13) indicating that the particle is to be sorted to the particle that is a sorting-determination target as the sorting determination result.

Next, in Step S109, the determination unit 105 transmits the sorting determination result obtained in Step S107 to the sorting control unit 106.

Regarding the case 6, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present in front of the particle that is a sorting-determination target belongs to the cell population 0.

Next, in Step S106, the determination unit 105 refers to the rule data and specifies the relationship between the particle that is a sorting-determination target and the different particle. Similarly to the case 5, the determination unit 105 specifies "1" (underlined in Fig. 13) as the relationship between the particles, i.e., the determination unit 105 specifies that the path of the different particle is a flow path through which the particle that is a sorting target travels (the fine-particle collecting flow path 159).

Next, in Step S107, the determination unit 105 determines, on the basis of the path specified in Step S103 and the relationship specified in Step S106, whether to sort the particle that is a sorting-determination target. More specifically, similarly to the case 5, the determination unit 105 determines that the particle that is a sorting-determination target is to be sorted.

Next, in Step S109, the determination unit 105 transmits the sorting determination result obtained in Step S107 to the sorting control unit 106.

Regarding the case 7, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present behind the particle that is a sorting-determination target belongs to the cell population 2.

Next, in Step S106, the determination unit 105 refers to the rule data and specifies the relationship between the particle that is a sorting-determination target and the different particle. Since the particle that is a sorting-determination target belongs to the cell population 1 and the different particle belongs to the cell population 2, the determination unit 105 specifies "1" (underlined in Fig. 11) as the relationship between the particles, i.e., the determination unit 105 specifies that the path of the different particle is a flow path through which the particle that is a sorting target travels (the fine-particle collecting flow path 159).

Next, in Step S107, the determination unit 105 determines, on the basis of the path specified in Step S103 and the relationship specified in Step S106, whether to sort the particle that is a sorting-determination target. Since the path specified in Step S103 is "1" and the relationship specified in Step S106 is "1", all values are "1". Since all the values are "1", the determination unit 105 determines that the particle that is a sorting-determination target is to be sorted. For example, the determination unit 105 assigns "1" (shown in italics in Fig. 13) indicating that the particle is to be sorted to the particle that is a sorting-determination target as the sorting determination result.

Next, in Step S109, the determination unit 105 transmits the sorting determination result obtained in Step S107 to the sorting control unit 106.

Regarding the case 8, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present in front of the particle that is a sorting-determination target belongs to the cell population 3.

Next, in Step S106, the determination unit 105 refers to the rule data and specifies the relationship between the particle that is a sorting-determination target and the different particle. Since the particle that is a sorting-determination target belongs to the cell population 1 and the different particle belongs to the cell population 3, the determination unit 105 specifies "1" (underlined in Fig. 13) as the relationship between the particles, i.e., the determination unit 105 specifies that the path of the different particle is a flow path through which the particle that is a sorting target travels (the fine-particle collecting flow path 159).

Next, in Step S107, the determination unit 105 determines, on the basis of the path specified in Step S103 and the relationship specified in Step S106, whether to sort the particle that is a sorting-determination target. More specifically, since the path specified in Step S103 is "1" and the relationship specified in Step S106 is "1", all values are "1". Since all the values are "1", the determination unit 105 determines that the particle that is a sorting-determination target is to be sorted. For example, the determination unit 105 assigns "1" (shown in italics in Fig. 13) indicating that the particle is to be sorted to the particle that is a sorting-determination target as the sorting determination result.

Next, in Step S109, the determination unit 105 transmits the sorting determination result obtained in Step S107 to the sorting control unit 106.

Regarding the case 9, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present behind the particle that is a sorting-determination target belongs to the cell population 3 and specifies that the different particle that is present in front of the particle that is a sorting-determination target belongs to the cell population 2.

Next, in Step S106, the determination unit 105 refers to the rule data and specifies the relationships between the particle that is a sorting-determination target and each of the two different particles. Since the particle that is a sorting-determination target belongs to the cell population 1 and the different particle that is present behind the particle belongs to the cell population 3, the determination unit 105 specifies "1" (underlined in Fig. 13) as the relationship between the particles, i.e., the determination unit 105 specifies that the path of the different particle that is present behind the particle is a flow path through which the particle that is a sorting target travels (the fine-particle collecting flow path 159). Further, since the particle that is a sorting-determination target belongs to the cell population 1 and the different particle that is present in front of the particle belongs to the cell population 2, the determination unit 105 specifies "1" (underlined in Fig. 11) as the relationship between the particles, i.e., the determination unit 105 specifies that the path of the different particle that is present in front the particle is a path through which the particle to be sorted travels (the fine-particle collecting flow path 159).

Next, in Step S107, the determination unit 105 determines, on the basis of the path specified in Step S103 and the relationship specified in Step S106, whether to sort the particle that is a sorting-determination target. More specifically, the path specified in Step S103 is "1" and the relationship between the particle that is a sorting-determination target and the different particle that is present in front of or behind the particle, which is specified in Step S106, is "1". Therefore, since all the values are "1", the determination unit 105 determines that the particle that is a sorting-determination target is to be sorted. For example, the determination unit 105 assigns "1" (shown in italics in Fig. 13) indicating that the particle is to be sorted to the particle that is a sorting-determination target as the sorting determination result.

Next, in Step S109, the determination unit 105 transmits the sorting determination result obtained in Step S107 to the sorting control unit 106.

As described above, the rule data shown in Fig. 13 enables the sorting determination that emphasizes the yield of the target cells.

Note that the rule data shown in Fig. 13 can be said to define as follows.

The rule data defines that, in the case where the particle that is a sorting-determination target belongs to the particle population (a) (cell population 1 or 2 in this example) of the particles to be sorted, the path of the different particle is the path of the particle to be sorted (relationship 1 in this example even if the different particle within a predetermined range around the particle belongs to any of the particle populations (a) to (c).

The rule data defines that, in the case where the particle that is a sorting-determination target belongs to the particle population (b) (cell population 3 in this example) of the ignorable particles, the path of the different particle is the path of the particle that is not a sorting target (relationship 0 in this example) even if the different particle within a predetermined range around the particle belongs to any of the particle populations (a) to (c).

Further, the rule data defines that, also in the case where the particle that is a sorting-determination target belongs to the particle population (c) (cell population 0 in this example) of the particles that are neither the particles to be sorted nor the ignorable particles, the path of the different particle is the path of the particle that is not a sorting target (relationship 0 in this example) even if the different particle within a predetermined range around the particle belongs to any of the particle populations (a) to (c). The rule data thus defined makes it possible to increase the yield of the target particles.

### (3-3-4) Example of sorting determination process that emphasizes purity of target cells and increases collection rate

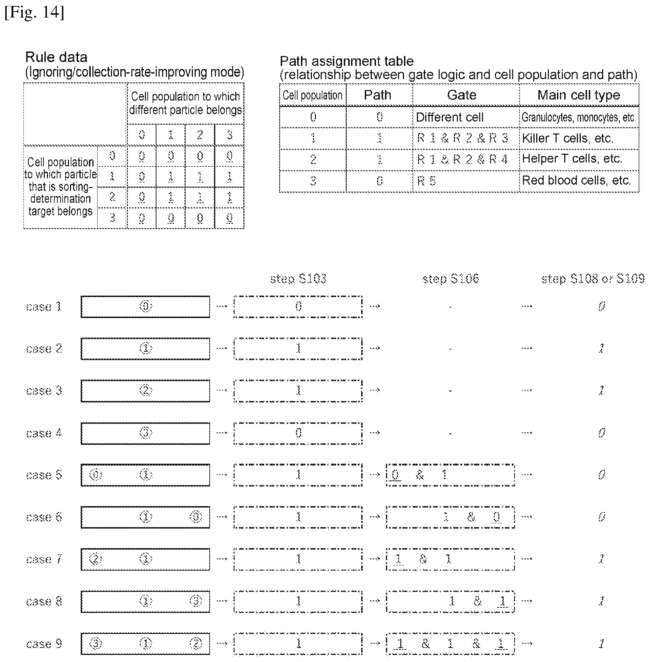

Fig. 14 shows an example of rule data used in a sorting determination process for emphasizing the purity of target cells and increasing the collection rate, and an example of a sorting determination result in the case where sorting determination is performed using the rule data. The rule data is rule data for sorting, in the case where a different particle within the guard time is an ignorable particle, the particle that is a sorting-determination target so as to ignore the different particle in the sorting determination.

Rule data is shown in the upper left of Fig. 14. The rule data defines that, in the case where the particle that is a sorting-determination target belongs to the cell population 1 or 2 and the different particle around the particle that is a sorting-determination target also belongs to the cell population 1, 2, or 3, the path of the different particle is a flow path through which the particle that is a sorting target travels (indicated by the underline number 1 in the rule data table). The rule data defines that, in other cases, the path of the different particle is a flow path through which the particle that is not a sorting target travels (indicated by the underlined number 0 in the table). The difference between the rule data shown in Fig. 11 and the rule data shown in Fig. 14 is the case where the particle that is a sorting-determination target belongs to the cell population 1 or 2 and the different particle belongs to the cell population 3.

The path assignment table shown in the upper right of Fig. 14 is the same as that shown in Fig. 10.

The lower part of Fig. 14 shows the sorting determination results in the cases 1 to 9. The sorting determination process in the cases 1 to 9 will be described below.

### (Regarding cases 1 to 4)

In the cases 1 to 4, since the rule data is not referred to, the same sorting determination result as that described in the (3-3-1) above is obtained.

### (Regarding cases 5 to 9)

In the cases 5 to 7, the rule data is referred to, but the relationship specified in Step S106 is the same as that described in the (3-3-1) above. Therefore, the same sorting determination result as that described in the (3-3-1) above is obtained.

The cases 8 and 9 in which sorting determination results different from those described in the (3-3-1) above are obtained will be described below.

Regarding the case 8, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present in front of the particle that is a sorting-determination target belongs to the cell population 3.

Next, in Step S106, the determination unit 105 refers to the rule data and specifies the relationship between the particle that is a sorting-determination target and the different particle. Since the particle that is a sorting-determination target belongs to the cell population 1 and the different particle belongs to the cell population 3, the determination unit 105 specifies "1" (underlined in Fig. 14) as the relationship between the particles, i.e., the determination unit 105 specifies that the path of the different particle is a flow path through which the particle that is a sorting target travels (the fine-particle collecting flow path 159).

Next, in Step S107, the determination unit 105 determines, on the basis of the path specified in Step S103 and the relationship specified in Step S106, whether to sort the particle that is a sorting-determination target. More specifically, since the path specified in Step S103 is "1" and the relationship specified in Step S106 is "1", all values are "1". Since all the values are "1", the determination unit 105 determines that the particle that is a sorting-determination target is to be sorted. For example, the determination unit 105 assigns "1" (shown in italics in Fig. 14) indicating that the particle is to be sorted to the particle that is a sorting-determination target, as a sorting determination result.

Next, in Step S109, the determination unit 105 transmits the sorting determination result obtained in Step S107 to the sorting control unit 106.

Regarding the case 9, in Step S103, the determination unit 105 assigns "1" as the path of the particle that is a sorting-determination target, i.e., the determination unit 105 specifies that the path of the particle is the fine-particle collecting flow path 159.

Next, in Step S105, the determination unit 105 specifies that the different particle that is present behind the particle that is a sorting-determination target belongs to the cell population 3 and specifies that the different particle that is present in front of the particle that is a sorting-determination target belongs to the cell population 2.

Next, in Step S106, the determination unit 105 refers to the rule data and specifies the relationships between the particle that is a sorting-determination target and each of the two different particles. Since the particle that is a sorting-determination target belongs to the cell population 1 and the different particle that is present behind the particle belongs to the cell population 3, the determination unit 105 specifies "1" (underlined in Fig. 14) as the relationship between the particles, i.e., the determination unit 105 specifies that the path of the different particle that is present behind the particle is a flow path through which the particle that is a sorting target travels (the fine-particle collecting flow path 159). Further, since the particle that is a sorting-determination target belongs to the cell population 1 and the different particle that is present in front of the particle belongs to the cell population 2, the determination unit 105 specifies "1" (underlined in Fig. 14) as the relationship between the particles, i.e., the determination unit 105 specifies that the path of the different particle that is present in front the particle is a path through which the particle to be sorted travels (the fine-particle collecting flow path 159).

Next, in Step S107, the determination unit 105 determines, on the basis of the path specified in Step S103 and the relationship specified in Step S106, whether to sort the particle that is a sorting-determination target. More specifically, since the path specified in Step S103 is "1" and the relationship between the particle that is a sorting-determination target and the different particle that is present in front of or behind the particle, which is specified in Step S106, is "1". Therefore, since all the values are "1", the determination unit 105 determines that the particle that is a sorting-determination target is to be sorted. For example, the determination unit 105 assigns "1" (shown in italics in Fig. 14) indicating that the particle is to be sorted to the particle that is a sorting-determination target, as a sorting determination result.

Next, in Step S109, the determination unit 105 transmits the sorting determination result obtained in Step S107 to the sorting control unit 106.

As described above, the rule data shown in Fig. 14 makes it possible to improve the collection rate while maintaining the purity of the target cells as much as possible.

Note that the rule data shown in Fig. 14 is the same as the rule data shown in Fig. 10. Therefore, the rule data shown in Fig. 14 can be said to define as described regarding Step S106 in the (3-2) above.

### (3-3-5) Example

The cases 1 to 9 have been described in the (3-3-1) above. There are a total of 292 patterns of particles present within the predetermined range considered by the gating described above, including the cases 1 to 9. In this regard, with respect to all of these 292 patterns, whether or not sorting determination can be appropriately performed by the sorting determination process described in the (3-3-1) above was verified using Excel of Microsoft Corporation. As a result, it was confirmed that sorting determination can be appropriately performed by performing the sorting determination process for any of the patterns.

Further, similar verification was performed in accordance with any of the sorting determination processes described in the (3-3-2) to (3-3-4) above. As a result, it was confirmed that sorting determination can be appropriately performed for all the 292 patterns by any of the sorting determination processes.

### (4) Example of fine-particle sorting apparatus configured as flow cytometer

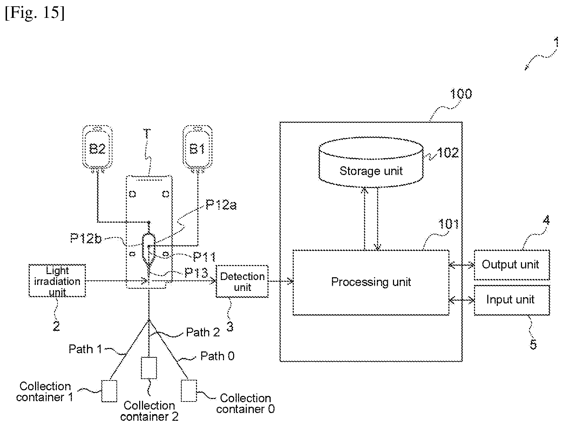

The fine-particle sorting apparatus according to the first embodiment of the present disclosure may be configured as an apparatus that forms liquid droplets containing fine particles and sorts the fine particles by controlling the traveling direction of the liquid droplets. For example, the fine-particle sorting apparatus may be configured as a fine-particle sorting apparatus that performs flow cytometry. Fig. 15 shows a configuration example of the fine-particle sorting apparatus according to the first embodiment of the present disclosure.

A fine-particle sorting apparatus 200 shown in Fig. 15 includes a control unit 1, a light irradiation unit 2, a chip T provided with a flow path through which particles to be analyzed flow, a detection unit 3, an output unit 4, an input unit 5, and a sorting unit 6. The fine-particle sorting apparatus 200 is configured as a flow cytometry system.

### (4-1) Light irradiation unit

The light irradiation unit 2 is configured to irradiate a predetermined position of the flow path of the chip T with light. When the particles pass through the light irradiation position in the flow path, the particles are irradiated with light, and fluorescent light and/or scattered light is generated as a result thereof.

The light irradiation unit 2 includes at least one light source that emits light, favorably, a plurality of light sources that emits light beams of different wavelengths. The light source may be a laser light source, but may also be another light source, e.g., an LED.

The light source may be a laser light source that emits a laser beam of a single wavelength, e.g., a laser light source with a fixed oscillation wavelength or a laser light source with a variable oscillation wavelength. The wavelengths of the laser light source mean the oscillation wavelengths. The laser beam emitted from each of the laser light sources may be applied to the particles without changing the oscillation wavelength.

In the case where the light source is a laser light source, the light source may be one selected from the group consisting of a semiconductor laser, an argon ion (Ar) laser, a helium-neon (He-Ne) laser, a dye laser, a krypton (Cr) laser, and a solid-state laser combining a semiconductor laser and a wavelength conversion optical element, and may be particularly favorably a semiconductor laser.

In the case where the light irradiation unit 2 includes a plurality of light sources, the light irradiation unit 2 may be configured such that the light beams emitted from the light sources are combined and the combined light is applied to the particles. The position at which the light is irradiated may be one or more, i.e., the light irradiation unit 2 may be configured such that a plurality of excitation light beams is combined and applied to one or more (e.g., 1, 2, 3, 4, or 5) spots. The fine-particle sorting apparatus 200 may be configured such that the particles pass through the spots.

To configure the light irradiation unit 2 in this manner, the light irradiation unit 2 may include a light guiding optical system for guiding the plurality of light beams to a predetermined position. The light guiding optical system may include, for example, an optical part such as a beam splitter group and a mirror group for combining a plurality of light beams. Further, the light guiding optical system may include a lens group for collecting the combined excitation light, and may include, for example, an objective lens.

### (4-2) Chip

The chip T may be configured as, for example, a flow cell. The chip T includes a flow path. The flow path structure provided in the chip T is configured to, for example, form a flow (particularly, laminar flow) in which the particles fare substantially aligned and flow.

The chip T shown in Fig. 15 includes flow paths P11, P12a, P12b, and P13. A sample liquid containing particles is introduced into the sample-liquid flow path P1 1 from a container (bag) B1 in which the sample liquid is contained. The sample liquid flows through the sample-liquid flow path P11 toward the main flow path P13. A sheath liquid is introduced into the chip T from a container (bag) B2 containing the sheath liquid. The sheath liquid flows through the two sheath-liquid flow paths P12a and P12b toward the main flow path P13. The sample-liquid flow path P11 and the sheath-liquid flow paths P12a and P12b are configured to merge to form the main flow path P13. The sample liquid fed in the sample-liquid flow path P11 and the sheath liquid fed in the sheath-liquid flow paths P12a and P12b merge at a point where the three flow paths merge, and then flow in the main flow path P13. In the main flow path P13, for example, a laminar flow in which the sample liquid is sandwiched between the sheath liquids flows. In the laminar flow, the particles are substantially aligned. The particles that are aligned and flow in the main flow path P13 are irradiated with the light (particularly, laser beam) generated by the light irradiation unit 2, and the light generated by the light irradiation is detected by the detection unit 3.

The chip T may have a two-dimensional or three-dimensional flow path structure. The chip T may have a substrate shape formed of a plastic material or a glass material. The structure of the chip T and the structure of the flow path provided in the chip T are not limited to those shown in Fig. 15. For example, a chip structure and a flow path structure known in the technological field regarding a flow cytometer may be employed. That is, in the present disclosure, the fluorescent light detection may be, for example, fluorescent light detection by a flow cytometer.

The lateral cross-sectional shape of the flow path provided in the chip T may be, for example, circular, elliptical, or rectangular (square or rectangle). In the case where the lateral cross section of the flow path is circular or elliptical, the diameter or major axis thereof may be, for example, 1 mm or less, particularly, 10 µm or more and 1 mm or less. In the case where the lateral cross section of the flow path is square or rectangular, the length of one side or long side thereof may be, for example, 1 mm or less, particularly, 10 µm or more and 1 mm or less.

The chip T includes a discharge port through which the laminar flow is discharged. By vibrating the chip T, liquid droplets are formed from the laminar flow. Each of the formed liquid droplets may include one or more particles. By charging each of the liquid droplets and controlling the traveling direction of the charged liquid droplets, the particles can be sorted.

### (4-3) Sorting unit

The sorting unit 6 may be configured to form charged liquid droplets containing particles and to be capable of controlling the traveling direction of the liquid droplets to sort the particles as described above. For example, the sorting unit 6 may include a vibrating element that vibrates the chip T to form the liquid droplets, a charging unit that charges the liquid droplets, and a deflecting plate that controls the traveling direction of the charged liquid droplets. The sorting unit 6 is capable of executing a sorting process under the control of, for example, a sorting control unit described later.

The vibrating element vibrates the chip T to dropletize the laminar flow discharged from the discharge port. The vibrating element may be, for example, a piezoelectric element. The vibrating element may or may not be integrally formed with the chip T. In the case where the vibrating element is not integrally formed with the chip T, the vibrating element may be disposed to be contactable with the chip T.

The charging unit applies positive or negative charges to liquid droplets discharged from the discharge port. The charging unit applies charges to liquid droplets by, for example, an electrode inserted to be electrically in contact with the sample liquid or sheath liquid to be fed through the flow path.

The fine-particle sorting apparatus 200 may apply one of positive charges and negative charges to a part of liquid droplets discharged from the discharge port by synchronizing the frequency of the drive voltage of the vibrating element with the switching timing of the voltage (charge voltage) of the charging unit. Charges do not necessarily need to be applied to a part of the liquid droplets, and thus, the part of the liquid droplets may be non-charged liquid droplets.

The deflecting plate may be configured to control the traveling direction of liquid droplets. For example, the deflecting plate may be a pair of deflecting plates disposed so as to face each other across the path of the liquid droplets. The deflecting plate is capable of changing the traveling direction of the respective liquid droplets by an electric force acting between the deflecting plate and charges applied to the liquid droplets. The deflecting plate may be an electrode commonly used in the technological field.

The fine-particle sorting apparatus 200 may be configured such that a plurality of collection containers for collecting liquid droplets can be interchangeably attached thereto. The plurality of collection containers may include one or more collection containers for collecting a particle that is a sorting target, and one or more containers for collecting a particle that is not a sorting target. As the plurality of collection containers, a container known in the technological field may be employed.

### (4-4) Detection unit

The detection unit 3 detects light generated by irradiating the particles with light by the light irradiation unit 2. For example, the detection unit 3 may be configured to detect light generated by irradiating particles flowing in the flow path of the chip T with light. The light detected by the detection unit 3 may be light including, for example, fluorescent light and/or scattered light. The scattered light may be, for example, one or more of forward scattered light, backward scattered light, and side scattered light.

The detection unit 3 includes at least one photodetector for detecting the light generated by irradiating the particles with light by the light irradiation unit 2. Each of the photodetectors includes one or more light receiving elements, for example, a light receiving element array. Each of the photodetectors may include one or more PMTs (photomultiplier tubes) and/or a photodiode, for example, as a light receiving element, and particularly include one or more PMTs. The photodetector may include, for example, a PMT array in which a plurality of PMTs is arranged in a one-dimensional direction.

The detection unit 3 may include a spectroscopic unit that disperses light. The spectroscopic unit may be provided in each of the photodetectors. The spectroscopic unit may be configured to, for example, disperse light (e.g., fluorescent light) to cause the light of a predetermined detection wavelength to reach a light receiving device (e.g., PMT) to which the predetermined detection wavelength is assigned.

The detection unit 3 may include one or more measuring instruments selected from a fluorometer, a scattered light measuring instrument, a transmitted light measuring instrument, a reflected light measuring instrument, a diffracted light measuring instrument, an ultraviolet spectrometer, an infrared spectrometer, a Raman spectrometer, a FRET measuring instrument, and a FISH measuring instrument. Further, the detection unit 3 may also include a two-dimensional light receiving element such as a CCD and a CMOS.

The detection unit 3 may include a signal processing unit. The signal processing unit converts an electrical signal obtained by the fluorescent light detector into a digital signal. The signal processing unit may include, for example, an A/D converter as a device for performing the conversion. The optical signal detected by the photodetector may be converted to a digital signal by the signal processing unit and transmitted to the control unit 1. The digital signal is treated as optical data by the control unit 1 and used in the sorting determination process described below.

The detection unit 3 (particularly, photodetector) is disposed at a position capable of detecting light generated from the particles. For example, as shown in Fig. 15, the detection unit 3 may be disposed to sandwich the chip T (particularly, the main flow path P13) between the light irradiation unit 2 and the detection unit 3, or the detection unit 3 may be disposed on the same side as the light irradiation unit 2 with respect to the chip T.

### (4-5) Control unit

The control unit 1 includes, for example, a determination unit 201 and a sorting control unit 202, as shown in Fig. 15.

The determination unit 201 determines, on the basis of the characteristics of the light obtained by irradiating the particle with light by the light irradiation unit, whether or not the particle is a particle to be collected. For example, the determination unit 201 may make a determination based on scattered light, a determination based on fluorescent light, or a determination based on an image. (e.g., dark field image and/or bright field image). The description of the determination unit 105 in the (2) above also applies to the determination unit 201.

The sorting control unit 202 controls the sorting unit 6 on the basis of the determination result obtained by the determination unit 201 to execute sorting of the particles.

A configuration example of the control unit 1 will be described below. The sorting determination and sorting control performed by the control unit 1 can be realized by, for example, the following configuration, but the configuration of the control unit 1 is not limited to the following.

The control unit 1 may include, for example, a CPU (Central Processing Unit), a RAM, and a ROM. The CPU, RAM, and ROM may be connected to each other via a bus. An input/output interface may be further connected to the bus. The output unit 4 and the input unit 5 may be connected to the bus via the input/output interface.

Further, for example, a communication device, a storage device, and a drive may be connected to the input/output interface.

The communication device connects the control unit 1 to a network by wire or wirelessly. The communication device allows the control unit 1 to acquire various types of data (e.g., optical data and/or SR data) via a network. The acquired data may be stored in, for example, a storage unit (not shown). The type of the communication device may be appropriately selected by those skilled in the art.

The storage device may store an operating system (e.g., WINDOWS (registered trademark), UNIX (registered trademark), or LINUX (registered trademark)), a program for causing an information processing apparatus (or a particle analysis apparatus or a particle analysis system) to execute the information processing method according to the first embodiment of the present disclosure, other various programs, optical data, SR data, and other various types of data.

The drive is capable of reading data (e.g., optical data and SR data) or a program recorded on a recording medium and output the read data or program to the RAM. The recording medium is, for example, a micro SD memory card, a SD memory card, or a flush memory, but is not limited thereto.

### (4-6) Output unit and input unit

The output unit 4 may include an output device that outputs various types of data. For example, the output unit 4 includes a device that outputs a result of sorting determination. The output device may include, for example, a display device (display). Further, the output unit 4 may include, for example, a printing device. The printing device may print the result of sorting determination on a printing medium such as a sheet of paper for output.

The input unit 5 is, for example, a device that accepts an operation by a user. The input unit 5 may include, for example, a mouse, a key board, or a display (in this case, the user operation may be a touch operation on the display). The input unit 5 accepts, for example, a gating operation by the user. Further, the input unit 5 accepts a user operation that specifies which of the particle populations (a), (b), and (c) the respective gates are for.

### (5) Details of determination process

### (5-1) Basic concept of determination process

An example of the determination process in the case where an embodiment of the present disclosure is applied to the fine-particle sorting apparatus described in the (4) above will be described below.

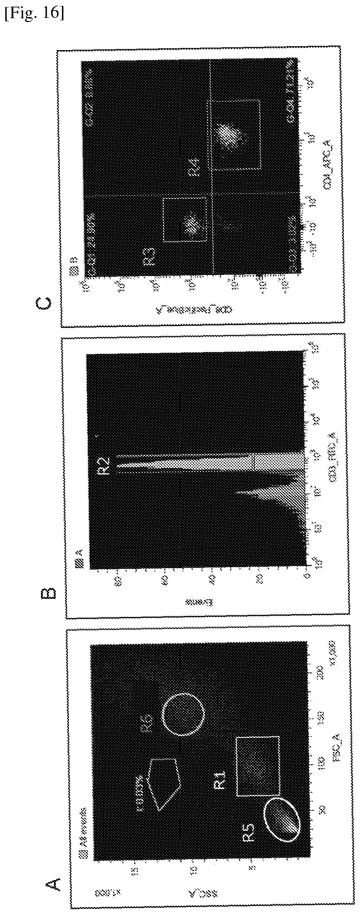

An example of gating will be described below with reference to Fig. 16. This example is an example of gating in which killer T cells and helper T cells are collected from a blood sample as one cell population and granulocytes and monocytes are collected as one cell population.

The blood sample described in the (3) above is caused to flow into the chip T of the fine-particle sorting apparatus 200 described in the (5) above, and the light generated by irradiating each of the particles in the blood sample with light by the light irradiation unit 2 is detected by the detection unit 3.

Using the data regarding the detected light, a two-dimensional plot (dot plot) of forward scattered light (FSC) and side scattered light (SSC) is generated as shown in, for example, Fig. 16A. The gates R1, R5, and R6 are set for the generated two-dimensional plot. The gate R1 is a gate for lymphocytes, the gate R5 is a gate for red blood cells, and the gate R6 is a gate for granulocytes and monocytes. The gate R5 may include not only the red blood cells but also, for example, cell debris or foam.

When the gate R1 is developed into a histogram based on CD3, a histogram as shown in, for example, Fig. 16B is obtained. The gate R2 is set for the histogram. The gate R2 is a gate for CD3-positive cells, i.e., T cells.

When the gate R2 is developed into a two-dimensional plot based on CD4 and CD8, a two-dimensional plot as shown in, for example, Fig. 16C is obtained. A gate R3 and a gate R4 are set for the two-dimensional plot. The gate R3 is a gate for CD8-positive and CD4-negative cells, i.e., killer T cells. The gate R4 is a gate for CD8-negative and CD4-positive cells, i.e., helper T cells.

By the gating described above, the cell group contained in the blood sample is divided into the following cell populations.
Cell population 0: cells other than the following cell populations 1 to 4
Cell population 1: cells that belong to the gates R1, R2, and R3 (killer T cells)
Cell population 2: cells that belong to the gates R1, R2, and R4 (helper T cells)
Cell population 3: cells that belong to the gate R5 (red blood cells)
Cell population 4: cells that belong to the gate R6 (granulocytes and monocytes)

By sorting the cell population 1 and the cell population 2 into one collection container and sorting the cell population 4 into another collection container by the gating as described above, a cell population containing killer T cells and helper T cells at a high content and a cell population containing granulocytes and monocytes at a high content can be obtained.

As shown in Fig. 15, the path of liquid droplets traveling to a container where the cell population 1 and the cell population 2 are collected is set to a stream 0, the path of liquid droplets traveling to a container where the cell population 4 is collected is set to a stream 1, and the path of liquid droplets traveling to a container where the cell populations 0 and 3 are collected is set to a stream 2. As described above, in this example, in addition to determining whether to sort the particles, the path of the particles is also determined. In other words, in this example, two or more types of particles to be collected are selectively collected into two or more containers.

A case where cells that belong to one of the cell populations 1 and 2 are sorted from the blood sample and cells that belong to the cell population 4 are sorted will be described.

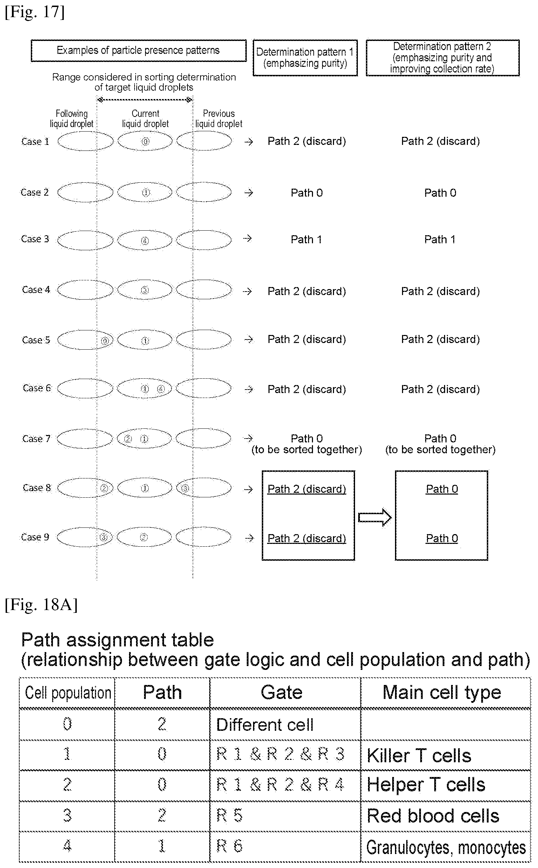

Fig. 17 is a diagram showing an example of a sorting determination pattern according to the presence or absence of a cell that is a sorting determination target and a cell within a predetermined range around the cell (particularly, a cell flowing in front of or behind the cell).

The cases 1 to 9 are shown in "Examples of particle presence patterns" on the left of Fig. 17. The "Range considered in sorting determination of target liquid droplets" indicated by an arrow in Fig. 17 corresponds to the predetermined range.

The "current liquid droplet" shown in these cases is a liquid droplet containing the particle that is a sorting-determination target, the "previous liquid droplet" is a liquid droplet formed before the current liquid droplet, and the "following liquid droplet" is a liquid droplet formed after the current liquid droplet.

The particles that are present in these liquid droplets are indicated by circled numbers. The numbers respectively correspond to the numbers assigned to the cell populations described above. The liquid droplet that is present at the center of the present liquid droplet is the particle that is a sorting-determination target.

Further, in Fig. 17, the dotted line defining the "Range considered in sorting determination of target liquid droplets" covers the previous liquid droplet and the following liquid droplet. Particles other than the particle that is a sorting-determination target, which are present within the range defined by the dotted line, are considered in determining whether to sort the particle that is a sorting-determination target. Note that the dotted line covers also the previous liquid droplet and the following liquid droplet because it is considered that there is a possibility that the light generated by irradiating the particles with light is usually detected prior to forming the liquid droplet in the above-mentioned fine-particle sorting apparatus and particles to be contained in the previous liquid droplet or the following liquid droplet are contained in the liquid droplet that is a sorting target and that the previous liquid droplet or the following liquid droplet is sorted together with the current liquid droplet.

Note that the predetermined range may be appropriately set by those skilled in the art similarly to the guard time described in the (3) above. For example, in a sorting determination process that emphasizes the purity, by spreading the predetermined range along the traveling direction of the liquid droplets, the collection rate of the target cells is slightly lowered, but the accuracy of sorting determination can be increased. On the contrary, by narrowing the predetermined range, the accuracy is slightly lowered, but the collection rate can be increased. Further, in the sorting determination process that emphasizes the collection rate, by spreading the predetermined range along the traveling direction of the liquid droplets, the collection rate of the target cells can be increased. On the contrary, by narrowing the predetermined range, the collection rate of the target cells is slightly lowered, but the purity can be increased.

The determination pattern 1 in Fig. 17 describes a case where, even if the particle that is a sorting-determination target is a target cell, it is determined, in the case where a different cell is present within a predetermined range around the cell, that the target cell is not to be sorted. In other words, the determination pattern 1 is a determination pattern for collecting the target cells with higher purity. In Fig. 17, the determination pattern 2 is a determination pattern in which the collection rate of the target cells is improved while maintaining the purity of the target cells in the determination pattern 1 as much as possible. Regarding details of the determination patterns, the determination pattern 1 will be described first, and then the determination pattern 2 will be described.

In the determination pattern 1, the cases 1 to 9 are determined as follows.

In the case 1, since the particle that is a sorting-determination target belongs to the cell population 0 and a different cell is not present in the predetermined range, the determination unit 201 determines that the particle is not to be sorted and determines that the path of the particle is the path 2.

In the case 2, the particle that is a sorting-determination target belongs to the cell population 1 (i.e., a killer T cell) and a different cell is not present in the predetermined range. For this reason, the determination unit 201 determines that the particle is to be sorted and determines that the path of the particle is the path 0.

In the case 3, the particle that is a sorting-determination target belongs to the cell population 4 (i.e., a granulocyte or monocyte) and a different cell is not present in the predetermined range. For this reason, the determination unit 201 determines that the particle is to be sorted and determines that the path of the particle is the path 1.

In the case 4, since the particle that is a sorting-determination target belongs to the cell population 3 (i.e., a red blood cell) and a different cell is not present within the guard time, the determination unit 201 determines that the particle is not to be sorted and determines that the path of the particle is the path 2.

In the case 5, the particle that is a sorting-determination target belongs to the cell population 1, but a particle that belongs to the cell population 0 is present within the predetermined range (behind the particle that is a sorting-determination target). Although the particle that is a sorting-determination target is a target cell, when the current liquid droplet is collected in order to collect the particle, there is a possibility that the particle that belongs to the cell population 0 contained in the following liquid droplet is collected together. When the particle that belongs to the cell population 0 is collected together with the target cells, the purity of the target cells is lowered. For this reason, in the case 5, the determination unit 201 determines that the particle that is a sorting-determination target is not to be sorted and determines that the path of the particle is the path 2.

In the case 6, the particle that is a sorting-determination target belongs to the cell population 1, but a cell that belongs to the cell population 4 is present within the predetermined range (in front of the particle that is a sorting-determination target). Although the particle that is a sorting-determination target is a target cell, when the current liquid droplet is sorted in order to collect the particle, also the particle that belongs to the cell population 4 contained in the current liquid droplet is collected together. For this reason, in the case 6, the determination unit 201 determines that the cell that is a sorting determination target is not to be sorted and determines that the path of the particle is the path 2.

In the case 7, the particle that is a sorting-determination target belongs to the cell population 1 and a cell that belongs to the cell population 2 is present within the predetermined range. The cell that is a sorting determination target is a target cell. When the cell is collected, also the cell that belongs to the cell population 2 is collected together. Since the cell that belongs to the cell population 2 is a target cell, the cell is favorably collected together with the particle that is a sorting-determination target. For this reason, in the case 7, the determination unit 201 determines that the particle that is a sorting-determination target is to be sorted and determines that the path of the particle is the path 0.

In the case 8, the particle that is a sorting-determination target belongs to the cell population 1. In the case 8, further, a particle that belongs to the cell population 3 (particularly, a red blood cell) is present in front of the particle that is a sorting-determination target and a cell that belongs to the cell population 2 is present behind the particle that is a sorting-determination target, within the predetermined range. Although the particle that is a sorting-determination target is a target cell, when the liquid droplet containing the particle is collected, there is a possibility that also the particle that belongs to the cell population 3 is collected together. Since the cell that belongs to the cell population 3 is not a target cell, when the cell is collected, the purity of the target cells is lowered. For this reason, in the case 8, the determination unit 201 determines that the particle that is a sorting-determination target is not to be sorted and determines that the path of the particle is the path 2.

In the case 9, the particle that is a sorting-determination target belongs to the cell population 2 and a particle that belongs to the cell population 3 is present behind the particle that is a sorting-determination target within the predetermined range. Although the particle that is a sorting-determination target is a target cell, when the current liquid droplet containing the cell is collected, there is a possibility that also the particle that belongs to the cell population 3 is collected together. Since the particle that belongs to the cell population 3 is not a target cell, when the cell is collected together with the particle that is a sorting-determination target, the purity of the target cells is lowered. For this reason, in the case 9, the determination unit 105 determines that the particle that is a sorting-determination target is not to be sorted and determines that the path of the particle is the path 2.

As described above, in the determination pattern 1, the determination unit 201 determines that the particle that is a sorting-determination target is not to be sorted in order to increase the purity of the target cells in the cases 8 and 9. However, as described in the (3) above, in the case where the particle that belongs to the cell population 3 is allowed to be collected together with the target cells, e.g., in the case where the cell that belongs to the cell population 3 does not affect the process after the sorting operation, it is favorable to determine that the particle is to be sorted also in the cases 8 and 9 in order to increase the collection rate of the target cells.

The determination pattern for increasing the collection rate will be described with reference to the determination pattern 2.

In Fig. 17, in the cases 1 to 7, the determination unit 201 performs sorting determination as described with reference to Fig. 17.

In the case 8, the particle that is a sorting-determination target belongs to the cell population 1, and a particle that belongs to the cell population 3 is present in front of the particle that is a sorting-determination target and a cell that belongs to the cell population 2 is present behind the particle that is a sorting-determination target, within the predetermined range. Since the particle that is a sorting-determination target is a target cell, when the cell is collected, also the particle that belongs to the cell population 3 is collected together. The particle that belongs to the cell population 3 is not a target cell, but is allowed to be collected together with the target cells. For this reason, in the case 8, the determination unit 201 determines that the particle that is a sorting-determination target is to be sorted and determines that the path of the particle that is a sorting-determination target is the path 0.

In the case 9, the particle that is a sorting-determination target belongs to the cell population 2 and a particle that belongs to the cell population 3 is present behind the particle that is a sorting-determination target within the predetermined range. Although the particle that is a sorting-determination target is a target cell, when the current liquid droplet containing the cell is collected, there is a possibility that also the particle that belongs to the cell population 3 is collected together. The particle that belongs to the cell population 3 is not a target cell, but is allowed to be collected together with the target cells. For this reason, in the case 9, the determination unit 201 determines that the particle that is a sorting-determination target is to be sorted and determines that the path of the particle that is a sorting-determination target is the path 0.

The determination pattern 1 and the determination pattern 2 described above can be realized using rule data defining, in accordance with a particle population to which a particle that is a sorting-determination target belongs and a particle population to which a different particle within a predetermined range around the particle belongs , a relationship between the particles. More specifically, in accordance with the present disclosure, the determination unit 201 performs the determination using rule data defining, in accordance with a particle population to which a particle that is a sorting-determination target belongs and a particle population to which a different particle within a predetermined range around the particle belongs , a relationship between the particles. The particle populations to which the particle that is a sorting-determination target and the particle within the predetermined range may belong may include the following particle populations (a) to (c):
(a) a particle population of particles to be sorted;
(b) a particle population of particles that are not to be sorted but are ignorable in the determination; and
(c) a particle population of particles that are neither the particles to be sorted nor the ignorable particles.

Note that the relationship may be more specifically a relationship as to whether a certain particle of the particles considered in the sorting determination is ignorable in relation to the different particles.

By setting the cell populations 1 and 2 described above as the particle population (a), setting the cell population 3 as the particle population (b), and setting the cell population 0 as the particle population (c), both of the determination patterns 1 and 2 described above in Fig. 17 are made possible.

Further, by using the rule data in which the particle populations (a) to (c) are set, it is possible to determine that a plurality of types of target particles is assigned to a plurality of different paths. As a result, it is possible to selectively collect a plurality of types of target particles into a plurality of designated collection containers by one sorting operation.

For such assignment to a plurality of paths, favorably, rule data for determining the coincidence of paths assigned to the particles is used in addition to the above-mentioned rule data.

### (5-2) Example of determination process flow

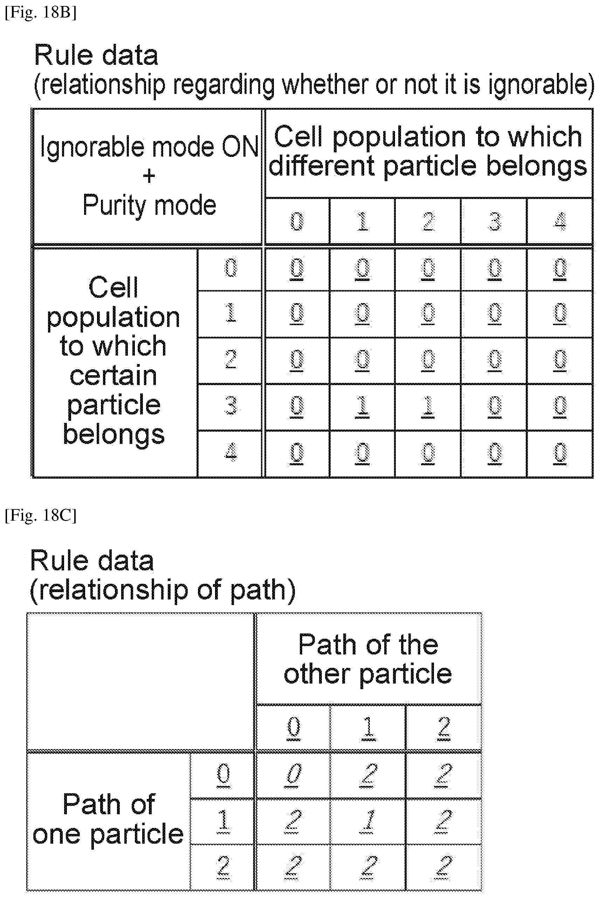

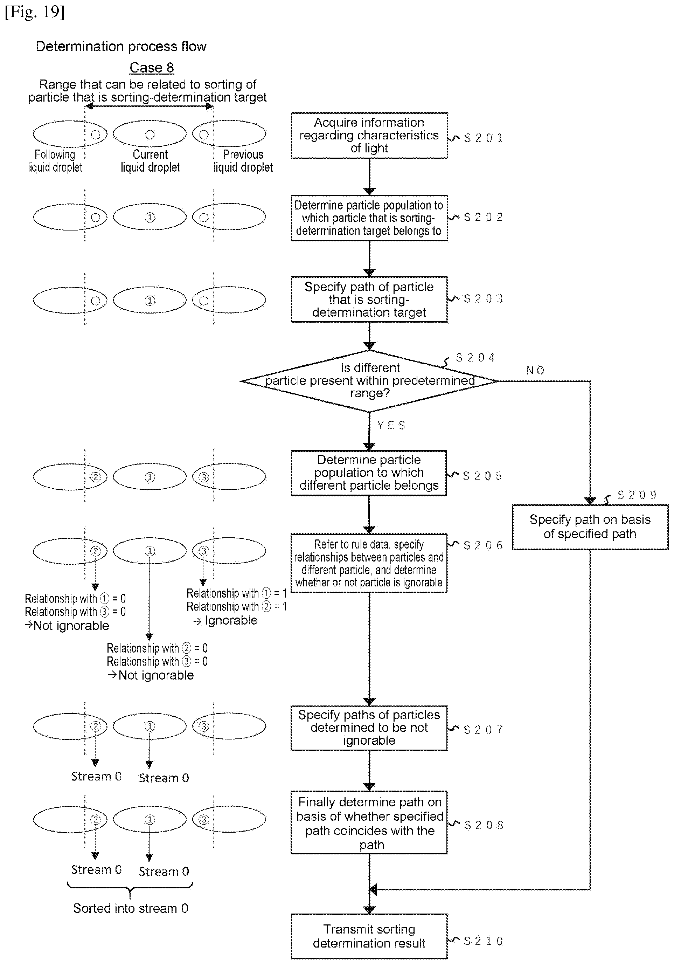

A specific example of a sorting determination process using the rule data will be described with reference to Figs. 18 and 19. Fig. 18A shows a path assignment table relating to assignment of paths to particle populations in the process. Fig. 18B shows rule data defining whether a certain particle is ignorable in sorting determination from the viewpoint of a different particle. Fig. 18C shows rule data defining the path of a particle that is a sorting-determination target on the basis of the relationship of the path assigned to two particles. Fig. 19 shows an example of a flowchart of a sorting determination processing. In Fig. 19, in addition to the flowchart, a diagram for describing the sorting determination process in the case 8 described above is shown.

In Step S201 shown in Fig. 19, the determination unit 201 acquires information regarding the characteristics of light generated by irradiating the particle that is a sorting-determination target with light. The information regarding the characteristics of light may be based on, for example, the light detected by the detection unit as described above.

In Step S202, the determination unit 201 determines which particle population a particle belongs to on the basis of light generated by irradiating the particle flowing in a flow path with light. In particular, the determination unit 201 determines, on the basis of the information regarding the characteristics of light acquired in Step S201, a particle population to which a particle that is a sorting-determination target belongs. Specifically, the determination unit 201 determines, on the basis of the information, which of the cell populations 0, 1, 2, 3, and 4 the particle belongs to.

For example, regarding the case 8, as shown in Fig. 19, the determination unit 201 determines that the particle that is a sorting-determination target belongs to the cell population 1.

In Step S203, the determination unit 201 specifies the path of the particle that is a sorting-determination target on the basis of the particle population determined in Step S202. For this specification, the determination unit 201 may refer to, for example, the path assignment data in which a particle population and a path through which a particle that belongs to the particle population should travel are associated with each other. For example, the path assignment data may be data defining whether the path through which the particle that belongs to the particle population should travel is the path through which the particle that is a sorting target travels or the path through which the particle that is not a sorting target travels, in accordance with the type of the particle population. The path assignment data may be, for example, a path assignment table as shown in Fig. 18.

In Step S203, specifically, in the case where the particle belongs to the cell population 1 or 2, the path of the particle is specified as "0" as shown in Fig. 18. In the case where the particle belongs to the cell population 0 or 3, the path of the particle is specified as the path "2". In the case where the particle belongs to the cell population 4, the path of the particle is specified as the path "1".

Regarding the case 8, since the particle that is a sorting-determination target belongs to the cell population 1, as shown in Fig. 19, the determination unit 201 assigns the path 1 to the particle by referring to the path assignment table in Fig. 18A.

The path described in the path assignment table will be described below.

The path 0 is a path through which the particles that belong to the cell populations 1 and 2, of the particles that are sorting targets, travel, and the particles that have traveled to the path 0 are collected into a collection container (hereinafter, referred to as the "collection container 0").

The path 1 is a path through which the particle that belongs to the cell population 4, of the particles that are sorting targets, travels, and the particles that have traveled to the path 1 are collected into another collection container (hereinafter, referred to as the "collection container 1").

The path 2 is a path through which a particle that is not a sorting target travels, and the particles that have traveled to the path 2 are collected into still another collection container (hereinafter, referred to as the "collection container2").

The paths and the collection containers may be configured as shown in Fig. 15, for example. Note that Fig. 15 shows a schematic example, and the configurations of the path and the collection container are not limited to those shown in Fig. 15.

The control of the traveling of liquid droplets to the path 0, 1, or 2 may be performed by applying charges to the liquid droplets containing particles in the sorting unit and deflecting the liquid droplets by the deflecting plate. For example, the process is performed as follows.

The advancement to the path 0 may be performed by, for example, deflecting the traveling direction of the positively charged liquid droplets containing particles by the deflecting plate in the sorting unit. The liquid droplets containing particles are collected in the collection container 0 provided ahead of the path 0.

The traveling to the path 1 may be performed by deflecting the traveling direction of the negatively charged liquid droplets containing particles by the deflecting plate in the sorting unit. The liquid droplets containing particles are collected in the collection container 1 provided ahead of the path 1.

The traveling to the path 2 may be performed by moving the uncharged liquid droplets containing particles straight without being deflected by the deflecting plate in the sorting unit. The liquid droplets containing particles are collected in the collection container 2 provided ahead of the path 2.

In Step S204, the determination unit 201 determines whether or not a different particle is present within a predetermined range around the particle that is a sorting-determination target.

Specifically, the determination unit 201 determines whether or not a different particle is present within a predetermined range in front of or behind the particle to be processed in Steps S201 to 203 in the traveling direction. The determination may be made on the basis of the time at which the light generated by the light irradiation into the particle that is a sorting-determination target has been detected, and the time at which the light generated by the light irradiation into the particle flowing in front of and/or behind the particle has been detected. For example, in the case where the absolute value of the difference between these times is less than or equal to a predetermined value, the determination unit 201 determines that a different particle is present. In the case where the absolute value is greater than the predetermined value, the determination unit 201 determines that no other particle is present.

In StepS204, in the case where the determination unit 201 determines that a different particle is present within a predetermined range around the particle that is a sorting-determination target, the determination unit 201 advances the process to Step S205. In the case where the determination unit 201 determines that no other particle is present within the predetermined range around the particle that is a sorting-determination target, the determination unit 201 advances the process to Step S209.

Regarding the case 8, the determination unit 201 determines that two particles are present within the predetermined range, and advances the process to Step S205.

As described above, in a favorable embodiment of the present disclosure, the determination unit determines whether or not a different particle is present within a predetermined range around the particle that is a sorting-determination target. In the case where the determination unit determines that a different particle is present within the predetermined range, the determination unit may make a determination using rule data. As a result, it is possible to make the determination using the rule data only when necessary, and reduce unnecessary processes.

Further, in the flow in this example, the presence determination step (Step S204) of determining whether or not a different particle is present within a predetermined range is performed after the specification steps (Steps S201 to S203) of specifying the path of the particle that is a sorting-determination target. However, the presence determination step may be performed first, and then the specification steps may be performed in the determination process according to the first embodiment of the present disclosure.

In Step S205, the determination unit 201 determines the particle population to which the different particle that is present in the predetermined range belongs. The determination may be made similarly to Steps S201 and S202 described above.

Regarding the case 8, the determination unit 201 specifies that the particle that is present in front of the particle that is a sorting-determination target belongs to the cell population 3 and specifies that the particle that is present behind the particle that is a sorting-determination target belongs to the cell population 2.

In Step S206, the determination unit 201 determines relationships between respective particles in a particle group consisting of the particle that is a sorting-determination target and the different particle within the predetermined range and all different particles in the particle group. The determination unit 201 may determine the relationships using rule data defining whether or not the respective particles are ignorable in relation to all the different particles.

More specifically, first, the determination unit 201 refers to rule data defining, in accordance with a particle population to which a particle that is a sorting-determination target (i.e., the particle to be processed in Steps S201 to S203) belongs to and a particle population to which a different particle within a predetermined range around the particle (i.e., the particle to be processed in Step S105), a relationship between the particles, and specifies the relationship between a certain particle within the predetermined range and the different particle.

The relationship may be more specifically a relationship regarding whether or not a certain particle within the predetermined range is ignorable with respect to the different particle, and even more specifically a relationship regarding whether or not a certain particle within the predetermined range is ignorable in the process after sorting of the different particle. The relationship may be set appropriately in accordance with the process after the sorting operation. For example, a user who performs the operation after sorting sets the relationship, and the rule data may be set on the basis of the setting.

Examples of the rule data includes the table of "rule data" shown in Fig. 18B. The rule data shown in the Fig. 18B specifies a value of 0 or 1 (shown as the underlined 0 or 1 in Fig. 18B) in accordance with the type of the cell population to which the certain particle belongs and the type of the cell population to which the different particle belongs. "0" indicates that the certain particle is not ignorable in relation to the different particle. "1" indicates that the certain particle is ignorable in relation to the different particle.

For example, the determination unit 201 specifies, also in the case where the cell population to which the certain particle belongs is 1 and the different particle belongs to any of the cell populations, the relationship between the particles as "0". The same applies to the case where the cell population to which the certain particle belongs is in any of 0, 2, and 4.

Further, the determination unit 201 specifies, in the case where the cell population to which the certain particle belons is 3 and the different particle belongs to the cell population 1 or 2, the relationship between the particles as "1", i.e., specifies that the certain particle is ignorable in relation to the different particle. Further, the determination unit 201 specifies, in the case where the cell population to which the certain particle belons is 3 an the different particle belongs to the cell population 0, 3, or 4, the relationship between the particles as "0", i.e., specifies that the certain particle is not ignorable in relation to the different particles.

Regarding the case 8, the determination unit 201 specifies the relationships between the particle that is a sorting-determination target and particles that are present in front of and behind the particle. Since the particle that is a sorting-determination target belongs to the cell population 1 and the particle that is present in front of the particle belongs to the cell population 3, the determination unit 201 refers to the rude data and specifies that the relationship between the two particles is "0". Similarly, the determination unit 201 specifies the relationship between the particle that is a sorting-determination target and the particle that is present behind the particle is "0".

The determination unit 201 specifies also the relationships between the particle that is present in front of the particle and each of the particle that is a sorting-determination target and the particle that is present behind the particle. Since the particle that is present in front of the particle belongs to the cell population 3 and the particle that is a sorting-determination target belongs to the cell population 1, the determination unit 201 refers to the rule data and specifies that the relationship between the two particles is "1". Similarly, the determination unit 201 specifies that the relationship between the particle that is present in front of the particle and the particle that is present behind the particle is "1".

The determination unit 201 specifies also the relationships between the particle that is present behind the particle and each of the particle that is a sorting-determination target and the particle that is present in front of the particle. Since the particle that is present behind the particle belongs to the cell population 2 and the particle that is a sorting-determination target belongs to the cell population 1, the determination unit 201 refers to the rule data and specifies that the relationship between the two particles is "0". Similarly, the determination unit 201 specifies that the relationship between the particle that is present behind the particle and the particle that is present in front of the particle is "0".

That is, the rule data defines that, in the case where the certain particle belongs to the particle population (b) (cell population 3 in this example) of the ignorable particles and the different particle belongs to the particle population (a) (cell population 1 or 2 in this example) of the particles to be sorted, the certain particle is ignorable in relation to the different particle. Further, the rule data defines, in other cases, that the certain particle is not ignorable in relation to the different particle. By using the rule data thus defined, in the case where ignorable particles such as red blood cells are present within the predetermined range, it is possible to allow the particle to be collected together with the target particles. As a result, it is possible to improve the collection rate of the target particles.

In Step S206, the determination unit 201 further determines, on the basis of the relationship specified above, whether or not the particles are ignorable in the sorting determination.

For example, the determination unit 201 determines, in the case where it is specified that all the relationships between the certain particle and the different particles within the predetermined range are ignorable, that the certain particle is ignorable, and determines, in other cases (i.e., in the case where it is specified that one or more relationships between the certain particle and the different particles within the predetermined range are not ignorable), that the certain particle is not ignorable.

Regarding the case 8, both the relationships specified in terms of the two different particles for the particle that is a sorting-determination target are "0" as described above. For this reason, the determination unit 201 determines that the particle that is a sorting-determination target is "not ignorable". Further, both the relationships specified in terms of the two different particles for the particle that is present in front of the particle are "1" as described above. For this reason, the determination unit 201 determines that the particle that is present in front of the particle is "ignorable". Further, the relationships specified in terms of the two different particles for the particle that is present behind the particle are "0" as described above. For this reason, the determination unit 201 determines that the particle that is present in front of the particle is not "ignorable".

In Step S207, the determination unit 201 specifies the paths of all the particles determined to be not ignorable in Step S206. That is, the determination unit 201 does not need to specify the path of the particle determined to be ignorable in Step S206. The specification of the path may be performed by, for example, referring to the path assignment table.

Regarding the case 8, the determination unit 201 specifies the paths of the particle that is a sorting-determination target, which is determined to be not ignorable in Step S206, and the particle that is present behind the particle. The determination unit 201 refers to the path assignment table, and specifies that the path of the particle that is a sorting-determination target is the path 0 (shown as the "stream 0" in Fig. 19). Further, similarly, the determination unit 201 specifies that the path of the particle that is present behind the particle is the path 0 (shown as the "stream 0").

As described above, in the first embodiment of the present disclosure, the determination unit assigns no path to a particle determined to be ignorable in relation to all the different particles as a result of the determination of the relationships and assigns a path to particles other than the particle determined to be ignorable.

In Step S208, the determination unit 201 finally determines, on the path specified in Step S207, the path of the particle that is a sorting-determination target. As a result, whether or not the particle that is a sorting-determination target is sorted is determined. In addition, also the container in which the particle that is a sorting-determination target is to be collected is determined.

In the case where, for example, the paths of the two or more particles are specified (i.e., in the case where two or more paths are specified) in Step S207, the determination unit 201 may refer to the rule data shown in Fig. 18C and finally determine that path of the liquid droplet containing the particle that is a sorting-determination target in Step S208. The rule data defines that, in the case where the path specified in Step S207 coincides with the path, the path is a path of the liquid droplet containing the particle that is a sorting-determination target, and specifies that, in the case where the path specified in Step S207 does not coincide with the path, the path of the liquid droplet containing the particle that is a sorting-determination target is the path through which the particle that is not a sorting target travels. In the first embodiment of the present disclosure, one path may be associated with one collection container. As a result, when the path is specified, the collection container in which the liquid droplet containing the particle is to be collected is also specified.

Regarding the case 8, since both the paths of the two particles specified in Step S207 are "0", the determination unit 201 refers to the rule data and specifies that the path of the liquid droplet containing the particle that is a sorting-determination target is the path 0.

Step S209 shows an example of a processed performed by the determination unit 201 in the case where no other particle is present within the predetermined range. In Step S209, the determination unit 201 determines the path specified in Step S203 as the path of the particle that is a sorting-determination target. As a result, whether or not the particle that is a sorting-determination target is to be sorted is determined, and also the container in which the particle that is a sorting-determination target is to be collected is determined.

In Step S210, the determination unit 201 transmits the determination result obtained in Step S208 or S209 to the sorting control unit 202. The sorting control unit 202 controls the fine-particle sorting apparatus (particularly, the sorting unit) on the basis of the determination result to guide the traveling direction of the liquid droplet containing the particle that is a sorting-determination target to the specified path. As a result, the particle that is a sorting-determination target is collected into the collection container associated with the specified path.

Regarding the case 8, in Step S208, it has been specified the path of the liquid droplet containing the particle that is a sorting-determination target is the path 0. The determination unit 201 transmits the determination result to the sorting control unit 202. The sorting control unit 202 controls, on the basis of the determination result, the sorting unit to guide the liquid droplet to the path 0, and causes the liquid droplet to travel to the path 0. As a result, the particle that is a sorting-determination target is collected into the collection container 0.

The determination unit 201 performs the sorting determination process described above for each of the particles that are sorting-determination targets.

### (5-3) Realization of various sorting determination patterns by changing rule data

Also regarding the fine-particle sorting apparatus 200, the determination unit 201 may be configured to be capable of changing the rule data used in the determination. As a result, by changing the rule data used in the determination process flow, for example, various determination patterns such as the determination pattern for increasing the collection rate of the target cells and the determination pattern for increasing the purity of the target cells can be realized. As a result, various needs of the device user can be met.

The fact that various sorting determination patterns can be realized by changing the rule data in the cases 1 to 9 described in the (5-1) above will be described below. Note that the gating of the cell population employed in the following sorting determination pattern is the same as that described in the (5-1) above.

### (5-3-1) Example of sorting determination process that emphasizes purity of target cells and increases collection rate

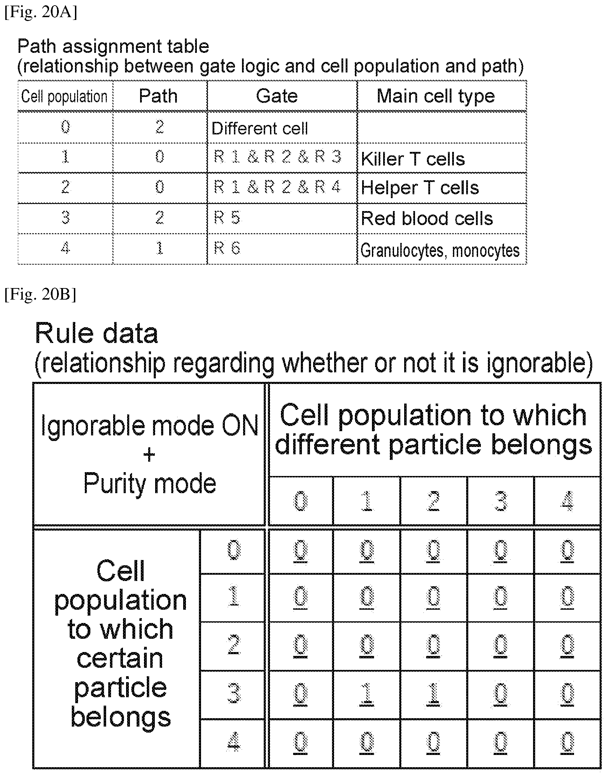

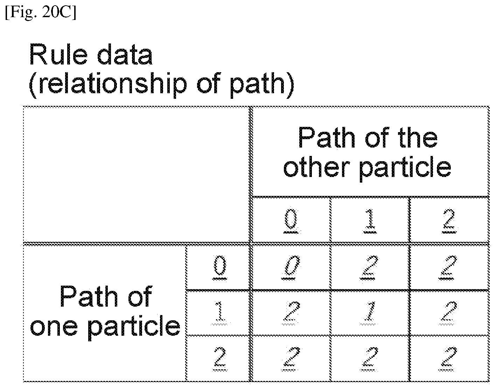

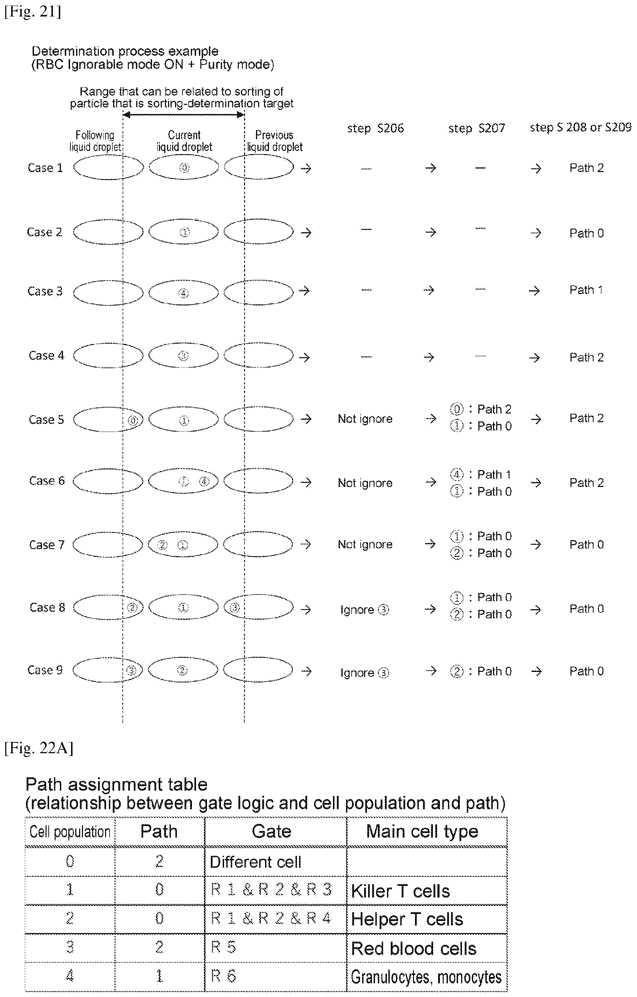

An example of this sorting determination process will be described with reference to Figs. 20 and 21. This sorting determination process realizes the sorting determination pattern 2 described above with reference to Fig. 17.

Fig. 20A shows a path assignment table as described above. Fig. 20B shows rule data defining whether or not the certain particle is ignorable in the sorting determination from the viewpoint of the relationship with the different particle. Fig. 20C shows rule data defining the path of the liquid droplet containing the particle that is a sorting-determination target on the basis of the relationship of the path. These figures are the same as those described above in Fig. 18.

Fig. 21 shows an example of the sorting determination result in the case where sorting determination is performed using the rule data.

Fig. 21 shows the sorting determination results in the cases 1 to 9. The sorting determination process in the cases 1 to 9 will be described below.

### (Regarding cases 1 to 4)

In the cases 1 to 4, since no other particle is present within the predetermined range around the particle that is a sorting-determination target, in Step S204, the determination unit 201 advances the process to Step S209. For this reason, on the basis of the path specified in Steps S201 to S203, the determination unit 201 determinates the path of the particle that is a sorting-determination target in Step S209.

Each case will be described below.

In the case 1, the determination unit 201 specifies that the particle that is a sorting-determination target belongs to the cell population 0 in Step S202. In Step S203, the determination unit 201 assigns, on the basis of the fact that the particle that is a sorting-determination target has been specified to belong to the cell population 0, "2" as the path of the particle, i.e., specifies the path of the particle as the path leading to the collection container (collection container 2) the particle that is not a sorting target is to be collected. In Step S209, the determination unit 201 finally determines that the path specified in Step S203 is the path of the particle.

In the case 2, In Step S202, the determination unit 201 specifies that the particle that is a sorting-determination target belongs to the cell population 1. In Step S203, the determination unit 201 assigns, on the basis of the fact that the particle that is a sorting-determination target has been specified to belong to the cell population 1, "0" as the path of the particle, i.e., specifies the path of the particle as the path leading to the collection container (collection container 0) in which the particles that belong to the cell populations 1 and 2, of the particles that are sorting targets, are to be collected. In Step S209, the determination unit 201 finally determines that the path specified in Step S203 is the path of the particle.

In the case 3, the determination unit 201 specifies that the particle that is a sorting-determination target belongs to the cell population 4 in Step S202. In Step S203, the determination unit 201 assigns, on the basis of the fact that the particle that is a sorting-determination target has been specified to belong to the cell population 4, "1" as the path of the particle, and specifies that the path of the particle is the path leading to the collection container (collection container 1) in which the particle that belongs to the cell population 4, of the particles that are sorting targets, is to be collected. In Step S209, the determination unit 201 finally determines that the path specified Step S203 is the path of the particle.

In the case 4, the determination unit 201 specifies that the particle that is a sorting-determination target belongs to the cell population 3 in Step S202. In Step S203, the determination unit 201 assigns, on the basis of the fact that the particle that is a sorting-determination target has been specified to belong to the cell population 3, "2" as the path of the particle, i.e., specifies the path of the particle as the path leading to the collection container (collection container 2) in which the particle that is not a sorting target is to be collected. In Step S209, the determination unit 201 finally determines that the path specified Step S203 is the path of the particle.

### (Regarding cases 5 to 9)

In the cases 5 to 9, unlike the cases 1 to 4, since a different particle is present within the predetermined range (guard time) around the particle that is a sorting-determination target, in Step S204, the determination unit 201 advances the process to Step S205.

Each case will be described below.

Regarding the case 5, in Step S203, the determination unit 201 assigns "0" as the path of the particle that is a sorting-determination target, i.e., specifies the path of the particle as the path leading to the collection container (collection container 0) in which the particles that belong to the cell populations 1 and 2, of the particles that are sorting targets, are to be collected.

Next, in Step S205, the determination unit 201 specifies that the different particle that is present behind the particle that is a sorting-determination target belongs to the cell population 0.

Next, in Step S206, the determination unit 201 refers to rule data defining, in accordance with a particle population to which a particle that is a sorting-determination target belongs and a particle population to which a different particle within a predetermined range around the particle belongs, a relationship between the particles (rule data shown in Fig. 20B), and specifies the relationship between the former particle and the latter particle.

Since the particle that is a sorting-determination target belongs to the cell population 1 and the different particle belongs to the cell population 0, the determination unit 201 refers to the rule data, and specifies "0" (not ignorable) as the relationship with respect to the particle that is a sorting-determination target and "0" (not ignorable) as the relationship with respect to the different particle.

In Step S206, the determination unit 201 determines, on the basis of the relationship specified above, whether or not the particle is ignorable in the sorting determination for each particle. Since "0" is specified for any particle as described above, the determination unit 201 determines that none of the particles is ignorable.

Next, in Step S207, the determination unit 201 specifies the paths of all particles determined to be not ignorable in Step S206. That is, the determination unit 201 specifies that the path is "0" for the particle that is a sorting-determination target, and specifies that the path is "2" for the different particle.

In Step S208, the determination unit 201 finally determines, on the basis of the path specified in Step S207, the path of the particle that is a sorting-determination target. Since the two paths do not coincide with each other, the determination unit 201 specifies that the path of the liquid droplet containing the particle that is a sorting-determination target is the path through which the particle that is not a sorting target travels.

More specifically, in Step S208, since the paths of the two or more particles are specified in Step S207, the determination unit 201 refers to, for example, the rule data shown in Fig. 20C and finally determines the path of the liquid droplet containing finally determines the path of the liquid droplet containing the particle that is a sorting-determination target. In the rule data, in the case where the path of one particle is "0" and the path of the other particle is "2", the final path is defined as "2" (shown in underlined italics in Fig. 20C). For this reason, the determination unit 201 finally determines that the path of the liquid droplet containing the particle that is a sorting-determination target is the path leading to the collection container (collection container 2) in which the particle that is not a sorting target is to be collected.

Next, in Step S210, the determination unit 201 transmits the sorting determination result obtained in Step 208 to the sorting control unit 202.

Regarding the case 6, in Step S203, the determination unit 201 assigns "0" as the path of the particle that is a sorting-determination target, i.e., the path of the particle as the path leading to the collection container (collection container 0) in which the particles that belong to the cell populations 1 and 2, of the particles that are sorting targets, are to be collected.

Next, in Step S205, the determination unit 201 specifies that the different particle that is present in front of the particle that is a sorting-determination target belongs to the cell population 4.

Next, in Step S206, the determination unit 201 refers to rule data defining, in accordance with a particle population to which a particle that is a sorting-determination target belongs and a particle population to which a different particle that is present within a predetermined range around the particle belongs, a relationship between the particles (rule data shown in Fig. 20B), and specifies the relationship between the former particle and the latter particle.

Since the particle that is a sorting-determination target belongs to the cell population 1 and the different particle belongs to the cell population 4, the determination unit 201 refers to the rule data and specifies "0" (not ignorable) as the relationship for the particle that is a sorting-determination target and "0" (not ignorable) as the relationship for also the different particle.

In Step S206, the determination unit 201 further determines, on the basis of the relationship specified above, whether or not the particle is ignorable in the sorting determination for each particle. Since "0" is specified for any particle as described above, the determination unit 201 determines that none of the particles is ignorable.

Next, in Step S207, the determination unit 201 specifies the paths of all particles determined to be not ignorable in Step S206. That is, the determination unit 201 specifies that the path is "0" for the particle that is a sorting-determination target and the path is "1" for the different particle.

In Step S208, the determination unit 201 finally determines, on the basis of the path specified in Step S207, the path of the particle that is a sorting-determination target. Specifically, since the two paths do not coincide with each other, the determination unit 201 specifies that the path of the liquid droplet containing the particle that is a sorting-determination target is the path through which the particle that is not a sorting target travels.

More specifically, in Step S208, since the path is specified in Step S207 for each of the two or more particles, the determination unit 201 refers to, for example, the rule data shown in Fig. 20C and finally determines the path of the liquid droplet containing the particle that is a sorting-determination target. In the rule data, in the case where the path of one particle is "0" and the path of the other particle is "1", the final path is defined as "2" (shown in underlined italics in Fig. 20C). For this reason, the determination unit 201 finally determines that the path of the liquid droplet containing the particle that is a sorting-determination target is the path leading to the collection container (collection container 2) in which the particle that is not a sorting target is to be collected.

Next, in Step S210, the determination unit 201 transmits the sorting determination result obtained in Step 208 to the sorting control unit 202.

Regarding the case 7, in Step S203, the determination unit 201 assigns "0" as the path of the particle that is a sorting-determination target, i.e., specifies the path of the particle as the path leading to the collection container (collection container 0) in which the particles that belong to the cell populations 1 and 2, of the particles that are sorting targets, are to be collected.

Next, in Step S205, the determination unit 201 specifies that the different particle that is present behind the particle that is a sorting-determination target belongs to the cell population 2.

Next, in Step S206, the determination unit 201 refers to the rule data defining, in accordance with a particle population to which a particle that is a sorting-determination target belongs and a particle population to which a different particle that is present within a predetermined range around the particle belongs, a relationship between the particles (rule data shown in Fig. 20B), and specifies the relationship between the former particle and the latter particle.

Since the particle that is a sorting-determination target belongs to the cell population 1 and the different particle belongs to the cell population 2, the determination unit 201 refers to the rule data and specifies "0" (not ignorable) as the relationship for the particle that is a sorting-determination target and "0" (not ignorable) as the relationship for the different particle.

In Step S206, the determination unit 201 determines, on the basis of the relationship specified above, whether or not the particles are ignorable in the sorting determination for each particle. Since "0" is specified for any particle as described above, the determination unit 201 determines that none of the particles is ignorable.

Next, in Step S207, the determination unit 201 specifies the paths of all particles determined to be not ignorable in Step S206. That is, the determination unit 201 specifies that the path is "0" for the particle that is a sorting-determination target and the path is "0" for the different particle.

In Step S208, the determination unit 201 finally determines, on the basis of the path specified in Step S207, the path of the particle that is a sorting-determination target. Specifically, since the two paths coincide with each other, the determination unit 201 specifies that the path of the liquid droplet containing the particle that is a sorting-determination target is the path through which the particle that is a sorting target travels.

Since the paths of the two or more particles are specified in Step S207, the determination unit 201 refers to, for example, the rule data shown in Fig. 20C and, finally determines the path of the liquid droplet containing the particle that is a sorting-determination target. In the rule data, in the case where the path of one particle is "0" and the path of a different particle is "0", the final path is defined as "0" (shown in underlined italics in Fig. 20C). For this reason, the determination unit 201 assigns "0" as the path of the liquid droplet containing the particle that is a sorting-determination target, i.e., specifies the path of the liquid droplet as the path leading to the collection container (collection container 0) in which the particles that belong to the cell populations 1 and 2, of the particles that are sorting targets, are to be collected.

Next, in Step S210, the determination unit 201 transmits the sorting determination result obtained in Step 208 to the sorting control unit 202.

Regarding the case 8, in Step S203, the determination unit 201 assign "0" as the path of the particle that is a sorting-determination target, i.e., specifies the path of the particle as the path leading to the collection container (collection container 0) in which the particles that belong to the cell populations 1 and 2, of the particles that are sorting targets, are to be collected.

Next, in Step S205, the determination unit 201 specifies that the different particle that is present in front of the particle that is a sorting-determination target belongs to the cell population 3 and the different particle that is present behind the particle that is a sorting-determination target belongs to the cell population 2.

Next, in Step S206, the determination unit 201 refers to the rule data defining, in accordance with a particle population to which a particle that is a sorting-determination target belongs and a particle population to which a different particle that is present within a predetermined range around the particle belongs, a relationship between the particles (rule data shown in Fig. 20B), and specifies the relationship between the former particle and the latter particle.

Regarding the particle that is a sorting-determination target (that belongs to the cell population 1), the relationship with the particle that is present in front of the particle is "0" in accordance with the rule data and also the relationship with the particle that is present behind the particle is "0" in accordance with the rule data. For this reason, the determination unit 201 determines that the particle that is a sorting-determination target is not ignorable in relation to the different particle in the sorting determination.

Regarding the particle that is present in front of the particle (that belongs to the cell population 3), the relationship with the particle that is a sorting-determination target is "1" in accordance with the rule data and also the relationship with the particle that is present behind the particle is "1" in accordance with the rule data. For this reason, the determination unit 201 determines that the particle that is present in front of the particle is ignorable in relation to the different particle in the sorting determination.

Regarding the particle that is present behind the particle (that belongs to the cell population 2), the relationship with the particle that is a sorting-determination target is "0" in accordance with the rule data and also the relationship with the particle that is present in front of the particle is "0" in accordance with the rule data. For this reason, the determination unit 201 determines that the particle that is present in front of the particle is not ignorable in relation to the different particle in the sorting determination.

Next, in Step S207, the determination unit 201 specifies paths of all particle determined to be not ignorable in Step S206, i.e., paths of the particle that is a sorting-determination target and the particle that is present behind the particle. That is, the determination unit 201 specifies that the path is "0" for the particle that is a sorting-determination target and the path is "0" also for the particle that is present behind the particle.

In Step S208, the determination unit 201 finally determines, on the basis of the path specified in Step S207, the path of the particle that is a sorting-determination target. Specifically, since the two paths coincide with each other, the determination unit 201, the determination unit 201 specifies that the path of the liquid droplet containing the particle that is a sorting-determination target is the path through which the particle that is a sorting target travels.

More specifically, in Step S208, since the paths of the two particles are specified in Step S207, the determination unit 201 refers to, for example, the rule data shown in Fig. 20C and finally determines the path of the liquid droplet containing the particle that is a sorting-determination target. In the rule data, in the case where the path of one particle is "0" and the path of a different particle is "0", the final path is defined as "0" (shown in underlined italics in Fig. 20C). For this reason, the determination unit 201 assigns "0" as the path of the liquid droplet containing the particle that is a sorting-determination target, i.e., finally determines the path of the liquid droplet as the path leading to the collection container (collection container 0) in which the particles that belong to the cell populations 1 and 2, of the particles that are sorting targets, are to be collected.

Next, in Step S210, the determination unit 201 transmits the sorting determination result obtained in Step 208 to the sorting control unit 202.

Regarding the case 9, in Step S203, the determination unit 201 assigns "0" as the path of the particle that is a sorting-determination target, i.e., specifies the path of the particle as the path leading to the collection container (collection container 0) in which the particles that belong to the cell populations 1 and 2, of the particles that are sorting targets, are to be collected.

Next, in Step S205, the determination unit 201 specifies that the different particle that is present behind the particle that is a sorting-determination target belongs to the cell population 3.

Next, in Step S206, the determination unit 201 refers to the rule data defining, in accordance with a particle population to which a particle that is a sorting-determination target belongs and a particle population to which a different particle that is present within a predetermined range around the particle belongs, a relationship between the particles (rule data shown in Fig. 20B), and specifies the relationship between the two particles.

Regarding the particle that is a sorting-determination target (that belongs to the cell population 1), the relationship with the particle that is present behind the particle is "0" in accordance with the rule data. For this reason, the determination unit 201 determines that the particle that is a sorting-determination target is not ignorable in relation to the different particle in the sorting determination.

Regarding the particle that is present behind the particle (that belongs to the cell population 3), the relationship with the particle that is a sorting-determination target is "1" in accordance with the rule data. For this reason, the determination unit 201 determines that the particle that is present behind the particle is ignorable in relation to the different particle in the sorting determination.

Next, in Step S207, the determination unit 201 specifies paths of all particles determined to be no ignorable in Step S206 (i.e., only the particle that is a sorting-determination target). That is, the determination unit 201 specifies that the path is "0" for the particle that is a sorting-determination target.

In Step S208, the determination unit 201 finally determines, on the basis of the path specified in Step S207, the path of the particle that is a sorting-determination target. More specifically, in Step S208, since the path is specified only for the particle that is a sorting-determination target in Step S207, the determination unit 201 finally determines that the specified path "0" is the final path.

Next, in Step S210, the determination unit 201 transmits the sorting determination result obtained in Step 208 to the sorting control unit 202.

As described above, the sorting determination pattern 2 described with reference to Fig. 17 can be realized by using the rule data defining the relationship regarding whether or not the particle is ignorable as shown in Figs. 20, and a sorting determination process that emphasizes the purity of the target cells and improves the collection rate of the target cells is enabled.

Note that the rule data can be said to define as follows.

The rule data defines that, in the case where the certain particle within the predetermined range belongs to the particle population (b) of the ignorable particles (cell population 3 in this example) and the different particle belongs to the particle population (a) (cell population 1 or 2 in this example) of the particles to be sorted, the certain particle is ignorable in relation to the different particles. Further, the rule data defines, in other cases, the certain particle is not ignorable in relation to the different particles. By using the rule data thus defined, in the case where ignorable particles such as red blood cells are present within the predetermined range, it is possible to allow the particle to be collected together with the target particles. As a result, it is possible to improve the collection rate of the target particles.

### (5-3-2) Example of sorting determination process emphasizing purity of target cells

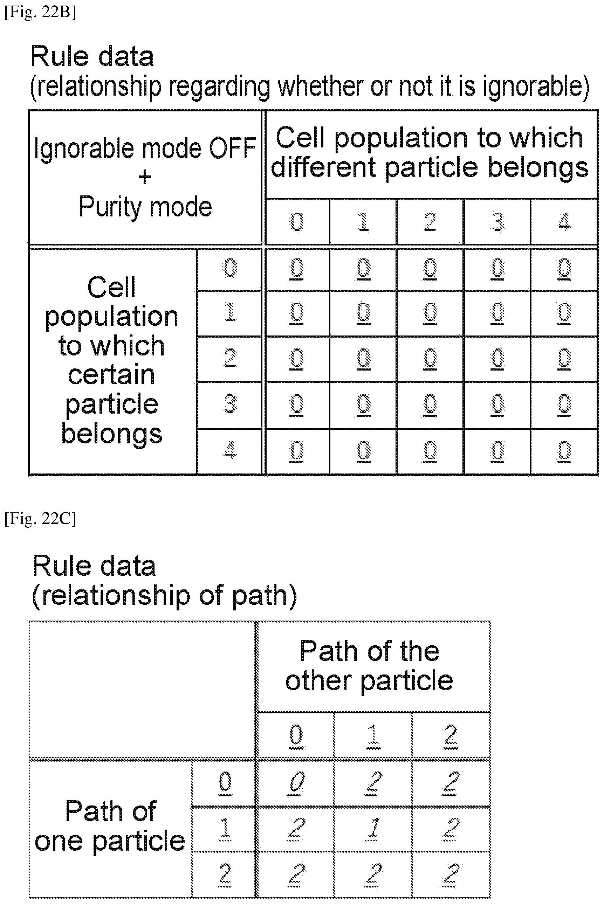

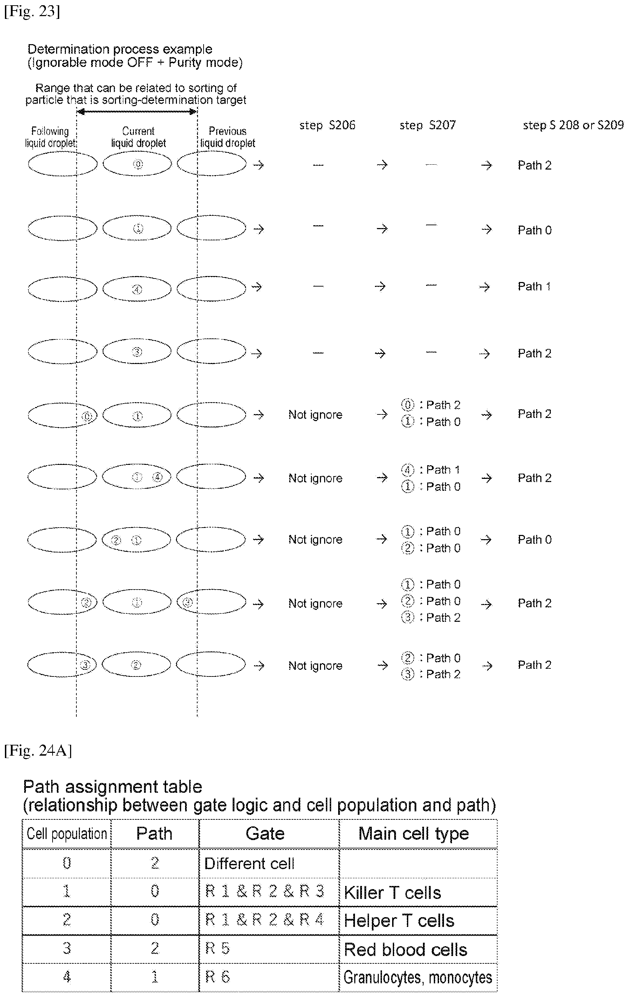

An example of this sorting determination process will be described with reference to Figs. 22 and 23. This sorting determination process emphasizes the purity of the target cells, and realizes the sorting determination pattern 1 described above with reference to Fig. 17.

Fig. 22A is a path assignment table as described above. Fig. 22B shows rule data defining whether or not a certain particle is ignorable in the sorting determination from the viewpoint of the relationship with the different particle. Fig. 22C shows rule data defining the path of the liquid droplet containing the particle that is a sorting-determination target on the basis of the relationship of the path.

Fig. 23 shows an example of the sorting determination results in the case where sorting determination is performed using the rule data.

Fig. 23 shows the sorting determination results in the cases 1 to 9. The sorting determination process in the cases 1 to 9 will be described below.

### (Regarding cases 1 to 4)

In the cases 1 to 4, the same process as that described for the cases 1 to 4 in the (5-3-1) above is performed, and the same process result is obtained.

### (Regarding cases 5 to 9)

Also for the cases 5 to 7, the same process as that described for the cases 5 to 7 in the (5-3-1) above is performed, and the same process result is obtained.

Regarding the cases 8 and 9, a determination process different from that in the (5-3-1) above is performed. These cases will be described below.

Regarding the case 8, in Step S203, the determination unit 201 assign "0" as the path of the particle that is a sorting-determination target, i.e., specifies the path of the particle as the path leading to the collection container (collection container 0) in which the particles that belong to the cell populations 1 and 2, of the particles that are sorting targets, are to be collected.

Next, in Step S205, the determination unit 201 specifies that the different particle that is present in front of the particle that is a sorting-determination target belongs to the cell populations and the different particle that is present behind the particle that is a sorting-determination target belongs to the cell population 2.

Next, in Step S206, the determination unit 201 refers to rule data defining, in accordance with a particle population to which a particle that is a sorting-determination target belongs and a particle population to which a different particle that is present within a predetermined range around the particle belongs, a relationship between the particles (rule data shown in Fig. 22B), and specifies the relationship between the former particle and the latter particle. The rule data shown in Fig. 22B does not include "1" unlike that shown in Fig. 20B. For this reason, in the case where this rule data is adopted, no particle is determined to be ignorable.

Regarding the particle that is a sorting-determination target (that belongs to the cell population 1), the relationship with the particle that is present in front of the particle is "0" in accordance with the rule data and also the relationship with the particle that is present behind the particle is "0" in accordance with the rule data. For this reason, the determination unit 201 determines that the particle that is a sorting-determination target is not ignorable in relation to the different particle in the sorting determination.

Regarding the particle that is present in front of the particle (that belongs to the cell population 3), the relationship with the particle that is a sorting-determination target is "0" in accordance with the rule data and also the relationship with the particle that is present behind the particle is "0" in accordance with the rule data. For this reason, the determination unit 201 determines that the particle that is present in front of the particle is not ignorable in relation to the different particle in the sorting determination.

Regarding the particle that is present behind the particle (that belongs to the cell population 2), the relationship with the particle that is a sorting-determination target is "0" in accordance with the rule data and also the relationship with the particle that is present in front of the particle is "0" in accordance with the rule data. For this reason, the determination unit 201 determines that the particle that is present in front of the particle is not ignorable in relation to the different particle in the sorting determination.

Next, in Step S207, the determination unit 201 specifies the paths of all particles determined to be not ignorable in Step S206 (i.e., the particle that is a sorting-determination target, the particle that is present in front of the particle, , and the particle that is present behind the particle). That is, the determination unit 201 specifies that the path is "0" for the particle that is a sorting-determination target and the path is "0" also for the particle that is present behind the particle. Meanwhile, the determination unit 201 specifies that the path is "2" for the particle that is present behind the particle.

In Step S208, the determination unit 201 finally determines, on the basis of the path specified in Step S207, the path of the particle that is a sorting-determination target. Specifically, since the three paths do not coincide with each other, the determination unit 201 assigns the path "2" through which the particle that is not a sorting target travels as the path of the liquid droplet containing the particle that is a sorting-determination target, i.e., finally determines the path of the liquid droplet as the path leading to the collection container (collection container 2) in which the particle that is not a sorting target is to be collected.

Next, in Step S210, the determination unit 201 transmits the sorting determination result obtained in Step 208 to the sorting control unit 202.

As described above, by using the rule data defining the relationship regarding whether it is ignorable shown in Figs. 22, the sorting determination pattern 1 described with reference to Fig. 17 can be realized, and the purity of the target cells can be increased.

Note that the rule data can be said to define as follows.

The rule data defines that, also in the case where a certain particle within the predetermined range belongs to any of the particle populations (a) to (c), the certain particle is not ignorable in relation to the different particle. By using the rule data thus defined, it is possible to increase the purity of the target particles.

### (5-3-3) Example of sorting determination process with narrowed range considered in sorting determination

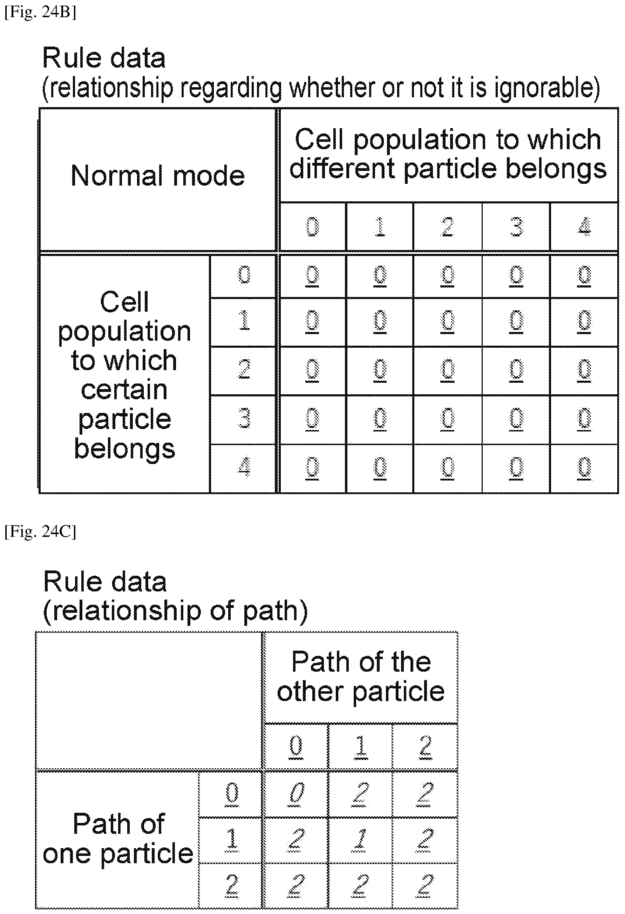

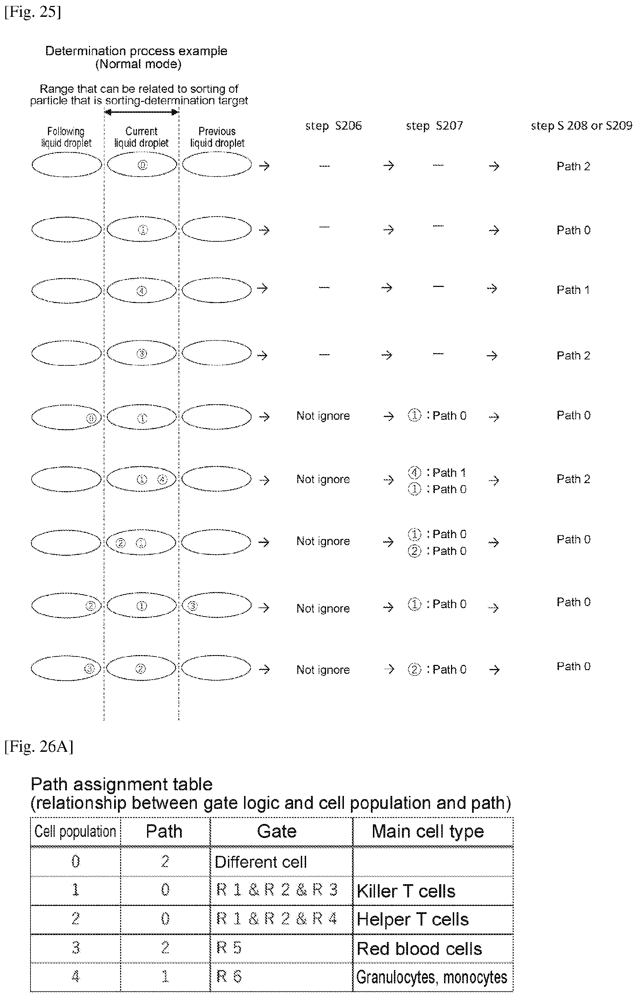

In the (5-3-1) and (5-3-2) above, the range in which the particles considered in sorting determination are present is set to include not only a liquid droplet including the particle that is a sorting-determination target but also a part of liquid droplets in front of and behind the liquid droplet. This is to eliminate the possibility that a particle to be contained in the liquid droplets in front of and behind the liquid droplet is contained in the liquid droplet containing the particle that is a sorting-determination target, and increase the purity of the target particles. However, the collection rate is emphasized more than the purity in some cases. In such a case, the range may be narrowed. By narrowing the range, it is possible to increase the collection rate of the target particles. As an example of such cases, the results of the sorting determination process in the case where the range is set to include the liquid droplet containing the particle that is a sorting-determination target but does not include the liquid droplet in front of and behind the liquid droplet will be described below with reference to Figs. 24 and 25.

Figs. 24 show a path assignment table and rule data used in the sorting determination process, and they are the same as those described in the (5-3-2) above. Fig. 25 is a diagram showing the result of the sorting determination process. As shown in Fig. 25, the range in which the particle to be considered in the sorting determination in Fig. 25 is present is narrower than the range in which the particle to be considered in the sorting determination in Fig. 23 described in the (5-3-2) above is present.

### (Regarding cases 1 to 4)

In the cases 1 to 4, the same process as that described for the cases 1 to 4 in the (5-3-2) above is performed, and the same process result is obtained.

### (Regarding cases 5 to 9)

Regarding the case 5, since the range is narrowed, in Step S204, the determination unit 201 advances the process to Step S209 because no other particle is present within the predetermined range around the particle that is a sorting-determination target, unlike the case described in the (5-3-2) above. As a result, the sorting determination process result of the case 5 is the same as that of the case 2. As a result, the target particles discarded in the (5-3-2) above are collected in the collection container 0 also in the case 5,

Regarding the cases 6 and 7, the range is narrowed, but there is no change in the particles considered in the sorting determination. Therefore, the same sorting determination process as that in the (5-3-2) above is performed, and the same process result is obtained.

Regarding the case 8, since the range is narrowed, in Step S204, the determination unit 201 advances the process to Step S209 because no other particle is present within the predetermined range around the particle that is a sorting-determination target unlike the case described in the (5-3-2) above. As a result, the sorting determination process result of the case 8 is the same as that of the case 2. As a result, the target particles discarded in the (5-3-2) above are collected in the collection container 0 also in the case 5.

Regarding also the case 9, since the range is narrowed, in Step S204, the determination unit 201 advances the process to Step S209 because no other particle is present within the predetermined range around the particle that is a sorting-determination target unlike the case described in the (5-3-2) above.

In the case 9, in Steps S201 to S203, the particle that is a sorting-determination target is determined to belong to the cell population 2, and the path of the particle is specified as "0". For this reason, in Step S209, the determination unit 201 finally determines that the path of the particle that is a sorting-determination target is "0", i.e., specifies the path of the particle as the path leading to the collection container (collection container 0) in which the particles that belong to the cell populations 1 and 2 are to be collected.

### (5-3-4) Example of sorting determination process emphasizing collection rate of target cells

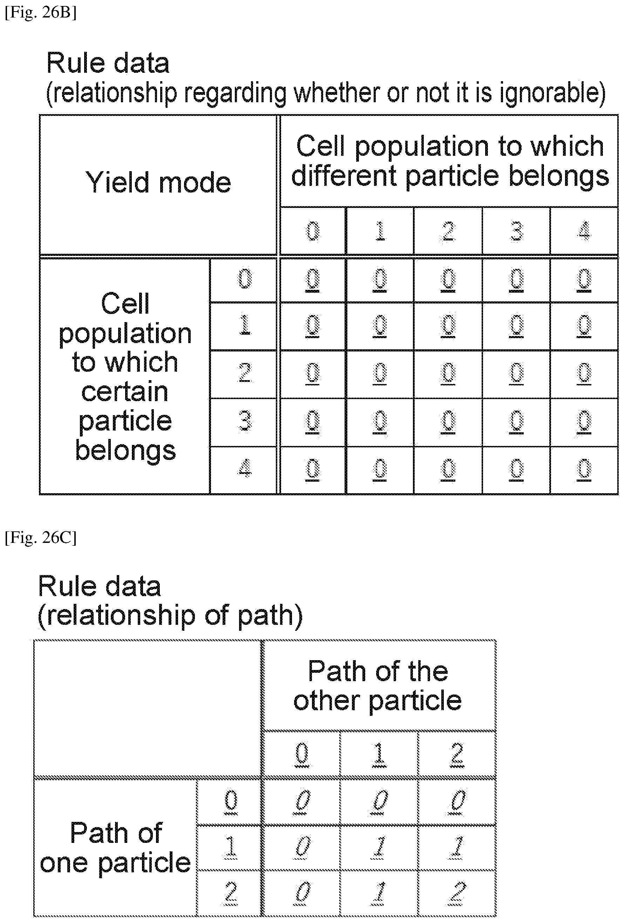

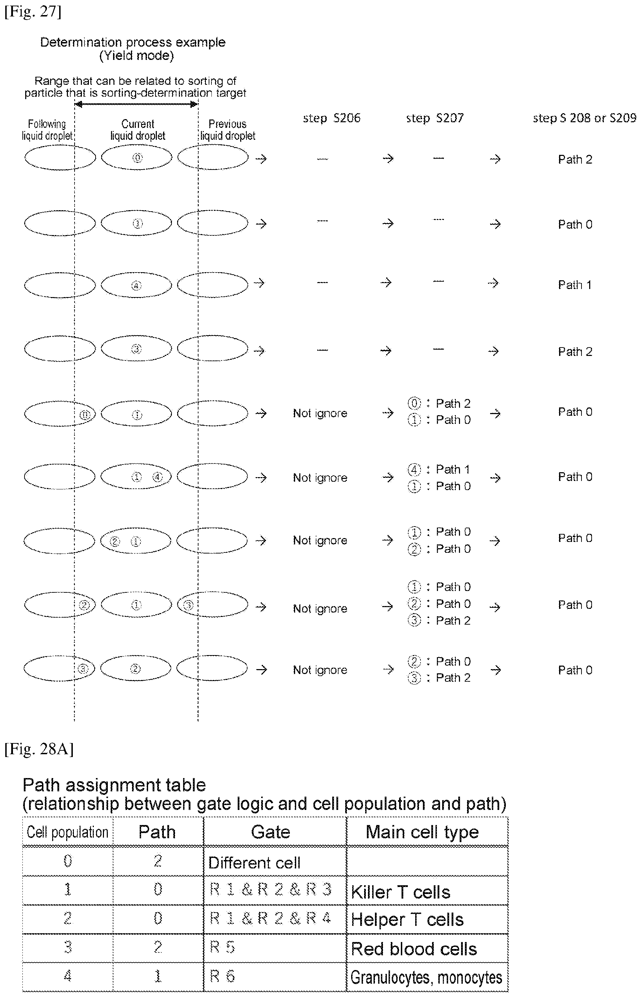

In the (5-3-2) above, the sorting determination process that emphasizes the purity of the target cells has been described. By changing the rule data referred to in Step S208, it is also possible to increase the collection rate of the target cells. A sorting determination process that increases the collection rate of the target cells will be described below with reference to Figs. 26 and 27.

Figs. 26 show a path assignment table and rule data used in the sorting determination process.

The path assignment table and rule data in Figs. 26A and 26B are the same as those described in the (5-3-2) above.

The rule data shown in Fig. 26C is different from that described in the (5-3-2) above. In Fig. 26C, the path 0 has the highest priority, the path 1 has the second highest priority, and the path 2 has the lowest priority. That is, in the case where a particle to which the path 0 is assigned is included in the range, the path of the liquid droplet containing the particle that is a sorting-determination target is defined as 0 even if a particle to which the path 1 or 2 is assigned is included in the range. In the case where the particle assigned to the path 1 and the particle assigned to the path 2 are present within the range, the path of the liquid droplet containing the particle that is a sorting-determination target is defined as 1. The path of the liquid droplet containing the particle that is a sorting-determination target is defined as 2 only in the case where only the particle assigned to the path 2 is present within the range.

### (Regarding cases 1 to 4)

Regarding the cases 1 to 4, the same process as the process described for the cases 1 to 4 in the (5-3-2) above is performed, the same process result is obtained.

### (Regarding cases 5 to 9)

Regarding the case 5, in Steps S201 to S207, the same process as that in the (5-3-2) above is performed.

In Step S208, the determination unit 201 refers to the rule data shown in Fig. 26C and finally determines the path of the liquid droplet containing the particle that is a sorting-determination target. In the rule data, in the case where the path of one particle is "0" and the path of the other particle is "2", the final path is defined as "0" (described in underlined italics in Fig. 26 26C). For this reason, the determination unit 201 finally determines that the path of the liquid droplet containing the particle that is a sorting-determination target is the path leading to the collection container (collection container 0) in which the particle that is a sorting target is to be collected.

Regarding also the case 6, in Steps S201 to S207, the same process as that in the (5-3-2) above is performed.

In Step S208, the determination unit 201 refers to the rule data shown in Fig. 26C and finally determines the path of the liquid droplet containing the particle that is a sorting-determination target. In the rule data, in the case where the path of one particle is "0" and the path of the other particle is "1", the final path is "0" (shown in underlined italics in Fig. 26C). For this reason, the determination unit 201 finally determines that the path of the liquid droplet containing the particle that is a sorting-determination target is the path leading to the collection container (collection container 0) in which the particle that is a sorting target is to be collected.

Regarding also the case 7, in Steps S201 to S207, the same process as that in the (5-3-2) above is performed.

In Step S208, the determination unit 201 refers to the rule data shown in Fig. 26C and finally determines the path of the liquid droplet containing the particle that is a sorting-determination target. In the rule data, in the case where the path of one particle is "0" and the path of a different particle is "0", the final path is "0" (shown in underlined italics in Fig. 26C). For this reason, the determination unit 201 finally determines that the path of the liquid droplet containing the particle that is a sorting-determination target is the path leading to the collection container (collection container 0) in which the particle that is a sorting target is to be collected.

Also regarding the case 8, in Steps S201 to S207, the same process as that in the (5-3-2) above is performed.

In Step S208, the determination unit 201 refers to the rule data shown in Fig. 26C and finally determines the path of the liquid droplet containing the particle that is a sorting-determination target. That paths assigned to the particles included in the range are "0" and "2". The final path is defined as "0" (shown in underlined italics in Fig. 26C) for any of the cases where the two paths assigned to the two particles are "0" and "0", where the two paths assigned to the two particles are "0" and "2", and where the two paths assigned to the two particles are "2" and "0". For this reason, the determination unit 201 finally determines that the path of the liquid droplet containing the particle that is a sorting-determination target is the path leading to the collection container (collection container 0) in which the particle that is a sorting target is to be collected.

Regarding the case 9, in Steps S201 to S207, the same process as that in the (5-3-2) above is performed.

In Step S208, the determination unit 201 refers to the rule data shown in Fig. 26C and finally determines the path of the liquid droplet containing the particle that is a sorting-determination target. The paths assigned to the particles included in the range are "0" and "2". In the case where the two paths assigned to the two particles are "0" and "2", the final path is defined as "0" (shown in underlined italics in Fig. 26C). For this reason, the determination unit 201 finally determines that the path of the liquid droplet containing the particle that is a sorting-determination target is the path leading to the collection container (collection container 0) in which the particle that is a sorting target is to be collected.

(5-3-5) Example of sorting determination process determining that sorting is performed only in case where one particle is contained within range considered in sorting determination

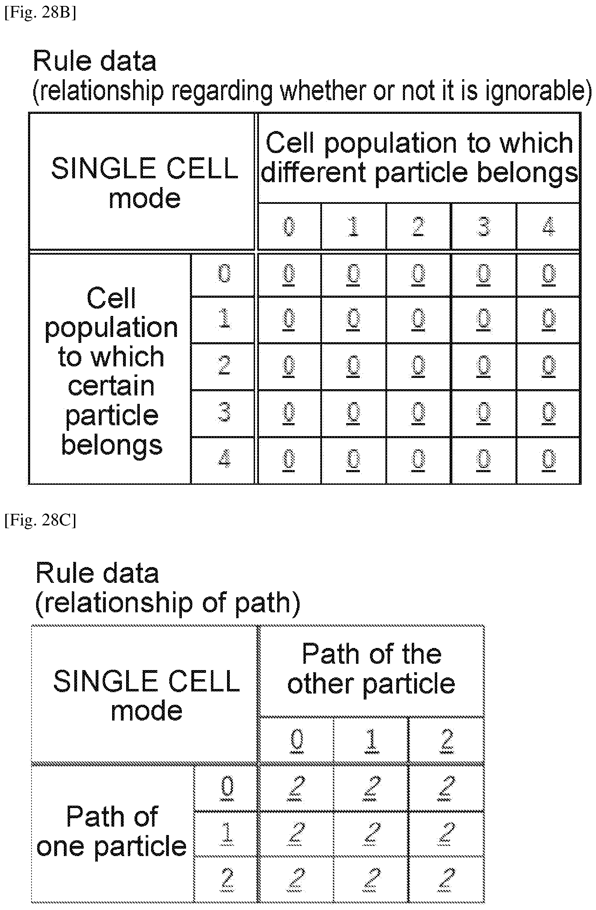

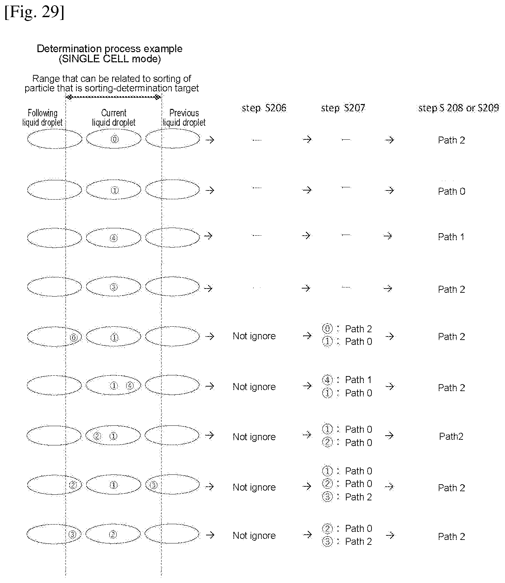

In accordance with the present disclosure, it is also possible to determined that, only in the case where one particle is included within a range considered in sorting determination, the particle is to be sorted. With such a determination, it is possible to further increase the purity of the target cells. A determination process of making such a determination will be described with reference to Figs. 28 and Fig. 29.

Figs. 28 show a path assignment table and rule data used in the sorting determination processing. The path assignment table in Fig. 28A and the rule data in Fig. 28B are the same as those described in the (5-3-2) above. In the rule data of Fig. 28C, "2" is defined as the final path regardless of the path assigned to each of the two particles. As a result, in the case where two or more particles are included in the range, the path of the liquid droplet containing the particle that is a sorting-determination target is finally determined as the path leading to the collection container (collection container 2) in which the particle that is not a sorting target is to be collected.

Fig. 29 is a diagram for describing a determination process result using the rule data in the cases 1 to 9. In Fig. 29, the range in which the particles to be considered in the sorting determination are present is set so as to include not only the liquid droplet containing the particle that is a sorting-determination target but also all liquid droplets in front of and behind the liquid droplet. This is to further increase the purity of the target particles.

### (Regarding cases 1 to 4)

In the cases 1 to 4, the same process as that described for the cases 1 to 4 in the (5-3-2) above is performed, and the same process result is obtained.

### (Regarding the cases 5 to 9)

Regarding the cases 5 to 9, in Steps S201 to S207, the same process as that in the (5-3-2) above is performed.

In Step S208, the determination unit 201 refers to the rule data shown in Fig. 26C, finally determines the path of the liquid droplet containing the particle that is a sorting-determination target.

For example, regarding the case 5, in the rule data, in the case where the path of one particle is "0" and the path of the other particle is "2", the final path is defined as "2" (shown in underlined italics in Fig. 28C). For this reason, the determination unit 201 finally determines that the path of the liquid droplet containing the particle that is a sorting-determination target is the path leading to the collection container (collection container 2) in which the particle that is a sorting target is to be collected.

Regarding the other cases, the determination unit 201 refers to the rule data and specifies the final path as "2", i.e., specifies that the path of the liquid droplet containing the particle that is a sorting-determination target is the path leading to the collection container (collection container 2) in which the particle that is a sorting target is to be collected.

### 2. Second embodiment (Computer-implemented fine-particle sorting method)

The present disclosure provides also a computer-implemented fine-particle sorting method including a determination step of performing sorting determination of a particle using rule data defining, in accordance with a particle population to which a particle that is a sorting-determination target belongs and a particle population to which a different particle within a predetermined range around the particle belongs, a relationship between the particles. The particle populations to which the particles may belong to include the following particle populations:
(a) a particle population of particles to be sorted;
(b) a particle population of particles that are not to be sorted but are ignorable in the determination; and
(c) a particle population of particles that are neither the particles to be sorted nor the ignorable particles.

By executing the determination step, it is possible to collect the particles to be sorted at a high collection rate as described in the 1. above.

It is favorable that the ignorable particles of the particle population (c) include red blood cells. As a result, as described in the 1. above, the red blood cells can be ignored in the determination step. As a result, the collection rate of the target cells can be increased while suppressing the effect on the operation after a sorting process such as culturing and gene manipulation.

The determination step in the computer-implemented fine-particle sorting method according to the second embodiment of the present disclosure may be performed in accordance with the process flow described with reference to Fig. 10 and Fig. 19 in the 1. above. Hereinafter, the steps common to these two process flows will be described first. Next, processes specific to each of these process flows will be described.

### (1) Steps common to two process flows

The determination step may include a particle-population determination step of determining a particle population to which a particle that is a sorting-determination target belongs. This step corresponds to Step S102 described with reference to Fig. 10 and Step S202 described with reference to Fig. 19 in the 1. above. The description for these steps applies to the presence determination step.

Further, the determination step may include a provisional-determination step of provisionally determining the path of the particle that is a sorting-determination target on the basis of the determined particle population. The provisional-determination step corresponds to Step S103 described with reference to Fig. 10 and StepS203 described with reference to Fig. 19. in the 1. above. The description for these steps applies to the provisional-determination step.

In a favorable embodiment of the present disclosure, the determination step includes a presence determination step of determining whether or not a different particle is present within the predetermined range. The presence determination step corresponds to Step S104 described with reference to Fig. 10 and Step S204 described with reference to Fig. 19 in the 1. above. The description for these steps applies to the presence determination step.

In a favorable embodiment of the present disclosure, the determination step may include a final-determination step of finally determining the path provisionally determined in the provisional-determination step as a path of the particle that is a sorting-determination target. This final-determination step corresponds to Step S108 described with reference to Fig. 10 and Step S209 described with reference to Fig. 19 in the 1. above. The description for these steps applies to the final-determination step.

In a favorable embodiment of the present disclosure, the determination step includes a particle-population determination step of determining a particle population to which the different particle belongs. The particle-population determination step corresponds to Step S105 described with reference to Fig. 10 and Step S205 described with reference to Fig. 19 in the 1. above. The description for these steps applies to the particle-population determination step.

In a favorable embodiment of the present disclosure, said determination step includes a relationship specification step of referring to the rule data and specifying a relationship between a plurality of particles that is present within the predetermined range. The relationship specification step corresponds to Step S106 described with reference to Fig. 10 and Step S206 described with reference to Fig. 10 in the 1. above. The description for these steps applies to the relationship specification step.

### (2) Step specific to process flow in Fig. 10

In one embodiment of the present disclosure, in the relationship specification step refers to the rule data and specifies the relationship between a particle population to which a particle that is a sorting-determination target belongs and a particle population to which a different particle belongs. The relationship specification step that specifies the relationship in this way corresponds to StepS106 described with reference to Fig. 10 in the 1 above.

In one embodiment of the present disclosure, the determination step includes a final determination step of determining, on the basis of the path determined in the provisional-determination step and the relationship specified in the relationship specification step, whether or not the particle that is a sorting-determination target is to be sorted. The final-determination step corresponds to Step S107 described with reference to Fig. 10 in the 1. above.

### (3) Step specific to process flow in Fig. 19

In a different embodiment of the present disclosure, in the relationship specification step, the rule data may be referred to and the relationship with the different particle may be specified for each of the particles present within the predetermined range. The relationship specification step that specifies the relationship in this way corresponds to Step S206 described with reference to Fig. 19. In this embodiment, the relationship to be specified may be a relationship regarding whether or not the particle is ignorable in the sorting determination in terms of the presence of the different particle.

In the different embodiment, the computer-implemented fine-particle sorting method further includes a path specification step of specifying, for all of the particles determined to be not ignorable in the relationship specification step, a path through which the particle should travel, on the basis of the particle population to which the particle belongs. The path specification step corresponds to Step S207 in Fig. 19. In the path specification step, for the particle determined to be ignorable in the path specification step, the flow path through which the particle should travel does not need to be specified.

In the different embodiment, the computer-implemented fine-particle sorting method further includes a final-determination step of finally determining, on the basis of the path specified in the path specification step, a path of a liquid droplet containing a particle that is a sorting-determination target. The final-determination step corresponds to Step S208 in Fig. 19.

In the case where two or more paths are specified in the path specification step, rule data defining the path of the liquid droplet containing the particle that is a sorting-determination target on the basis of the two or more paths may be used. The rule data defines that, in the case where the two or more paths coincide with each other, the path of the liquid droplet is the coincided path, and in the case where the two or more paths do not coincide with each other, the path of the liquid droplet is the path through which the particle that is not a sorting target travels (e.g., the path through which the particle to be discarded travels).

### 3. Third embodiment (program)

The present disclosure also provides a program for causing a fine-particle sorting apparatus to execute the computer-implemented fine-particle sorting method described in the 2. above. The program may be stored in a hard disk provided in the fine-particle sorting apparatus according to an embodiment of the present disclosure, or the program may be recorded on a recording medium such as a a micro SD memory card, an SD memory card, and a flash memory. For example, the control unit of the fine-particle sorting apparatus may cause the fine-particle sorting apparatus to execute the computer-implemented fine-particle sorting method according to an embodiment of the present disclosure in accordance with the program.

### 4. Fourth embodiment (fine particle-sorting system)

The present disclosure also provides a fine-particle-sorting determination system including a determination unit that performs the sorting determination described in the 1. above. The system may further include, for example, a rule-data generating unit that generates rule data used in the sorting determination. The rule-data generating unit may generate the rule data on the basis of, for example, setting relating to the particle populations (a) to (c) input by a user. The setting relating to the particle populations (a) to (c) may be gating or setting similar to the gating. The rule-data generating unit may generate the rule data on the basis of the setting relating to the particle population as well as setting relating to the purity and/or collection rate of the target particles.

### Reference Signs List

100 fine-particle sorting apparatus
101 a light irradiation unit
102 detection unit
103 control unit
105 determination unit
150 fine-particle sorting microchip
200 fine-particle sorting apparatus
1 control unit
2 light irradiation unit
3 detection unit
201 determination unit
T chip

## Claims

1. A fine-particle sorting apparatus (100), comprising:
a determination unit (105) that performs sorting determination of a particle,
the determination unit (105) performing the determination using rule data defining, in accordance with a particle population to which a particle that is a sorting-determination target belongs and a particle population to which a different particle within a predetermined range around the particle belongs, a relationship between the particles,
particle populations to which the particle that is a sorting-determination target and the different particle within the predetermined range may belong including the following particle populations of
(a) a particle population of particles to be sorted,
(b) a particle population of particles that are not to be sorted but are ignorable in the determination, and
(c) a particle population of particles that are neither the particles to be sorted nor the ignorable particles,
**characterised by** the ignorable particles including red blood cells.

2. The fine-particle sorting apparatus (100) according to claim 1, wherein
the determination unit (105) is capable of changing rule data used in the determination, and
at least one piece of the rule data available to the determination (105) unit defines that,
where the particle that is a sorting-determination target belongs to the (a) particle population of the particles to be sorted and the different particle within the predetermined range around the particle belongs to the (b) particle population of the ignorable particles, a path of the different particle is a path of the particles to be sorted.

3. The fine-particle sorting apparatus (100) according to claim 1, further comprising
a rule-data generating unit that generates the rule data, wherein
the rule-data generating unit generates the rule data on a basis of the particle populations to which the particle that is a sorting-determination target and the different particle within the predetermined range may belong.

4. The fine-particle sorting apparatus (100) according to claim 1, further comprising
an input unit (5) that receives a gating operation for setting the particle populations to which the particle that is a sorting-determination target and the different particle within the predetermined range may belong.

5. The fine-particle sorting apparatus (100) according to claim 1, wherein
the determination unit (105) determines, on a basis of light generated by irradiating a particle flowing in a flow path with light, which particle population the particle belongs to.

6. The fine-particle sorting apparatus (100) according to claim 1, which is used to sort blood cells.

7. The fine-particle sorting apparatus (100) according to claim 1, which is used to selectively sort predetermined T cells from among blood cells.

8. The fine-particle sorting apparatus (100) according to claim 1, wherein
the determination unit (105) performs the determination where the particle that is a sorting-determination target and one or more different particles are present within the predetermined range.

9. The fine-particle sorting apparatus (100) according to claim 1, wherein
the determination unit determines relationships between respective particles in a particle group consisting of the particle that is a sorting-determination target and the different particle within the predetermined range and all different particles in the particle group.

10. The fine-particle sorting apparatus (100) according to claim 9, wherein
the determination unit (105) determines the relationships using rule data defining whether or not the respective particles are ignorable in relation to all the different particles.

11. The fine-particle sorting apparatus (100) according to claim 10, wherein
the determination unit (105) assigns no path to a particle determined to be ignorable in relation to all the different particles as a result of the determination of the relationships and assigns a path to particles other than the particle determined to be ignorable.

12. The fine-particle sorting apparatus (100) according to claim 11, wherein
the determination unit (105) uses rule data defining, in accordance with the assigned path, a path of the particle that is a sorting-determination target to determine the path of the particle that is a sorting-determination target.

13. A fine particle-sorting system, comprising: a fine particle sorting apparatus according to claim 1, and a rule-data generating unit that generates rule data used in the sorting determination.

14. A computer-implemented fine-particle sorting method, comprising:
a determination step of performing sorting determination of a particle using rule data defining, in accordance with a particle population to which a particle that is a sorting-determination target belongs and a particle population to which a different particle within a predetermined range around the particle belongs, a relationship between the particles,
particle populations to which the particle that is a sorting-determination target and the different particle within the predetermined range may belong including the following particle populations of
(a) a particle population of particles to be sorted,
(b)a particle population of particles that are not to be sorted but are ignorable in the determination, and
(c)a particle population of particles that are neither the particles to be sorted nor the ignorable particles,
**characterised by** the ignorable particles including red blood cells.

15. A program that causes a fine-particle sorting apparatus (100) to execute a fine-particle sorting method including
a determination step of performing sorting determination of a particle using rule data defining, in accordance with a particle population to which a particle that is a sorting-determination target belongs and a particle population to which a different particle within a predetermined range around the particle belongs, a relationship between the particles,
particle populations to which the particle that is a sorting-determination target and the different particle within the predetermined range may belong including the following particle populations of
(a) a particle population of particles to be sorted,
(b)a particle population of particles that are not to be sorted but are ignorable in the determination, and
(c)a particle population of particles that are neither the particles to be sorted nor the ignorable particles,
**characterised by** the ignorable particles including red blood cells.

## Patentansprüche

1. Mikropartikelsortiereinrichtung (100), umfassend:
eine Bestimmungseinheit (105), die eine Sortierbestimmung eines Partikels durchführt,
wobei die Bestimmungseinheit (105) die Bestimmung unter Verwendung von Regeldaten durchführt, die in Übereinstimmung mit einer Partikelpopulation, zu der ein Partikel gehört, das ein Sortierbestimmungsziel ist, und einer Partikelpopulation, zu der ein anderes Partikel innerhalb eines vorgegebenen Bereichs um das Partikel herum gehört, eine Beziehung zwischen den Partikeln definieren,
Partikelpopulationen, zu denen das Partikel, das ein Sortierbestimmungsziel ist, und das andere Partikel innerhalb des vorgegebenen Bereichs gehören können, einschließlich der folgenden Partikelpopulationen
(a) eine Partikelpopulation der zu sortierenden Partikel,
(b) eine Partikelpopulation von Partikeln, die nicht sortiert werden sollen, aber bei der Bestimmung vernachlässigbar sind, und
(c) eine Partikelpopulation von Partikeln, die weder die zu sortierenden Partikel noch die vernachlässigbaren Partikel sind,
**dadurch gekennzeichnet, dass**
die zu vernachlässigenden Partikel rote Blutkörperchen einschließen.

2. Mikropartikelsortiereinrichtung (100) nach Anspruch 1, wobei
die Bestimmungseinheit (105) in der Lage ist, bei der Bestimmung verwendete Regeldaten zu ändern, und
mindestens ein Teil der der Bestimmungseinheit (105) zur Verfügung stehenden Regeldaten definiert, dass,
wenn das Partikel, das ein Sortierbestimmungsziel ist, zu (a) der Partikelpopulation der zu sortierenden Partikel gehört und das andere Partikel innerhalb des vorgegebenen Bereichs um das Partikel herum zu (b) der Partikelpopulation der zu vernachlässigbaren Partikel gehört, ein Pfad des anderen Partikels ein Pfad der zu sortierenden Partikel ist.

3. Mikropartikelsortiereinrichtung (100) nach Anspruch 1, ferner umfassend
eine Regeldatenerzeugungseinheit, die die Regeldaten erzeugt, wobei
die Regeldatenerzeugungseinheit die Regeldaten auf Grundlage der Partikelpopulationen erzeugt, zu denen das Partikel, das ein Sortierbestimmungsziel ist, und das andere Partikel innerhalb des vorgegebenen Bereichs gehören können.

4. Mikropartikelsortiereinrichtung (100) nach Anspruch 1, ferner umfassend
eine Eingabeeinheit (5), die eine Gating-Operation zum Festlegen der Partikelpopulationen empfängt, zu denen das Partikel, das ein Sortierbestimmungsziel ist, und das andere Partikel innerhalb des vorgegebenen Bereichs gehören können.

5. Mikropartikelsortiereinrichtung (100) nach Anspruch 1, wobei
die Bestimmungseinheit (105) auf der Grundlage von Licht, das durch Bestrahlen eines in einem Strömungspfad fließenden Partikels mit Licht erzeugt wird, bestimmt, zu welcher Partikelpopulation das Partikel gehört.

6. Mikropartikelsortiereinrichtung (100) nach Anspruch 1, die zum Sortieren von Blutzellen verwendet wird.

7. Mikropartikelsortiereinrichtung (100) nach Anspruch 1, die zum selektiven Sortieren vorbestimmter T-Zellen aus Blutzellen verwendet wird.

8. Mikropartikelsortiereinrichtung (100) nach Anspruch 1, wobei
die Bestimmungseinheit (105) die Bestimmung durchführt, wenn das Partikel, das ein Sortierbestimmungsziel ist, und ein oder mehrere andere Partikel innerhalb des vorgegebenen Bereichs vorhanden sind.

9. Mikropartikelsortiereinrichtung (100) nach Anspruch 1, wobei
die Bestimmungseinheit Beziehungen zwischen jeweiligen Partikeln in einer Partikelgruppe, die aus dem Partikel, das ein Sortierbestimmungsziel ist, und dem anderen Partikel innerhalb des vorgegebenen Bereichs und allen anderen Partikeln in der Partikelgruppe besteht.

10. Mikropartikelsortiereinrichtung (100) nach Anspruch 9, wobei
die Bestimmungseinheit (105) die Beziehungen unter Verwendung von Regeldaten bestimmt, die definieren, ob die jeweiligen Partikel in Bezug auf alle anderen Partikel vernachlässigbar sind oder nicht.

11. Mikropartikelsortiereinrichtung (100) nach Anspruch 10, wobei
die Bestimmungseinheit (105) einem Partikel, das als Ergebnis der Bestimmung der Beziehungen in Bezug auf alle verschiedenen Partikel als vernachlässigbar bestimmt wurde, keinen Pfad zuweist und allen anderen Partikeln als dem Partikel, das als vernachlässigbar bestimmt wurde, einen Pfad zuweist.

12. Mikropartikelsortiereinrichtung (100) nach Anspruch 11, wobei
die Bestimmungseinheit (105) Regeldaten verwendet, die gemäß dem zugewiesenen Pfad einen Pfad des Partikels definieren, das ein Sortierbestimmungsziel ist, um den Pfad des Partikels zu bestimmen, das ein Sortierbestimmungsziel ist.

13. Mikropartikelsortiereinrichtung, umfassend: eine Mikropartikelsortiereinrichtung nach Anspruch 1 und eine Regeldatenerzeugungseinheit, die Regeldaten generiert, die zur Sortierbestimmung verwendet werden.

14. Computergestütztes Mikropartikelsortierverfahren, umfassend:
einen Bestimmungsschritt zum Durchführen einer Sortierbestimmung eines Partikels unter Verwendung von Regeldaten, die in Übereinstimmung mit einer Partikelpopulation, zu der ein Partikel, das ein Sortierbestimmungsziel ist, gehört, und einer Partikelpopulation, zu der ein anderes Partikel innerhalb eines vorgegebenen Bereichs um das Partikel herum gehört, eine Beziehung zwischen den Partikeln definieren,
Partikelpopulationen, zu denen das Partikel, das ein Sortierbestimmungsziel ist, und das andere Partikel innerhalb des vorgegebenen Bereichs gehören können, einschließlich der folgenden Partikelpopulationen
(a) eine Partikelpopulation der zu sortierenden Partikel,
(b) eine Partikelpopulation von Partikeln, die nicht sortiert werden sollen, aber bei der Bestimmung vernachlässigbar sind, und
(c) eine Partikelpopulation von Partikeln, die weder die zu sortierenden Partikel noch die zu vernachlässigenden Partikel sind,
**dadurch gekennzeichnet, dass** die zu vernachlässigenden Partikel rote Blutkörperchen einschließen.

15. Programm, das eine Mikropartikelsortiereinrichtung (100) veranlasst, ein Mikropartikelsortierverfahren auszuführen, einschließend
einen Bestimmungsschritt zum Durchführen einer Sortierbestimmung eines Partikels unter Verwendung von Regeldaten, die in Übereinstimmung mit einer Partikelpopulation, zu der ein Partikel, das ein Sortierbestimmungsziel ist, gehört, und einer Partikelpopulation, zu der ein anderes Partikel innerhalb eines vorgegebenen Bereichs um das Partikel herum gehört, eine Beziehung zwischen den Partikeln definieren,
Partikelpopulationen, zu denen das Partikel, das ein Sortierbestimmungsziel ist, und das andere Partikel innerhalb des vorgegebenen Bereichs gehören können, einschließlich der folgenden Partikelpopulationen
(a) eine Partikelpopulation der zu sortierenden Partikel,
(b) eine Partikelpopulation von Partikeln, die nicht sortiert werden sollen, aber bei der Bestimmung vernachlässigbar ist, und
(c) eine Partikelpopulation von Partikeln, die weder die zu sortierenden Partikel noch die zu vernachlässigenden Partikel sind,
**dadurch gekennzeichnet, dass**
die zu vernachlässigenden Partikel rote Blutkörperchen einschließen.

## Revendications

1. Appareil de tri de particules fines (100), comprenant :
une unité de détermination (105) qui effectue une détermination de tri d'une particule,
l'unité de détermination (105) effectue la détermination à l'aide de données de règles définissant, en fonction d'une population de particules à laquelle appartient une particule qui est une cible de détermination de tri et d'une population de particules à laquelle appartient une particule différente comprise dans une plage prédéterminée autour de la particule, une relation entre les particules,
des populations de particules auxquelles peuvent appartenir la particule qui est une cible de détermination de tri et la particule différente comprise dans la plage prédéterminée, y compris les populations de particules suivantes
(a) une population de particules de particules à trier,
(b) une population de particules de particules qui ne doivent pas être triées mais qui peuvent être ignorées pendant la détermination, et
(c) une population de particules de particules qui ne sont ni les particules à trier ni les particules pouvant être ignorées, **caractérisé par**
les particules pouvant être ignorées, y compris des globules rouges.

2. Appareil de tri de particules fines (100) selon la revendication 1, dans lequel
l'unité de détermination (105) est capable de modifier des données de règles utilisées pendant la détermination, et
au moins un élément des données de règles disponibles à l'unité de détermination (105) définit que,
lorsque la particule qui est une cible de détermination de tri appartient à la (a) population de particules des particules à trier et que la particule différente comprise dans la plage prédéterminée autour de la particule appartient à la (b) population de particules des particules pouvant être ignorées, une trajectoire de la particule différente est une trajectoire des particules à trier.

3. Appareil de tri de particules fines (100) selon la revendication 1, comprenant en outre
une unité de génération de données de règles qui génère les données de règles, dans lequel
l'unité de génération de données de règles génère les données de règles sur la base des populations de particules auxquelles peuvent appartenir la particule qui est une cible de détermination de tri et la particule différente comprise dans la plage prédéterminée.

4. Appareil de tri de particules fines (100) selon la revendication 1, comprenant en outre
une unité d'entrée (5) qui reçoit une opération de fenêtrage pour définir les populations de particules auxquelles peuvent appartenir la particule qui est une cible de détermination de tri et la particule différente comprise dans la plage prédéterminée.

5. Appareil de tri de particules fines (100) selon la revendication 1, dans lequel
l'unité de détermination (105) détermine, sur la base d'une lumière générée en irradiant une particule circulant dans une trajectoire de flux avec de la lumière, à quelle population de particules la particule appartient.

6. Appareil de tri de particules fines (100) selon la revendication 1, lequel est utilisé pour trier des cellules sanguines.

7. Appareil de tri de particules fines (100) selon la revendication 1, lequel est utilisé pour trier sélectivement des cellules T prédéterminées parmi des cellules sanguines.

8. Appareil de tri de particules fines (100) selon la revendication 1, dans lequel
l'unité de détermination (105) effectue la détermination lorsque la particule qui est une cible de détermination de tri et une ou plusieurs particules différentes sont présentes dans la plage prédéterminée.

9. Appareil de tri de particules fines (100) selon la revendication 1, dans lequel
l'unité de détermination détermine des relations entre des particules respectives d'un groupe de particules constitué de la particule qui est une cible de détermination de tri et de la particule différente comprise dans la plage prédéterminée et de toutes les particules différentes dans le groupe de particules.

10. Appareil de tri de particules fines (100) selon la revendication 9, dans lequel
l'unité de détermination (105) détermine les relations à l'aide de données de règles définissant si les particules respectives peuvent être ignorées ou non par rapport à toutes les particules différentes.

11. Appareil de tri de particules fines (100) selon la revendication 10, dans lequel
l'unité de détermination (105) n'attribue aucune trajectoire à une particule déterminée comme pouvant être ignorée par rapport à toutes les particules différentes à la suite de la détermination des relations et attribue une trajectoire aux particules autres que la particule déterminée comme pouvant être ignorée.

12. Appareil de tri de particules fines (100) selon la revendication 11, dans lequel
l'unité de détermination (105) utilise des données de règles définissant, en fonction de la trajectoire attribuée, une trajectoire de la particule qui est une cible de détermination de tri pour déterminer la trajectoire de la particule qui est une cible de détermination de tri.

13. Système de tri de particules fines comprenant : un appareil de tri de particules fines selon la revendication 1, et une unité de génération de données de règles qui génère des données de règles utilisées pendant la détermination de tri.

14. Procédé de tri de particules fines mis en oeuvre par ordinateur, comprenant :
une étape de détermination effectuant une détermination de tri d'une particule à l'aide de données de règles définissant, en fonction d'une population de particules à laquelle appartient une particule qui est une cible de détermination de tri et d'une population de particules à laquelle appartient une particule différente comprise dans une plage prédéterminée autour de la particule, une relation entre les particules,
des populations de particules auxquelles peuvent appartenir la particule qui est une cible de détermination de tri et la particule différente comprise dans la plage prédéterminée, y compris les populations de particules suivantes
(a) une population de particules de particules à trier,
(b) une population de particules de particules qui ne doivent pas être triées mais qui peuvent être ignorées pendant la détermination, et
(c) une population de particules de particules qui ne sont ni les particules à trier ni les particules pouvant être ignorées, **caractérisé par** les particules pouvant être ignorées, y compris des globules rouges.

15. Programme amenant un appareil de tri de particules fines (100) à exécuter un procédé de tri de particules fines comportant
une étape de détermination effectuant une détermination de tri d'une particule à l'aide de données de règles définissant, en fonction d'une population de particules à laquelle appartient une particule qui est une cible de détermination de tri et d'une population de particules à laquelle appartient une particule différente comprise dans une plage prédéterminée autour de la particule, une relation entre les particules,
des populations de particules auxquelles peuvent appartenir la particule qui est une cible de détermination de tri et la particule différente comprise dans la plage prédéterminée, y compris les populations de particules suivantes
(a) une population de particules de particules à trier,
(b) une population de particules de particules qui ne doivent pas être triées mais qui peuvent être ignorées pendant la détermination, et
(c) une population de particules de particules qui ne sont ni les particules à trier ni les particules pouvant être ignorées, **caractérisé par**
les particules pouvant être ignorées, y compris des globules rouges.
